(19) **Europäisches Patentamt**
**European Patent Office**
**Office européen des brevets**

(11) **EP 2 352 873 B1**

(12) **EUROPEAN PATENT SPECIFICATION**

(45) Date of publication and mention
of the grant of the patent:
**01.05.2013 Bulletin 2013/18**

(51) Int Cl.:
***D06F 37/22*** *(2006.01)*     ***D06F 37/24*** *(2006.01)*

(21) Application number: **09782829.7**

(86) International application number:
**PCT/EP2009/061704**

(22) Date of filing: **09.09.2009**

(87) International publication number:
**WO 2010/029112 (18.03.2010 Gazette 2010/11)**

(54) **METHOD, SYSTEM AND DEVICE FOR REDUCING VIBRATION IN AN ARTICLE PROCESSING MACHINE, SUCH AS A WASHING MACHINE**

VERFAHREN, SYSTEM UND VORRICHTUNG ZUR VERRINGERUNG VON VIBRATIONEN IN EINER ARTIKELBEARBEITUNGSMASCHINE, WIE EINER WASCHMASCHINE

PROCÉDÉ, SYSTÈME ET DISPOSITIF POUR LA RÉDUCTION DE VIBRATIONS DANS UNE MACHINE DE TRAITEMENT D'ARTICLES, TELLE UNE MACHINE À LAVER

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.09.2008 EP 08164058**
              **12.11.2008 EP 08168913**

(43) Date of publication of application:
**10.08.2011 Bulletin 2011/32**

(73) Proprietor: **Carnehammar, Lars Bertil**
**8032 Zürich (CH)**

(72) Inventors:
• **RONLAN, Alvin**
  **S-114 59 Stockholm (SE)**
• **SEITZ, Norbert**
  **82194 Gröbenzell (DE)**

(74) Representative: **Plougmann & Vingtoft A/S**
**Rued Langgaards Vej 8**
**2300 Copenhagen S (DK)**

(56) References cited:
**DE-U1- 20 007 903**     **US-A- 2 836 083**

EP 2 352 873 B1

**Description**

Field of the Invention

Embodiments of the invention described herein relate generally to reducing vibration, and more particularly to a method, system and device for reducing vibration in an article processing machine, such as a washing machine.

Background of the Invention

A washing machine being a typical article processing machine is generally cycled through a suitable sequence of operations selected from a plurality of available sequences of operations for processing articles of laundry. For example, the operations may comprise a pre-soaking operation, a washing operation at approximately 10 to approximately 100 revolutions per minute (rpm), a rinsing operation, and a spin drying operation at approximately 600 to approximately 1600 rpm.

The spin drying operation is generally initiated in order to extract washing water from, that is dehydrate, the articles of laundry by rotating a perforated drum mounted in a tub, that is outer drum, suspended in the washing machine at a relatively high rate of rotational speed such that a centrifugal force thus produced on the articles of laundry causes the washing water to be extracted from the articles of laundry and enter the tub. Owing to factors such as tangling and irregular masses of the articles of laundry, the articles of laundry may be unevenly or non-uniformly distributed during the spin drying operation. The nonuniform mass distribution resulting from a concentration of the articles of laundry at a given circumferential location during the spin drying operation causes an increase in the centrifugal force at the given location, and the drum may rotate in an out-of-balance condition. As the articles of laundry are not uniformly distributed in the drum, but concentrated at the given location within the drum, a centre of gravity (CoG) of the drum does not coincide with a centre of rotation (CoR), that is geometrical centre, of the drum anymore. A consequence of any imbalance of the drum is a vibration. If the centrifugal force at the location of the out-of-balance load exceeds a normal amount of load imbalance, high reaction forces are generated and transferred from the washing machine to a floor, and the washing machine may shake and even move across the floor. Thus, vibration negatively affects comfort or even durability and safety with regard to the washing machine.

Effects of the vibration may be reduced by a variety of devices, such as balancing weights, springs, vibration dampers, and methods, such as laundry pre-balancing operations.

WO2008/052660 A1 relates to a vibration damper, that is oscillating mass, fixed to a casing of a washing machine.

GB 2 010 926 A and WO2007/126169 A1 relate to a balancing weight fixed to a tub of a washing machine. EP 1 182 291 B1, US2006/0000244A1, US2006/0000245 A1, and EP 1 918 443 A1 and related EP 1 918 445 A1 relate to a plurality of balancing weights fixed to a tub of a washing machine.

US 5,802,885 and related EP 0 810 318 B1, and EP 1 032 778 B1 relate to a plurality of rotating weights, that is balls, assigned to a drum of a washing machine. EP 0 740 716 B1 relates to a shape of a ball racer assigned to a drum of a washing machine, and EP 0 811 717 A2 relates to a ball retaining station for a top-loading washing machine with a vertical drum. GB 2 388 849 A relates to a balancing device comprising masses and a viscous fluid. US 5,916,274 and WO1999/10583 relate to an annular balancing device comprising balls and a viscous fluid fixed to a vertical tub of a washing machine, and US 5,850,749 and related EP 0 810 317 B1, EP 0 924 330 B1, EP 0 997 568 B1, and US2007/283727A1 and related EP 1 862 576 A2, US2007/0277560 A1,

EP 1 862 578 A2, US2007/0277561 A1, EP 1 862 577 A2, US2008/0105003 A1 and US2008/0110212 A1 relate to an annular balancing device comprising balls and a viscous fluid fixed to a horizontal tub of a washing machine.

DE 101 06 509 A1 relates to a balancing device comprising a lid. EP 0 942 196 B1 relates to a stationary retarding mechanism. WO1999/50495 relates to a deformable annular balancing device comprising balls. DE 197 42 927 A1 relates to controlling an amount of balancing weight on a drum, EP 0 878 575 B1 relates to controlling acceleration of a drum, WO2000/28128, WO2001/90473 A1 and related EP 1 297 209 B1, and US2008/0141466 A1 relate to accelerating and decelerating a drum for pre-balancing the drum, US 6,647,575 B2 and related EP 1 167 612 B1 relate to tuning a suspension.

US 2,836,083 relates to a balancing ring system for rotatable receptacles with a closed annular duct partially filled with thixotropic substance.

GB 2 432 594 A relates to a water-fillable reservoir fixed to a base of the washing machine. US 4,044,626 and EP 0 421 442B1 relate to annular balancing devices comprising balancing liquid attached to a drum of a washing machine, wherein the devices further comprise partition members, US 5,709,109 and related EP 0 716 177 B1 relate to an annular balancing device comprising balancing liquid attached to a drum of a washing machine, wherein the device further comprise a liquid-absorbing member, and US 5,855,127 relates to watertight test of an annular balancing device attached to a drum of a washing machine.

**EP 2 352 873 B1**

US 4,007,612 relates to a stabilizing means retaining liquid extracted from a drum, US 5,513,504 relates to a pair of balancing rings attached to and in fluid communication with a drum of a washing machine, and , further, US 6,158,257 relates to the pair of balancing rings being in fluid communication via a plurality of tubes. EP 1 092 801 B1 relates to injecting a liquid into a chambers attached to a tub of a washing machine. US 2,603,982, US 3,799,348, GB 1268 597, GB 1 401 055, EP 0 371 116 B1, US 5,561,993, US 5,582,040, EP 0 856 604 B1, WO9941579 and related EP 1 064 528 B1, WO2001/29304A1, US2005/0210929 A1, US2005/ 0210930 A1, US2005/0210602A1, and EP 1 655 404 A1 relate to injecting a liquid into chambers attached to a drum of a washing machine. GB 4 210 750 A relates to a balancing device attached to a drum of a washing machine and comprising a plurality of buoyant bodies in contact with a fluid.

EP 0531 917A1 and EP 0 878 574 B1 relate to an electro-magnetically controlled damping device for a washing machine, and EP 1 275 765 A1 relates to an electro-magnetically controlled drum for a washing machine.

GB 1 272 400, GB 1 279 057, US 4,411,664, GB 2271 837 A, EP 0 091 336 B1, EP 0 236 857 B1, EP 0 294 014 A1, EP 0 335 790 B1, EP 0 732 437 B2, EP 704 567 B1, EP 0736 625 B1, US2003/0101519 A1, EP 1 548 169 A1, US2006/0185095 A1 and related EP 1693 498 A2, US2007/0124871 A1, EP 1 918 447 A1, and EP 1 921 196 A2 relate to controlling a spin drying operation of a washing machine.

US 5,117,658 relates to a washing machine, wherein a dynamic centre of mass is relatively close to a typical out-of-balance location.

For these and other reasons, there is a need for the invention as set forth in the following in the embodiments.

Summary of the Invention

The invention aims to provide a method, system and device for reducing vibration in an article processing machine, such as a washing machine.

An aspect of the invention is a method for reducing vibration in a rotary system 130, 131, 133; 230, 231a-b, 233; 330, 331, 333; 900a-c; 1000a-d; 1100a-c; 1200a-f; 1300 of an article processing machine 100; 200; 300, for example a washing machine, comprising balancing said rotary system 130, 131, 133; 230, 231a-b, 233; 330, 331, 333; 900a-c; 1000a-d; 1100a-c; 1200a-f; 1300, characterized by providing a substantially circular chamber 490; 590; 690; 790; 890a-c; 990; 1090; 1190; 1250, 1260, 1290; 1390 having a fulcrum on an axis 132; 232; 332; 420; 520; 620; 720; 820; 920; 1020; 1120; 1220; 1320 of said rotary system 130, 131, 133; 230, 231a-b, 233; 330, 331, 333; 900a-c; 1000a-d; 1100a-c; 1200a-f; 1300 and being partially filled with an amount of a thixotropic balancing substance 440; 540; 640; 740. The rotary system 130, 131, 133; 230, 231a-b, 233; 330, 331, 333; 900a-c; 1000a-d; 1100a-c; 1200a-f; 1300 may be a drum assembly comprising a rotatable drum of the washing machine, such as a front-loading washing machine with horizontal drum, top-loading washing machine with horizontal drum or top-loading washing machine with vertical drum; a wash dryer; or a laundry dryer, for example a tumble dryer or and spin dryer. The thixotropic balancing substance 440; 540; 640; 740 is able to flow under the influence of the vibration induced by the rotary system 130, 131, 133; 230, 231a-b, 233; 330, 331, 333; 900a-c; 1000a-d; 1100a-c; 1200a-f; 1300. The method utilizes the vibration for changing the thixotropic balancing substance 440; 540; 640; 740 from a relaxed, rather solid state, wherein the thixotropic balancing substance 440; 540; 640; 740 is substantially fixed in relation to the chamber 490; 590; 690; 790; 890a-c; 990; 1090; 1190; 1250, 1260, 1290; 1390, into an agitated, rather fluid state, wherein the thixotropic balancing substance 440; 540; 640; 740 is substantially movable in relation to the chamber 490; 590; 690; 790; 890a-c; 990; 1090; 1190; 1250, 1260, 1290; 139; and, independent from spatial orientation, a rotational force for distributing the thixotropic balancing substance 440; 540; 640; 740 within the chamber 490; 590; 690; 790; 890a-c; 990; 1090; 1190; 1250, 1260, 1290; 1390. Hence, owing to the vibration, the thixotropic balancing substance 440; 540; 640; 740 distributes itself in the chamber 490; 590; 690; 790; 890a-c; 990; 1090; 1190; 1250, 1260, 1290; 1390 to reduce or minimize the vibration. Among other things, a distance of the chamber 490; 590; 690; 790; 890a-c; 990; 1090; 1190; 1250, 1260, 1290; 1390 with the thixotropic balancing substance 440; 540; 640; 740 therein from the axis 132; 232; 332; 420; 520; 620; 720; 820; 920; 1020; 1120; 1220; 1320, that is a radius, determines size of this effect according to the moment of inertia. As a consequence, a centre of rotation (CofR) of the rotary system 130, 131, 133; 230, 231a-b, 233; 330, 331, 333; 900a-c; 1000a-d; 1100a-c; 1200a-f; 1300 moves towards an ideal CofR, and the method compensates for shift of the CofG owing to articles of laundry being not uniformly distributed in the drum. As a further consequence, vibration is reduced, and, as a result, noise is reduced, comfort is improved, consumption of operational resources, for example energy, such as electricity, is reduced resulting in reduced operational costs, and rotational speed may be increased resulting in improved dehydration and dryer articles of laundry. As a further result, the articles of laundry are handled more carefully, design of the machine is simplified resulting in reduced consumption of production resources, reduced production costs and reduced initial costs, improved reliability, reduced noise from auxiliary devices, such as pumps, and weight of the machine is reduced resulting in improved ease for transportation of the machine and reduced consumption of resources and costs of transportation. Furthermore, wear and tear of the article processing machine 100; 200; 300, in particular of the rotary system 130, 131, 133; 230, 231a-b, 233; 330, 331, 333; 900a-c; 1000a-d; 1100a-c; 1200a-f; 1300, is reduced, and environment-

3

friendliness is improved. Last but not least, the method can be utilized regardless of spatial orientation of the rotary system 130, 131, 133; 230, 231a-b, 233; 330, 331, 333; 900a-c; 1000a-d; 1100a-c; 1200a-f; 1300.

Another aspect of the invention is a method, wherein said chamber 490; 590; 690; 790; 890a-c; 990; 1090; 1190; 1250, 1260, 1290; 1390 is annular and preferably has a cross section being rectangular 400e; 600e, quadratic, semi-elliptical 400f, elliptical 600f, semi-circular 400g; 600g, 600i, circular 600h, trapezoidal 400h; 600j, triangular 600k, V-shaped, M-shaped 400i; 600l, inversely semi-elliptical 400j; 600m, inversely semi-circular 400k; 600n, bell-shaped, oval or hexagonal. As a consequence, the chamber 490; 590; 690; 790; 890a-c; 990; 1090; 1190; 1250, 1260, 1290; 1390 may allow, owing to a larger diameter, for an efficient use of the thixotropic balancing substance 440; 540; 640; 740, and as a result, the amount of the thixotropic balancing substance 440; 540; 640; 740 may be reduced. As a further consequence, owing to the cross section being rectangular 400e, 600e, quadratic, semi-circular 600i, trapezoidal 400h; 600j, triangular 600k or bell-shaped, the thixotropic balancing substance 440; 540; 640; 740 may operate most effective, and as a further result, the amount of the thixotropic balancing substance 440; 540; 640; 740 may further be reduced. As a further consequence, owing to the cross section being V-shaped, M-shaped 400i; 600l, inversely semi-elliptical 400j; 600m, inversely semi-circular 400k; 600n, the chamber 490; 590; 690; 790; 890a-c; 990; 1090; 1190; 1250, 1260, 1290; 1390 may form part of a drive system of the rotary system 130, 131, 133; 230, 231a-b, 233; 330, 331, 333; 900a-c; 1000a-d; 1100a-c; 1200a-f; 1300 and, thus, provides for a dual functionality, and as a further result, design of the article processing machine 100; 200; 300 may be higher integrated.

Another aspect of the invention is a method, wherein said chamber 490; 590; 690; 790; 890a-c; 990; 1090; 1190; 1250, 1260, 1290; 1390 is cylindrical and has a shell preferably being straight 700c, broadened straight 700f, elliptically convex 700d, circularly convex 700e, V-shaped, M-shaped 700g, elliptically concave 700h or circularly concave 700i. As a consequence, the chamber 490; 590; 690; 790; 890a-c; 990; 1090; 1190; 1250, 1260, 1290; 1390 may be compact, and as a result, the chamber 490; 590; 690; 790; 890a-c; 990; 1090; 1190; 1250, 1260, 1290; 1390 may require little space and may be integrated into the rotary system 130, 131, 133; 230, 231a-b, 233; 330, 331, 333; 900a-c; 1000a-d; 1100a-c; 1200a-f; 1300.

Another aspect of the invention is a method, wherein said chamber 490; 590; 690; 790; 890a-c; 990; 1090; 1190; 1250, 1260, 1290; 1390 is located inside, and preferably attached, for example clipped, tightly fitted, glued, riveted, snapped, soldered, springed, screwed, tensed or welded, to, a drum 130; 230; 330; 910; 1010; 1110; 1210; 1310 of said rotary system 130, 131, 133; 230, 231a-b, 233; 330, 331, 333; 900a-c; 1000a-d; 1100a-c; 1200a-f; 1300, said drum 130; 230; 330; 910; 1010; 1110; 1210; 1310 being rotatable about said axis 132; 232; 332; 420; 520; 620; 720; 820; 920; 1020; 1120; 1220; 1320, said drum 130; 230; 330; 910; 1010; 1110; 1210; 1310 preferably comprising a recess for receiving said chamber 490; 590; 690; 790; 890a-c; 990; 1090; 1190; 1250, 1260, 1290; 1390, and said chamber 490; 590; 690; 790; 890a-c; 990; 1090; 1190; 1250, 1260, 1290; 1390 being for example located on a circumferential wall or a side wall of said drum 130; 230; 330; 910; 1010; 1110; 1210; 1310. As a consequence, the chamber 490; 590; 690; 790; 890a-c; 990; 1090; 1190; 1250, 1260, 1290; 1390 may be integrated into the rotary system 130, 131, 133; 230, 231a-b, 233; 330, 331, 333; 900a-c; 1000a-d; 1100a-c; 1200a-f; 1300, and as a result, the chamber 490; 590; 690; 790; 890a-c; 990; 1090; 1190; 1250, 1260, 1290; 1390 may not impact on overall dimensions of the article processing machine 100; 200; 300, and the rotary system 130, 131, 133; 230, 231a-b, 233; 330, 331, 333; 900a-c; 1000a-d; 1100a-c; 1200a-f; 1300 may require little space. For upgrading or re-fitting, the chamber 490; 590; 690; 790; 890a-c; 990; 1090; 1190; 1250, 1260, 1290; 1390 may be added to a conventional rotary system. As a further consequence, owing to the recess, the chamber 490; 590; 690; 790; 890a-c; 990; 1090; 1190; 1250, 1260, 1290; 1390 may have a higher structural stability and the chamber 490; 590; 690; 790; 890a-c; 990; 1090; 1190; 1250, 1260, 1290; 1390 may be more securely located inside the drum 130; 230; 330; 910; 1010; 1110; 1210; 1310, and as a further result, design of the article processing machine 100; 200; 300 may be improved.

Another aspect of the invention is a method, wherein said chamber 490; 590; 690; 790; 890a-c; 990; 1090; 1190; 1250, 1260, 1290; 1390 is located outside, and preferably attached to, said drum 130; 230; 330; 910; 1010; 1110; 1210; 1310. As a consequence, the chamber 490; 590; 690; 790; 890a-c; 990; 1090; 1190; 1250, 1260, 1290; 1390 may be located onto the rotary system 130, 131, 133; 230, 231a-b, 233; 330, 331, 333; 900a-c; 1000a-d; 1100a-c; 1200a-f; 1300, and as a result, the rotary system 130, 131, 133; 230, 231a-b, 233; 330, 331, 333; 900a-c; 1000a-d; 1100a-c; 1200a-f; 1300 may be balanced more efficiently. For upgrading or re-fitting, the chamber 490; 590; 690; 790; 890a-c; 990; 1090; 1190; 1250, 1260, 1290; 1390 may be added to a conventional rotary system. As a further consequence, owing to the recess, the chamber 490; 590; 690; 790; 890a-c; 990; 1090; 1190; 1250, 1260, 1290; 1390 may have a higher structural stability and the chamber 490; 590; 690; 790; 890a-c; 990; 1090; 1190; 1250, 1260, 1290; 1390 may be more securely located on the drum 130; 230; 330; 910; 1010; 1110; 1210; 1310, and as a further result, design of the article processing machine 100; 200; 300 may be improved.

Another aspect of the invention is a method, wherein said chamber 490; 590; 690; 790; 890a-c; 990; 1090; 1190; 1250, 1260, 1290; 1390 is integrated within said drum 130; 230; 330; 910; 1010; 1110; 1210; 1310, said drum 130; 230; 330; 910; 1010; 1110; 1210; 1310 preferably being at least partially double-walled. As a consequence, the chamber 490; 590; 690; 790; 890a-c; 990; 1090; 1190; 1250, 1260, 1290; 1390 forms part of the drum 130; 230; 330;

910; 1010; 1110; 1210; 1310 and, thus, provides for a dual functionality of the drum 130; 230; 330; 910; 1010; 1110; 1210; 1310, and as a result, design of the article processing machine 100; 200; 300 may be higher integrated, and the chamber 490; 590; 690; 790; 890a-c; 990; 1090; 1190; 1250, 1260, 1290; 1390 may not impact on overall dimensions of the article processing machine 100; 200; 300.

Another aspect of the invention is a method, wherein said chamber 490; 590; 690; 790; 890a-c; 990; 1090; 1190; 1250, 1260, 1290; 1390 is located on, and preferably attached, for example clipped, tightly fitted, glued, riveted, snapped, soldered, springed, screwed, tensed or welded, to, a drum wheel 133; 233; 333; 1060; 1080 of said rotary system 130, 131, 133; 230, 231a-b, 233; 330, 331, 333; 900a-c; 1000a-d; 1100a-c; 1200a-f; 1300, said drum wheel 133; 233; 333; 1060; 1080 being coupled to said drum 130; 230; 330; 910; 1010; 1110; 1210; 1310 and rotatable about said axis 132; 232; 332; 420; 520; 620; 720; 820; 920; 1020; 1120; 1220; 1320. As a consequence, the chamber 490; 590; 690; 790; 890a-c; 990; 1090; 1190; 1250, 1260, 1290; 1390 may be located away from the drum 130; 230; 330; 910; 1010; 1110; 1210; 1310 and outside the tub, and as a result, design of the article processing machine 100; 200; 300 may be more flexible. For upgrading or re-fitting, the chamber 490; 590; 690; 790; 890a-c; 990; 1090; 1190; 1250, 1260, 1290; 1390 may be added to a conventional rotary system.

Another aspect of the invention is a method, wherein said chamber 490; 590; 690; 790; 890a-c; 990; 1090; 1190; 1250, 1260, 1290; 1390 is integrated within said drum wheel 133; 233; 333; 1060; 1080. As a consequence, the chamber 490; 590; 690; 790; 890a-c; 990; 1090; 1190; 1250, 1260, 1290; 1390 may be located away from the drum 130; 230; 330; 910; 1010; 1110; 1210; 1310 and outside the tub, and as a result, design of the article processing machine 100; 200; 300 may be more flexible. As a further consequence, the chamber 490; 590; 690; 790; 890a-c; 990; 1090; 1190; 1250, 1260, 1290; 1390 forms part of the drum wheel 133; 233; 333; 1060; 1080 and, thus, provides for a dual functionality of the drum wheel 133; 233; 333; 1060; 1080, and as a further result, design of the article processing machine 100; 200; 300 may be higher integrated, and the chamber 490; 590; 690; 790; 890a-c; 990; 1090; 1190; 1250, 1260, 1290; 1390 may not impact on overall dimensions of the article processing machine 100; 200; 300.

Another aspect of the invention is a method, wherein said chamber 490; 590; 690; 790; 890a-c; 990; 1090; 1190; 1250, 1260, 1290; 1390 is integrated within a shaft 131; 231a-b; 331; 950a-b; 1050; 1350 of said rotary system 130, 131, 133; 230, 231a-b, 233; 330, 331, 333; 900a-c; 1000a-d; 1100a-c; 1200a-f; 1300, said shaft 131; 231a-b; 331; 950a-b; 1050; 1350 being coupled to said drum 130; 230; 330; 910; 1010; 1110; 1210; 1310 and rotatable about said axis 132; 232; 332; 420; 520; 620; 720; 820; 920; 1020; 1120; 1220; 1320. As a consequence, the chamber 490; 590; 690; 790; 890a-c; 990; 1090; 1190; 1250, 1260, 1290; 1390 may be located away from the drum 130; 230; 330; 910; 1010; 1110; 1210; 1310, and as a result, design of the article processing machine 100; 200; 300 may be more flexible. As a further consequence, the chamber 490; 590; 690; 790; 890a-c; 990; 1090; 1190; 1250, 1260, 1290; 1390 forms part of the shaft 131; 231a-b; 331; 950a-b; 1050; 1350 and, thus, provides for a dual functionality of the shaft 131; 231a-b; 331; 950a-b; 1050; 1350, and as a further result, design of the article processing machine 100; 200; 300 may be higher integrated and, the chamber 490; 590; 690; 790; 890a-c; 990; 1090; 1190; 1250, 1260, 1290; 1390 may not impact on overall dimensions of the article processing machine 100; 200; 300.

Another aspect of the invention is a method, wherein said chamber 490; 590; 690; 790; 890a-c; 990; 1090; 1190; 1250, 1260, 1290; 1390 comprises a surface area, for example a circumferential balancing area 430; 530; 630; 730, with a nanostructure, said nanostructure being, for example, formed by a material, such as a varnish, comprising nanoparticles, or imprinted on said surface area. The nanostructure may be provided by distributing, for example spraying and drying or hardening, the material on the surface area. Drying or hardening may comprise curing nanomaterial, that is the nanovarnish, using ultra-violet (UV) radiation, that is UV light, for example. The material, that is the nanomaterial, may provide the nanostructure as nanosubstrate. The nanomaterial may comprise two or more components, for instance a first component A, for example a resin, and a second component B, for example a hardener. The nanomaterial may be a two-component material. The nanomaterial, that is the first component A and the second component B, may react by chemical crosslinking or polymerisation. The chemical crosslinking reaction may start immediately or soon after mixing the first component A and the second component B. As a consequence, movability of the thixotropic balancing substance 440; 540; 640; 740 on the surface area, for example the circumferential balancing area 430; 530; 630; 730, may increase, and as a result, the effect of balancing may be improved.

Another aspect of the invention is a method, wherein said chamber 490; 590; 690; 790; 890a-c; 990; 1090; 1190; 1250, 1260, 1290; 1390 is structured, for example honeycombed. As a consequence, the chamber 490; 590; 690; 790; 890a-c; 990; 1090; 1190; 1250, 1260, 1290; 1390 may provide for a dual functionality comprising, for example, structural stability and drainage, and as a result, the effect of balancing may be improved.

Another aspect of the invention is a method, wherein said chamber 490; 590; 690; 790; 890a-c; 990; 1090; 1190; 1250, 1260, 1290; 1390 is one of a plurality of chambers 490; 590; 690; 790; 890a-c; 990; 1090; 1190; 1250, 1260, 1290; 1390, said plurality of chambers 490; 590; 690; 790; 890a-c; 990; 1090; 1190; 1250, 1260, 1290; 1390 preferably being arranged in parallel or concentrically or a combination thereof, said plurality of chambers 490; 590; 690; 790; 890a-c; 990; 1090; 1190; 1250, 1260, 1290; 1390 preferably being isolated or coupled, for example connected, each of said plurality of isolated chambers 490; 590; 690; 790; 890a-c; 990; 1090; 1190; 1250, 1260, 1290; 1390

preferably comprising a thixotropic balancing substance 440; 540; 640; 740 of a different amount or a different type, said plurality of coupled chambers 490; 590; 690; 790; 890a-c; 990; 1090; 1190; 1250, 1260, 1290; 1390 preferably being in fluid communication with each other, and said plurality of coupled chambers 490; 590; 690; 790; 890a-c; 990; 1090; 1190; 1250, 1260, 1290; 1390 preferably comprising extension chambers 1395a-c. As a consequence, the rotary system 130, 131, 133; 230, 231a-b, 233; 330, 331, 333; 900a-c; 1000a-d; 1100a-c; 1200a-f; 1300 may provide for distributed balancing, and as a result, design of the article processing machine 100; 200; 300 may be more flexible and adaptive, and the effect of balancing may be improved.

Another aspect of the invention is a method, wherein said chamber 490; 590; 690; 790; 890a-c; 990; 1090; 1190; 1250, 1260, 1290; 1390 has an outer diameter of between approximately 0.1 m and approximately 10 m, for example between approximately 0.2 m and approximately 1.5 m, preferably between approximately 0.5 m and approximately 1 m, such as approximately 0.75 m. The effect for a given amount of the thixotropic balancing substance 338a; 338b; 438a; 438b; 438c; 538a; 538b; 538c is greater for a larger diameter than for a smaller diameter. However, the diameter may be determined by available space.

Another aspect of the invention is a method, wherein said chamber 490; 590; 690; 790; 890a-c; 990; 1090; 1190; 1250, 1260, 1290; 1390 has a length of between approximately 0.01 m and approximately 2 m, for example between approximately 0.02 m and approximately 1 m, preferably between approximately 0.05 m and approximately 0.5 m, such as approximately 0.1 m. As a consequence, the chamber 490; 590; 690; 790; 890a-c; 990; 1090; 1190; 1250, 1260, 1290; 1390 may extend at least partially or substantially completely along the axis 132; 232; 332; 420; 520; 620; 720; 820; 920; 1020; 1120; 1220; 1320, and as a result, as any imbalance may be compensated for where it occurs along the axis 132; 232; 332; 420; 520; 620; 720; 820; 920; 1020; 1120; 1220; 1320, the effect of balancing may be improved.

Another aspect of the invention is a method, wherein said chamber 490; 590; 690; 790; 890a-c; 990; 1090; 1190; 1250, 1260, 1290; 1390 is situated in a vessel 410, 450a-b; 510, 550; 610, 650a-b, 670; 710, 750a-b; 810, 850a-b. As a consequence, the chamber 490; 590; 690; 790; 890a-c; 990; 1090; 1190; 1250, 1260, 1290; 1390 may be manufactured separately and independently from the rotary system 130, 131, 133; 230, 231a-b, 233; 330, 331, 333; 900a-c; 1000a-d; 1100a-c; 1200a-f; 1300, and as a result, manufacturing of the article processing machine 100; 200; 300 may be modularized, distributed or sourced out. For upgrading or re-fitting, the chamber 490; 590; 690; 790; 890a-c; 990; 1090; 1190; 1250, 1260, 1290; 1390 may be added to a conventional rotary system.

Another aspect of the invention is a method, wherein said vessel 410, 450a-b; 510, 550; 610, 650a-b, 670; 710, 750a-b; 810, 850a-b comprises metal, for example steel, preferably stainless steel, aluminium or copper, or composite material, for example glas-fibre-reinforced material or carbon-fibre-reinforced material, or synthetic material, for example plastics or plexiglas. The material is preferably material used elsewhere in the article processing machine 100; 200; 300, in particular in the rotary system 130, 131, 133; 230, 231a-b, 233; 330, 331, 333; 900a-c; 1000a-d; 1100a-c; 1200a-f; 1300, said shaft 131; 231a-b; 331; 950a-b; 1050; 1350. As a consequence, problems owing to incompatibility may be avoided, and as a result, life time of the article processing machine 100; 200; 300 may be improved, and maintenance work may be simplified.

Another aspect of the invention is a method, wherein said vessel 410, 450a-b; 510, 550; 610, 650a-b, 670; 710, 750a-b; 810, 850a-b is converted, moulded, for example injection-moulded, or extruded. Conversion of the vessel 410, 450a-b; 510, 550; 610, 650a-b, 670; 710, 750a-b; 810, 850a-b may comprise, for example, cutting a piece of tube comprising two ends from an endless tube to length and joining the two ends. As a consequence, manufacturing of the vessel 410, 450a-b; 510, 550; 610, 650a-b, 670; 710, 750a-b; 810, 850a-b may be simplified, and as a result, manufacturing of the chamber 490; 590; 690; 790; 890a-c; 990; 1090; 1190; 1250, 1260, 1290; 1390 may be simplified, rationalised or automated. As a consequence, the chamber 490; 590; 690; 790; 890a-c; 990; 1090; 1190; 1250, 1260, 1290; 1390 may be manufactured separately and independently from the rotary system 130, 131, 133; 230, 231a-b, 233; 330, 331, 333; 900a-c; 1000a-d; 1100a-c; 1200a-f; 1300, and as a result, manufacturing of the article processing machine 100; 200; 300 may be modularized, distributed or sourced out. For upgrading or re-fitting, the chamber 490; 590; 690; 790; 890a-c; 990; 1090; 1190; 1250, 1260, 1290; 1390 may be added to a conventional rotary system.

Another aspect of the invention is a method, wherein said vessel 410, 450a-b; 510, 550; 610, 650a-b, 670; 710, 750a-b; 810, 850a-b is expandable, flexible, deformable or a combination thereof. As a consequence, the vessel 410, 450a-b; 510, 550; 610, 650a-b, 670; 710, 750a-b; 810, 850a-b may be easier to handle and manipulate, and as a result, locating the vessel 410, 450a-b; 510, 550; 610, 650a-b, 670; 710, 750a-b; 810, 850a-b in or on the rotary system 130, 131, 133; 230, 231a-b, 233; 330, 331, 333; 900a-c; 1000a-d; 1100a-c; 1200a-f may be simplified.

Another aspect of the invention is a method, wherein said vessel 410, 450a-b; 510, 550; 610, 650a-b, 670; 710, 750a-b; 810, 850a-b is closed, preferably airtight, said vessel 410, 450a-b; 510, 550; 610, 650a-b, 670; 710, 750a-b; 810, 850a-b preferably being integrally formed, said vessel 410, 450a-b; 510, 550; 610, 650a-b, 670; 710, 750a-b; 810, 850a-b preferably being substantially balanced with respect to said axis 132; 232; 332; 420; 520; 620; 720; 820; 920; 1020; 1120; 1220; 1320, said vessel 410, 450a-b; 510, 550; 610, 650a-b, 670; 710, 750a-b; 810, 850a-b preferably being filled with the amount of a thixotropic balancing substance 440; 540; 640; 740 during forming of the vessel or through an opening, said opening preferably being located on an inner circumferential wall or a side wall 450a-b; 650a-b; 750a-b; 850a-b of said vessel 410, 450a-b; 510, 550; 610, 650a-b; 670; 710, 750a-b; 810, 850a-b, and said opening preferably being sealed by a seal 680, for example an adhesive pad, a membrane, such as a self-sealing membrane, a plug, such as a snap-in plug, a screw or a valve. As a consequence, the vessel 410, 450a-b; 510, 550; 610, 650a-b; 670; 710; 750a-b; 810, 850a-b may protect the chamber 490; 590; 690; 790; 890a-c; 990; 1090; 1190; 1250, 1260, 1290; 1390 with the thixotropic balancing substance 440; 540; 640; 740 therein from environmental effects comprising, for example, dust, humidity and temperature, to which the rotary system 130, 131, 133; 230, 231a-b, 233; 330, 331, 333; 900a-c; 1000a-d; 1100a-c; 1200a-f may be exhibited, and as a result, life time of the thixotropic balancing substance 440; 540; 640; 740 may be improved, and maintenance work may be reduced. As a further consequence, access to the chamber 490; 590; 690; 790; 890a-c; 990; 1090; 1190; 1250, 1260, 1290; 1390 with the thixotropic balancing substance 440; 540; 640; 740 may be provided, and as a further result, maintenance work may be simplified and reduced.

Another aspect of the invention is a method, wherein said vessel 410, 450a-b; 510, 550; 610, 650a-b, 670; 710, 750a-b; 810, 850a-b is transparent or translucent. As a consequence, visual inspection of the chamber 490; 590; 690; 790; 890a-c; 990; 1090; 1190; 1250, 1260, 1290; 1390 with the thixotropic balancing substance 440; 540; 640; 740 therein may be enabled, and as a further result, maintenance work may be simplified and reduced.

Another aspect of the invention is a method, wherein said vessel 410, 450a-b; 510, 550; 610, 650a-b, 670; 710, 750a-b; 810, 850a-b is coupled to a or said shaft 131; 231b; 331; 1050 via a or said side wall 450a-b; 650a-b; 750a-b; 850a-b of said vessel 410, 450a-b; 510, 550; 610, 650a-b, 670; 710, 750a-b; 810, 850a-b, a disc or spokes 465a-b; 665a-b; 1065, said spokes 465a-b; 665a-b; 1065 preferably being evenly spaced apart from each other. As a consequence, the side wall 450a-b; 650a-b; 750a-b; 850a-b may be utilized for coupling the vessel 410, 450a-b; 510, 550; 610, 650a-b, 670; 710, 750a-b; 810, 850a-b to the shaft 131; 231b; 331; 1050 and, thus, provide for dual functionality, and as a result, design of the rotary system 130, 131, 133; 230, 231a-b, 233; 330, 331, 333; 900a-c; 1000a-d; 1100a-c; 1200a-f; 1300 may be simplified. As a further consequence, the disc or spokes 465a-b; 665a-b; 1065 may be utilized, preferably when the chamber 490; 590; 690; 790; 890a-c; 990; 1090; 1190; 1250, 1260, 1290; 1390 is integrated within the drum wheel 133; 233; 333; 1060; 1080 or the rotary system 130, 131, 133; 230, 231a-b, 233; 330, 331, 333; 900a-c; 1000a-d; 1100a-c; 1200a-f; 1300 has a relatively large diameter, for coupling the vessel 410, 450a-b; 510, 550; 610, 650a-b, 670; 710, 750a-b; 810, 850a-b to the shaft 131; 231b; 331; 1050, and as a further result, design of the rotary system 130, 131, 133; 230, 231a-b, 233; 330, 331, 333; 900a-c; 1000a-d; 1100a-c; 1200a-f; 1300 may be simplified. As another consequence, imbalance of the spokes 465a-b; 665a-b; 1065 may be reduced, and as another result, the effect of the balancing may be improved.

Another aspect of the invention is a method, wherein said thixotropic balancing substance 440; 540; 640; 740 has a yield stress value between approximately 1 Pa and approximately 400 Pa, for example between approximately 2 Pa and approximately 260 Pa, such as approximately 30 Pa. As a consequence, distribution of the thixotropic balancing substance 440; 540; 640; 740 may be improved, and as a result, the effect of the balancing may be improved.

Another aspect of the invention is a method, wherein said thixotropic balancing substance 440; 540; 640; 740 is a balancing gel composition comprising

1) 85 to 97 % by weight of a glycol ether component comprising one or more ethylene/propylene glycol copolymer ethers of the general formula (I) or the general (II) or mixtures thereof

$$R-O\{[CH(CH3)CH2-O-]m[CH2-CH2-O-]n\}H \qquad (I)$$

$$R1-(O-([CH(CH3)CH2-O-]m[CH2-CH2-O-]n)H)2 \qquad (II)$$

wherein

R is hydrogen or an alkyl group of 2-8 carbon atoms;
R1 is an alkylene moiety of 2-8 carbon atoms in which the two substituents are not carried on the same carbon atom;
m is the mole percentage of propylene glycol in the ethylene/propylene glycol copolymer moiety or moieties; and
n is the mole percentage of ethylene glycol in the ethylene/propylene glycol copolymer moiety or moieties, wherein the ratio n:m is in the range from 35:65 to 80:20;
each glycol copolymer compound having a number average molecular weight in the range of 2000-10000; and

2) 3 to 15 % by weight of a fumed silica gel former;
said balancing composition being visco-elastic and having a storage modulus (G') between 1500 Pa and 5000 Pa at 22 °C, a loss modulus (G") smaller than the storage modulus up to a cross-over Frequency of 10-40 Hz, and a Critical Yield Stress exceeding 2 Pa.

Another aspect of the invention is a method, wherein the number average molecular weight of the glycol ether component(s) is/are in the range of 3000-10000.

Another aspect of the invention is a method, wherein the ratio n:m is in the range from 35:65 to 80:20, preferably in the range from 40:60 to 75:22, in particular from 40:60 to 60:40, such as 50:50.

Another aspect of the invention is a method, wherein the fumed silica gel former is a hydrophilic type fumed silica having a BET surface area of from 90 to 400 $m^2$/g, preferably from 200 to 300 $m^2$/g; or the fumed silica gel former is a hydrophobized type fumed silica having has a BET surface area of from 50 to 300 $m^2$/g, preferably from 250 to 350 $m^2$/g; or mixtures of such hydrophilic and hydrophobized type fumed silica gel formers.

Another aspect of the invention is a method, wherein the glycol ether component(s) exhibit(s) a Viscosity Grade determined according to ISO3448 of above 500, preferably in the range of 800-1200.

Another aspect of the invention is a method, wherein said amount of said thixotropic balancing substance 440; 540; 640; 740 is between approximately 0.01 kg and approximately 20 kg, for example between approximately 0.1 kg and approximately 10 kg, preferably between approximately 0.5 kg and approximately 5 kg, such as approximately 1 kg. The amount of said thixotropic balancing substance 440; 540; 640; 740 may dependent on a volume of the chamber 490; 590; 690; 790; 890a-c; 990; 1090; 1190; 1250, 1260, 1290; 1390, and an imbalance to be compensated.

Another aspect of the invention is a method, wherein said chamber 490; 590; 690; 790; 890a-c; 990; 1090; 1190; 1250, 1260, 1290; 1390 is filled with said amount of said thixotropic balancing substance 440; 540; 640; 740 to between approximately 1 % and approximately 90 %, for example between approximately 10 % and approximately 80 %, preferably between approximately 25 % and approximately 75 %, such as approximately 50 %. The amount of said thixotropic balancing substance 440; 540; 640; 740 may dependent on a volume of the chamber 490; 590; 690; 790; 890a-c; 990; 1090; 1190; 1250, 1260, 1290; 1390, and an imbalance to be compensated.

Another aspect of the invention is a method, wherein a weight body is in contact with said thixotropic balancing substance 440; 540; 640; 740. As a consequence, the weight body may contribute to balancing of the rotary system 130, 131, 133; 230, 231a-b, 233; 330, 331, 333; 900a-c; 1000a-d; 1100a-c; 1200a-f, and as a result, the effect of the balancing may be improved, and the amount of said thixotropic balancing substance 440; 540; 640; 740 may be reduced.

Another aspect of the invention is a method, wherein said weight body has, defined by a body size of said weight body, a body surface and a body weight, such that said weight body overcomes adhesion between said body surface and said thixotropic balancing substance 440; 540; 640; 740 when said thixotropic balancing substance 440; 540; 640; 740 is subjected to said vibration and changes in an agitated state. As a consequence, the body size ensures movability of the weight body in the chamber 490; 590; 690; 790; 890a-c; 990; 1090; 1190; 1250, 1260, 1290; 1390 with the thixotropic balancing substance 440; 540; 640; 740 therein, and as a result, the effect of the balancing may be improved.

Another aspect of the invention is a method, wherein said weight body preferably is a ball. The body size corresponds with a diameter of the ball. The diameter may be determined by a ratio between the body surface according to $A = 4\,\pi\,r^2$ accounting for surface structure, i. e. roughness, and adhesion, and a body volume according to $V = 4/3\,\pi\,r^3$ accounting for body density and body weight. For increasing radius r, the body volume, and therefore body, weight increases faster than the body surface. As a consequence, movability of the weight body in the chamber 490; 590; 690; 790; 890a-c; 990; 1090; 1190; 1250, 1260, 1290; 1390 may be increased, and as a result, the effect of the balancing may be improved.

Another aspect of the invention is a method, wherein said weight body comprises metal, for example steel, such as stainless steel. As a consequence, durability of the weight body in the chamber 490; 590; 690; 790; 890a-c; 990; 1090; 1190; 1250, 1260, 1290; 1390 may be improved, and as a result, maintenance work may be simplified and reduced.

A further aspect of the invention is a system for reducing vibration in a rotary system 130, 131, 133; 230, 231a-b, 233; 330, 331, 333; 900a-c; 1000a-d; 1100a-c; 1200a-f; 1300 of an article processing machine 100; 200; 300 according to the method. As a consequence, the system may contribute to balancing of the rotary system 130, 131, 133; 230, 231a-b, 233; 330, 331, 333; 900a-c; 1000a-d; 1100a-c; 1200a-f, and as a result, the effect of the balancing may be improved.

Yet a further aspect of the invention is a balancing device 400, 400e-400k; 500; 600, 600e-600n; 700, 700c-700i; 800; 960a-960h, 970a-970f; 1200a-1200f; 1360a-b, 1370a-c for reducing vibration in a rotary system 130, 131, 133; 230, 231a-b, 233; 330, 331, 333 of an article processing machine 100; 200; 300, for example a washing machine, characterized by a substantially circular chamber 490; 590; 690; 790; 890a-c; 990; 1090; 1190; 1250, 1260, 1290; 1390 having a fulcrum on an axis 132; 232; 332; 420; 520; 620; 720; 820; 920; 1020; 1120; 1220; 1320 of said rotary system 130, 131, 133; 230, 231a-b, 233; 330, 331, 333; 900a-c; 1000a-d; 1100a-c; 1200a-f; 1300 and being partially filled with an amount of a thixotropic balancing substance 440; 540; 640; 740. The rotary system 130, 131, 133; 230, 231a-b, 233; 330, 331, 333; 900a-c; 1000a-d; 1100a-c; 1200a-f; 1300 may be a drum assembly comprising a rotatable drum of the washing machine, such as a front-loading washing machine with horizontal drum, top-loading washing machine with horizontal drum or top-loading washing machine with vertical drum; a wash dryer; or a laundry dryer, for example a tumble dryer or and spin dryer. The thixotropic balancing substance 440; 540; 640; 740 is able to flow under the influence of the vibration induced by the rotary system 130, 131, 133; 230, 231a-b, 233; 330, 331, 333; 900a-c; 1000a-d; 1100a-c; 1200a-f; 1300. The balancing device 400, 400e-400k; 500; 600, 600e-600n; 700, 700c-700i; 800; 960a-960h, 970a-970f; 1200a-1200f; 1360a-b, 1370a-c utilizes the vibration for changing the thixotropic balancing substance 440; 540; 640; 740 from a relaxed, rather solid state, wherein the thixotropic balancing substance 440; 540; 640; 740 is substantially fixed in relation to the chamber 490; 590; 690; 790; 890a-c; 990; 1090; 1190; 1250, 1260, 1290; 1390, into an agitated, rather fluid state, wherein the thixotropic balancing substance 440; 540; 640; 740 is substantially movable in relation to the chamber 490; 590; 690; 790; 890a-c; 990; 1090; 1190; 1250, 1260, 1290; 139; and, independent from spatial orientation, a rotational force for distributing the thixotropic balancing substance 440; 540; 640; 740 within the chamber 490; 590; 690; 790; 890a-c; 990; 1090; 1190; 1250, 1260, 1290; 1390. Hence, owing to the vibration, the thixotropic balancing substance 440; 540; 640; 740 distributes itself in the chamber 490; 590; 690; 790; 890a-c; 990; 1090; 1190; 1250, 1260, 1290; 1390 to reduce or minimize the vibration. Among other things, a distance of the chamber 490; 590; 690; 790; 890a-c; 990; 1090; 1190; 1250, 1260, 1290; 1390 with the thixotropic balancing substance 440; 540; 640; 740 therein from the axis 132; 232; 332; 420; 520; 620; 720; 820; 920; 1020; 1120; 1220; 1320, that is a radius, determines size of this effect according to the moment of inertia. As a consequence, a centre of rotation (CofR) of the rotary system 130, 131, 133; 230, 231a-b, 233; 330, 331, 333; 900a-c; 1000a-d; 1100a-c; 1200a-f; 1300 moves towards an ideal CofR, and the balancing device 400, 400e-400k; 500; 600, 600e-600n; 700, 700c-700i; 800; 960a-960h, 970a-970f; 1200a-1200f; 1360a-b, 1370a-c compensates for shift of the CofG owing to articles of laundry being not uniformly distributed in the drum. As a further consequence, vibration is reduced, and, as a result, noise is reduced, comfort is improved, consumption of operational resources, for example energy, such as electricity, is reduced resulting in reduced operational costs, and rotational speed may be increased resulting in improved dehydration and dryer articles of laundry. As a further result, the articles of laundry are handled more carefully, design of the machine is simplified resulting in reduced consumption of production resources, reduced production costs and reduced initial costs, improved reliability, reduced noise from auxiliary devices, such as pumps, and weight of the machine is reduced resulting in improved ease for transportation of the machine and reduced consumption of resources and costs of transportation. Furthermore, wear and tear of the article processing machine 100; 200; 300, in particular of the rotary system 130, 131, 133; 230, 231a-b, 233; 330, 331, 333; 900a-c; 1000a-d; 1100a-c; 1200a-f; 1300, is reduced, and environment-friendliness is improved. Last but not least, the balancing device 400, 400e-400k; 500; 600, 600e-600n; 700, 700c-700i; 800; 960a-960h, 970a-970f; 1200a-1200f; 1360a-b, 1370a-c can be utilized regardless of spatial orientation of the rotary system 130, 131, 133; 230, 231a-b, 233; 330, 331, 333; 900a-c; 1000a-d; 1100a-c; 1200a-f; 1300.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is annular and preferably has a cross section being rectangular 400e; 600e, quadratic, semi-elliptical 400f, elliptical 600f, semi-circular 400g; 600g, 600i, circular 600h, trapezoidal 400h; 600j, triangular 600k, V-shaped, M-shaped 400i; 600l, inversely semi-elliptical 400j; 600m, inversely semi-circular 400k; 600n, bell-shaped, oval or hexagonal. As a consequence, the chamber 490; 590; 690; 790; 890a-c; 990; 1090; 1190; 1250, 1260, 1290; 1390 may allow, owing to a larger diameter, for an efficient use of the thixotropic balancing substance 440; 540; 640; 740, and as a result, the amount of the thixotropic balancing substance 440; 540; 640; 740 may be reduced. As a further consequence, owing to the cross section being rectangular 400e, 600e, quadratic, semi-circular 600i, trapezoidal 400h; 600j, triangular 600k or bell-shaped, the thixotropic balancing substance 440; 540; 640; 740 may operate most effective, and as a further result, the amount of the thixotropic balancing substance 440; 540; 640; 740 may further be reduced. As a further consequence, owing to the cross section being V-shaped, M-shaped 400i; 600l, inversely semi-elliptical 400j; 600m, inversely semi-circular 400k; 600n, the chamber 490; 590; 690; 790; 890a-c; 990; 1090; 1190; 1250, 1260, 1290; 1390 may form part of a drive system of the rotary system 130, 131, 133; 230, 231a-b, 233; 330, 331, 333; 900a-c; 1000a-d; 1100a-c; 1200a-f; 1300 and, thus, provide for a dual functionality, and as a further result, design of the article processing machine 100; 200; 300 may be higher integrated.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is cylindrical and has a shell preferably being straight 700c, broadened straight 700f, elliptically convex 700d, circularly convex 700e, V-shaped, M-shaped 700g, elliptically concave 700h or circularly concave 700i. As a consequence, the chamber 490; 590; 690; 790; 890a-c; 990; 1090; 1190; 1250, 1260, 1290; 1390 may be compact, and as a result, the chamber 490; 590; 690; 790; 890a-c; 990; 1090; 1190; 1250, 1260, 1290; 1390 may require little space and may be integrated into the rotary system 130, 131, 133; 230, 231a-b, 233; 330, 331, 333; 900a-c; 1000a-d; 1100a-c; 1200a-f; 1300.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 comprises a surface area, for example a circumferential balancing area 430; 530; 630; 730, with a nanostructure, said nanostructure being, for example, formed by a material, such as a varnish, comprising nanoparticles, or imprinted on said surface area. The nanostructure may be provided by distributing, for example spraying and drying or hardening, the material on the surface area. Drying or hardening may comprise curing nanomaterial, that is the nanovarnish, using ultra-violet (UV) radiation, that is UV light, for example. The material, that is the nanomaterial, may provide the nanostructure as nanosubstrate. The nanomaterial may comprise two or more components, for instance a first component A, for example a resin, and a second component B, for example a hardener. The nanomaterial may be a two-component material. The nanomaterial, that is the first component A and the second component B, may react by chemical crosslinking or polymerisation. The chemical crosslinking reaction may start immediately or soon after mixing the first component A and the second component B. As a consequence, movability of the thixotropic balancing substance 440; 540; 640; 740 on the surface area, for example the circumferential balancing area 430; 530; 630; 730, may increase, and as a result, the effect of balancing may be improved.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is structured, for example honeycombed. As a consequence, the chamber 490; 590; 690; 790; 890a-c; 990; 1090; 1190; 1250, 1260, 1290; 1390 may provide for a dual functionality comprising, for example, structural stability and drainage, and as a result, the effect of balancing may be improved.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is one of a plurality of chambers 490; 590; 690; 790; 890a-c; 990; 1090; 1190; 1250, 1260, 1290; 1390, said plurality of chambers 490; 590; 690; 790; 890a-c; 990; 1090; 1190; 1250, 1260, 1290; 1390 preferably being arranged in parallel or concentrically or a combination thereof, said plurality of chambers 490; 590; 690; 790; 890a-c; 990; 1090; 1190; 1250, 1260, 1290; 1390 preferably being isolated or coupled, for example connected, each of said plurality of isolated chambers 490; 590; 690; 790; 890a-c; 990; 1090; 1190; 1250, 1260, 1290; 1390 preferably comprising a thixotropic balancing substance 440; 540; 640; 740 of a different amount or a different type, said plurality of coupled chambers 490; 590; 690; 790; 890a-c; 990; 1090; 1190; 1250, 1260, 1290; 1390 preferably being in fluid communication with each other, and said plurality of coupled chambers 490; 590; 690; 790; 890a-c; 990; 1090; 1190; 1250, 1260, 1290; 1390 preferably comprising extension chambers 1395a-c. As a consequence, the rotary system 130, 131, 133; 230, 231a-b, 233; 330, 331, 333; 900a-c; 1000a-d; 1100a-c; 1200a-f; 1300 may provide for distributed balancing, and as a result, design of the article processing machine 100; 200; 300 may be more flexible and adaptive, and the effect of balancing may be improved.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 has an outer diameter of between approximately 0.1 m and approximately 10 m, for example between approximately 0.2 m and approximately 1.5 m, preferably between approximately 0.5 m and approximately 1 m, such as approximately 0.75 m. The effect for a given amount of the thixotropic balancing substance 338a; 338b; 438a; 438b; 438c; 538a; 538b; 538c is greater for a larger diameter than for a smaller diameter. However, the diameter may be determined by available space.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 has a length of between approximately 0.01 m and approximately 2 m, for example between approximately 0.02 m and approximately 1 m, preferably between approximately 0.05 m and approximately 0.5 m, such as approximately 0.1 m. As a consequence, the chamber 490; 590; 690; 790; 890a-c; 990; 1090; 1190; 1250, 1260, 1290; 1390 may extend at least partially or substantially completely along the axis 132; 232; 332; 420; 520; 620; 720; 820; 920; 1020; 1120; 1220; 1320, and as a result, as any imbalance may be compensated for where it occurs along the axis 132; 232; 332; 420; 520; 620; 720; 820; 920; 1020; 1120; 1220; 1320, the effect of balancing may be improved.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is situated in a vessel 410, 450a-b; 510, 550; 610, 650a-b, 670; 710, 750a-b; 810, 850a-b. As a consequence, the chamber 490; 590; 690; 790; 890a-c; 990; 1090; 1190; 1250, 1260, 1290; 1390 may be manufactured separately and independently from the rotary system 130, 131, 133; 230, 231a-b, 233; 330, 331, 333; 900a-c; 1000a-d; 1100a-c; 1200a-f; 1300, and as a result, manufacturing of the article processing machine 100; 200; 300 may be modularized, distributed or sourced out. For upgrading or re-fitting, the chamber 490; 590; 690; 790; 890a-c; 990; 1090; 1190; 1250, 1260, 1290; 1390 may be added to a conventional rotary system.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b comprises metal, for example steel, preferably stainless steel, aluminium or copper, or composite material, for example glas-fibre-reinforced material or carbon-fibre-reinforced material, or synthetic material, for example plastics or plexiglas. The material is preferably material used elsewhere in the article processing machine 100; 200; 300, in particular in the rotary system 130, 131, 133; 230, 231a-b, 233; 330, 331, 333; 900a-c; 1000a-d; 1100a-c; 1200a-f; 1300, said shaft 131; 231a-b; 331; 950a-b; 1050; 1350. As a consequence, problems owing to incompatibility may be avoided, and as a result, life time of the article processing machine 100; 200; 300 may be improved, and maintenance work may be simplified.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b is converted, moulded, for example injection-moulded, or extruded. Conversion of the vessel 410, 450a-b; 510, 550; 610, 650a-b, 670; 710, 750a-b; 810, 850a-b may comprise, for example, cutting a piece of tube comprising two ends from an endless tube to length and joining the two ends. As a consequence, manufacturing of the vessel 410, 450a-b; 510, 550; 610, 650a, 650b; 710, 750a-b; 810, 850a-b may be simplified, and as a result, manufacturing of the chamber 490; 590; 690; 790; 890a-c; 990; 1090; 1190; 1250, 1260, 1290; 1390 may be simplified, rationalised or automated.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b is expandable, flexible, deformable or a combination thereof. As a consequence, the vessel 410, 450a-b; 510, 550; 610, 650a-b, 670; 710, 750a-b; 810, 850a-b may be easier to handle and manipulate, and as a result, locating the vessel 410, 450a-b; 510, 550; 610, 650a-b, 670; 710, 750a-b; 810, 850a-b in or on the rotary system 130, 131, 133; 230, 231a-b, 233; 330, 331, 333; 900a-c; 1000a-d; 1100a-c; 1200a-f may be simplified.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b is closed, preferably airtight, said vessel 410, 450a-b; 510, 550; 610, 650a-b, 670; 710, 750a-b; 810, 850a-b preferably being integrally formed, said vessel 410, 450a-b; 510, 550; 610, 650a-b, 670; 710, 750a-b; 810, 850a-b preferably being substantially balanced with respect to said axis 132; 232; 332; 420; 520; 620; 720; 820; 920; 1020; 1120; 1220; 1320, said vessel 410, 450a-b; 510, 550; 610, 650a-b, 670; 710, 750a-b; 810, 850a-b preferably being filled with the amount of a thixotropic balancing substance 440; 540; 640; 740 during forming of the vessel or through an opening, said opening preferably being located on an inner circumferential wall or a side wall 450a-b; 650a-b; 750a-b; 850a-b of said vessel 410, 450a-b; 510, 550; 610, 650a-b, 670; 710, 750a-b; 810, 850a-b, and said opening preferably being sealed by a seal 680, for example an adhesive pad, a membrane, such as a self-sealing membrane, a plug, such as a snap-in plug, a screw or a valve. As a consequence, the vessel 410, 450a-b; 510, 550; 610, 650a-b, 670; 710, 750a-b; 810, 850a-b may protect the chamber 490; 590; 690; 790; 890a-c; 990; 1090; 1190; 1250, 1260, 1290; 1390 with the thixotropic balancing substance 440; 540; 640; 740 therein from environmental effects comprising, for example, dust, humidity and temperature, to which the rotary system 130, 131, 133; 230, 231a-b, 233; 330, 331, 333; 900a-c; 1000a-d; 1100a-c; 1200a-f may be exhibited, and as a result, life time of the thixotropic balancing substance 440; 540; 640; 740 may be improved, and maintenance work may be reduced. As a further consequence, access to the chamber 490; 590; 690; 790; 890a-c; 990; 1090; 1190; 1250, 1260, 1290; 1390 with the thixotropic balancing substance 440; 540; 640; 740 may be provided, and as a further result, maintenance work may be simplified and reduced.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b is transparent or translucent. As a consequence, visual inspection of the chamber 490; 590; 690; 790; 890a-c; 990; 1090; 1190; 1250, 1260, 1290; 1390 with the thixotropic balancing substance 440; 540; 640; 740 therein may be enabled, and as a further result, maintenance work may be simplified and reduced.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said vessel 410, 450a-b; 510, 550; 610, 650a-b, 670; 710, 750a-b; 810, 850a-b is coupled to a or said shaft 131; 231b; 331; 1050 via a or said side wall 450a-b; 650a-b; 750a-b; 850a-b of said vessel 410, 450a-b; 510, 550; 610, 650a-b, 670; 710, 750a-b; 810, 850a-b, a disc or spokes 465a-b; 665a-b; 1065, said spokes 465a-b; 665a-b; 1065 preferably being evenly spaced apart from each other. As a consequence, the side wall 450a-b; 650a-b; 750a-b; 850a-b may be utilized for coupling the vessel 410, 450a-b; 510, 550; 610, 650a-b, 670; 710, 750a-b; 810, 850a-b to the shaft 131; 231b; 331; 1050 and, thus, provide for dual functionality, and as a result, design of the rotary system 130, 131, 133; 230, 231a-b, 233; 330, 331, 333; 900a-c; 1000a-d; 1100a-c; 1200a-f; 1300 may be simplified. As a further consequence, the disc or spokes 465a-b; 665a-b; 1065 may be utilized, preferably when the chamber 490; 590; 690; 790; 890a-c; 990; 1090; 1190; 1250, 1260, 1290; 1390 is integrated within the drum wheel 133; 233; 333; 1060; 1080 or the rotary system 130, 131, 133; 230, 231a-b, 233; 330, 331, 333; 900a-c; 1000a-d; 1100a-c; 1200a-f; 1300 has a relatively large diameter, for coupling the vessel 410, 450a-b; 510, 550; 610, 650a-b, 670; 710, 750a-b; 810, 850a-b to the shaft 131; 231b; 331; 1050, and as a further result, design of the rotary system 130, 131, 133; 230, 231a-b, 233; 330, 331, 333; 900a-c; 1000a-d; 1100a-c; 1200a-f; 1300 may be simplified. As another consequence, imbalance of the spokes 465a-b; 665a-b; 1065 may be reduced, and as another result, the effect of the balancing may be improved.

Another aspect of the invention is a balancing device 400, 400e-400k; 500; 600, 600e-600n; 700, 700c-700i;

800; 960a-960h, 970a-970f; 1200a-1200f; 1360a-b, 1370a-c, wherein said thixotropic balancing substance 440; 540; 640; 740 has a yield stress value between approximately 1 Pa and approximately 400 Pa, for example between approximately 2 Pa and approximately 260 Pa, such as approximately 30 Pa. As a consequence, distribution of the thixotropic balancing substance 440; 540; 640; 740 may be improved, and as a result, the effect of the balancing may be improved.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said amount of said thixotropic balancing substance 440; 540; 640; 740 is between approximately 0.01 kg and approximately 20 kg, for example between approximately 0.1 kg and approximately 10 kg, preferably between approximately 0.5 kg and approximately 5 kg, such as approximately 1 kg. The amount of said thixotropic balancing substance 440; 540; 640; 740 may dependent on a volume of the chamber 490; 590; 690; 790; 890a-c; 990; 1090; 1190; 1250, 1260, 1290; 1390, and an imbalance to be compensated.

Another aspect of the invention is a balancing device 400, 400e-400k; 500; 600, 600e-600n; 700, 700c-700i; 800; 960a-960h, 970a-970f; 1200a-1200f; 1360a-b, 1370a-c, wherein said chamber 490; 590; 690; 790; 890a-c; 990; 1090; 1190; 1250, 1260, 1290; 1390 is filled with said amount of said thixotropic balancing substance 440; 540; 640; 740 to between approximately 1 % and approximately 90 %, for example between approximately 10 % and approximately 80 %, preferably between approximately 25 % and approximately 75 %, such as approximately 50 %. The amount of said thixotropic balancing substance 440; 540; 640; 740 may dependent on a volume of the chamber 490; 590; 690; 790; 890a-c; 990; 1090; 1190; 1250, 1260, 1290; 1390, and an imbalance to be compensated.

A further aspect is a drum 130; 230; 330; 910; 1010; 1110; 1210; 1310 comprising the balancing device 400, 400e-400k; 500; 600, 600e-600n; 700, 700c-700i; 800; 960a-960h, 970a-970f; 1200a-1200f; 1360a-b, 1370a-c, said device 400, 400e-400k; 500; 600, 600e-600n; 700, 700c-700i; 800; 960a-960h, 970a-970f; 1200a-1200f; 1360a-b, 1370a-c preferably being attached, for example clipped, tightly fitted, glued, riveted, snapped, soldered, springed, screwed, tensed or welded, to or integrally formed by said drum 130; 230; 330; 910; 1010; 1110; 1210; 1310, and said drum 130; 230; 330; 910; 1010; 1110; 1210; 1310 preferably being substantially balanced with respect to said axis 132; 232; 332; 420; 520; 620; 720; 820; 920; 1020; 1120; 1220; 1320. As a consequence, the drum 130; 230; 330; 910; 1010; 1110; 1210; 1310 may contribute to balancing of the rotary system 130, 131, 133; 230, 231a-b, 233; 330, 331, 333; 900a-c; 1000a-d; 1100a-c; 1200a-f, and as a result, the effect of the balancing may be improved.

Yet a further aspect is a drum wheel 133; 233; 333; 1060; 1080 comprising the balancing device 400, 400e-400k; 500; 600, 600e-600n; 700, 700c-700i; 800; 960a-960h, 970a-970f; 1200a-1200f; 1360a-b, 1370a-c, said balancing device 400, 400e-400k; 500; 600, 600e-600n; 700, 700c-700i; 800; 960a-960h, 970a-970f; 1200a-1200f; 1360a-b, 1370a-c preferably being attached, for example clipped, tightly fitted, glued, riveted, snapped, soldered, springed, screwed, tensed or welded, to or integrally formed by said drum wheel 133; 233; 333; 1060; 1080, and said drum wheel 133; 233; 333; 1060; 1080 preferably being substantially balanced with respect to said axis 132; 232; 332; 420; 520; 620; 720; 820; 920; 1020; 1120; 1220; 1320. As a consequence, the drum wheel 133; 233; 333; 1060; 1080 may contribute to balancing of the rotary system 130, 131, 133; 230, 231a-b, 233; 330, 331, 333; 900a-c; 1000a-d; 1100a-c; 1200a-f, and as a result, the effect of the balancing may be improved.

Brief Description of the Several Views of the Drawing(s)

While the specification concludes with claims particularly pointing out and distinctly claiming that which is regarded as the invention, a more particular description of the invention will be rendered by reference to specific embodiments thereof, which are depicted in the appended drawings, in order to illustrate the manner in which embodiments of the invention are obtained. Understanding that these drawings depict only typical embodiments of the invention, that are not necessarily drawn to scale, and, therefore, are not to be considered limiting of its scope, embodiments will be described and explained with additional specificity and detail through use of the accompanying drawings in which:

Figs 1 a) and b) show a partial sectional schematic front view and a sectional schematic side view of a front-loading washing machine with horizontal drum, respectively;

Figs 2 a) and b) show a sectional schematic front view and a sectional schematic side view of a top-loading washing machine with horizontal drum, respectively;

Figs 3 a) and b) show a sectional schematic front view and a sectional schematic top view of a top-loading washing machine with vertical drum, respectively;

Figs 4 a) and b) show a perspective view and a partial sectional view of a balancing device according to an embodiment of the invention, respectively;

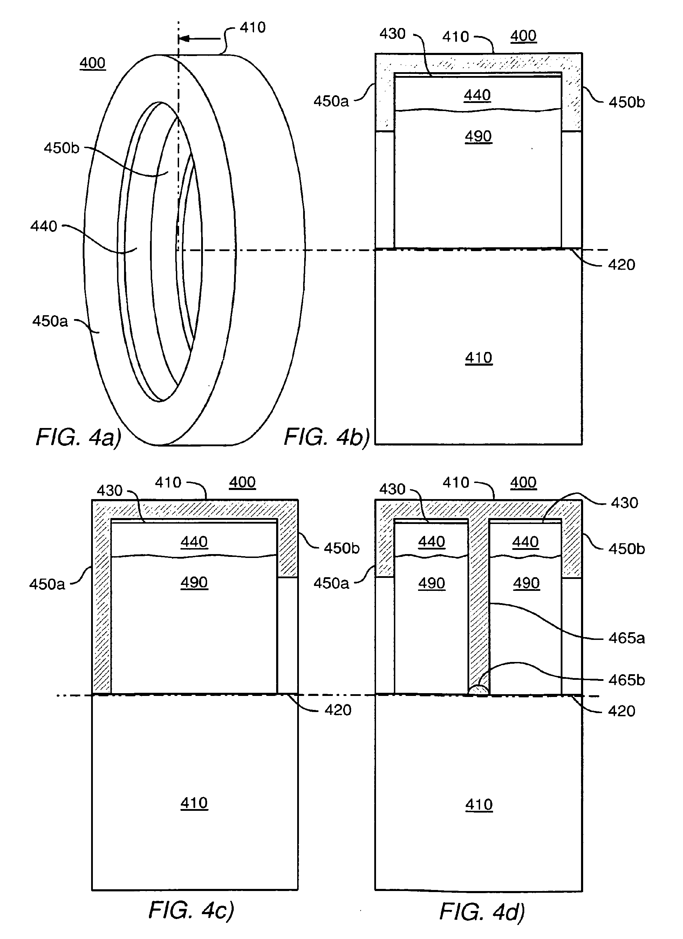

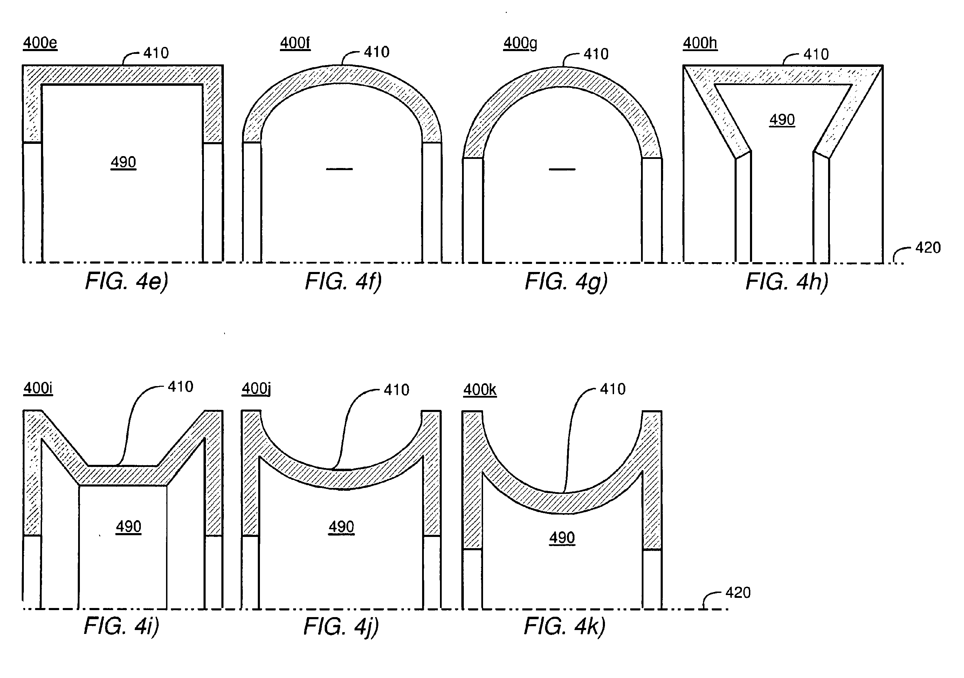

Figs 4 c) and d) show partial sectional views of variations of the balancing device according to the embodiment shown in Figs 4 a) and b);

Figs 4 e) to k) show sectional views of a plurality of profiles of the balancing device according to the embodiment shown in Figs 4 a) and b);

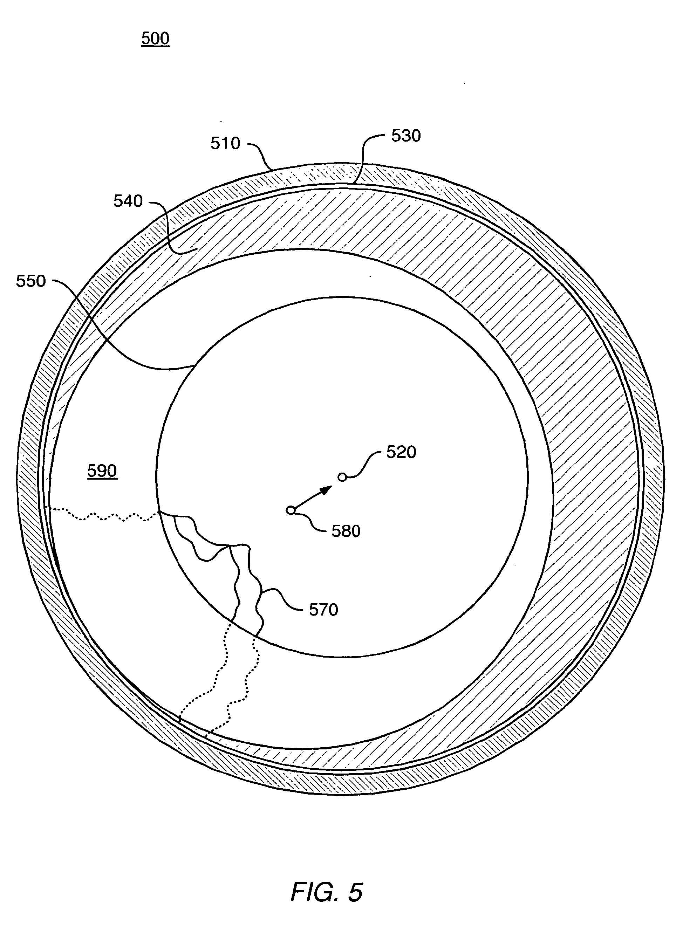

Fig. 5 shows a cross-sectional view of the balancing device according to the embodiment shown in Figs 4 a) and b);

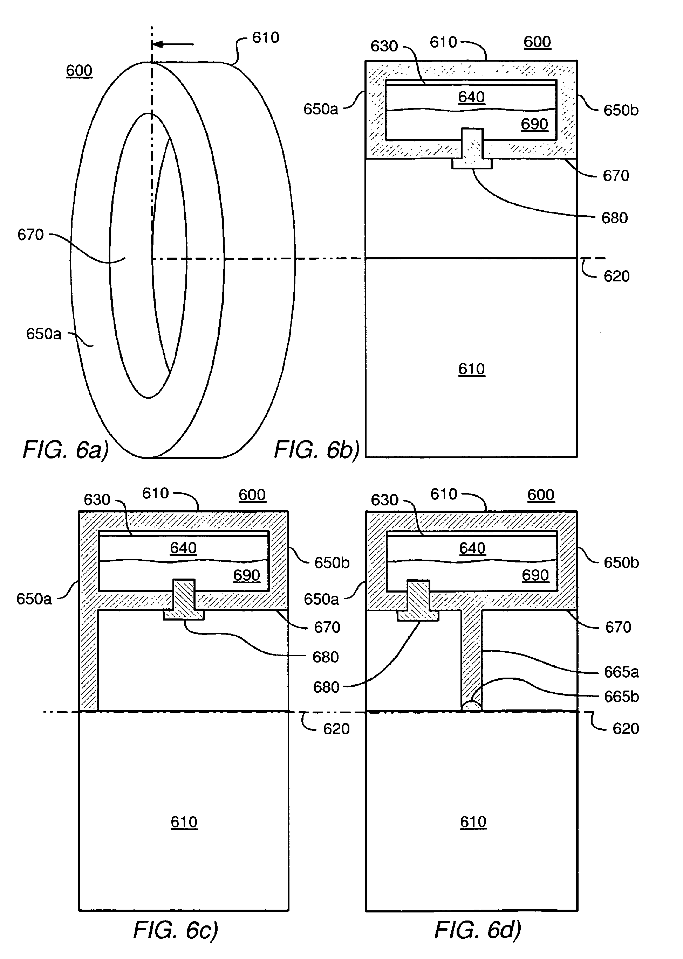

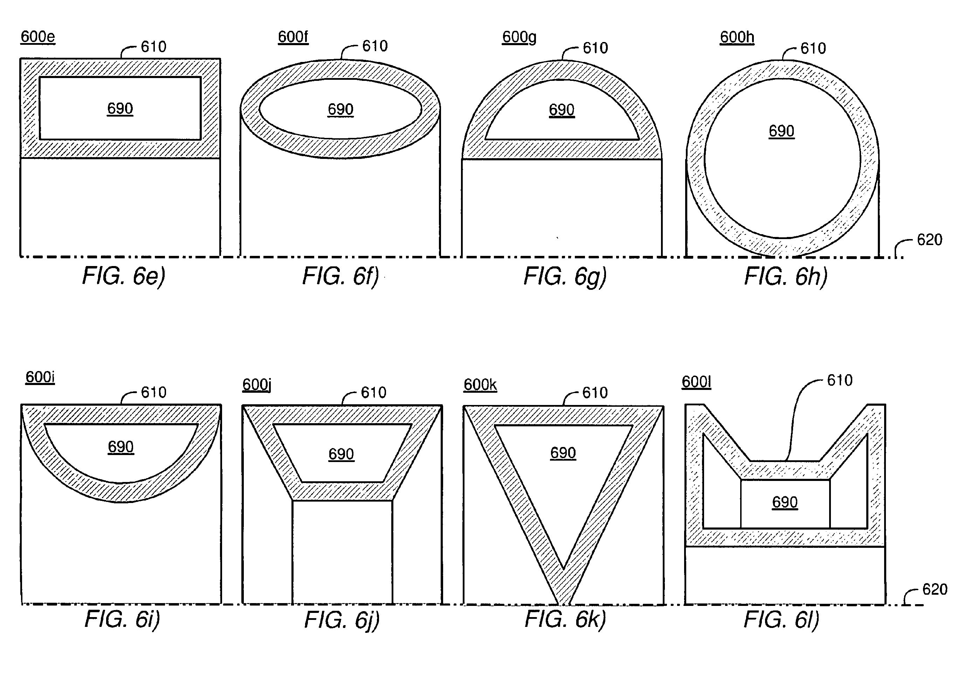

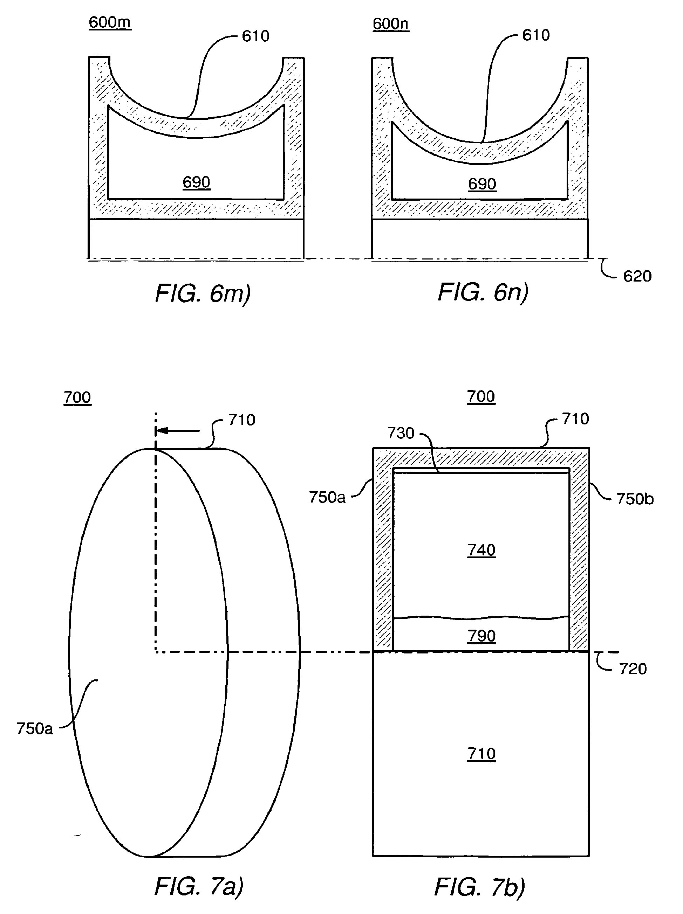

Figs 6 a) and b) show a perspective view and a partial sectional view of a balancing device according to another embodiment of the invention, respectively;

Figs 6 c) and d) show partial sectional views of variations of the balancing device according to the embodiment shown in Figs 6 a) and b);

Figs 6 e) to n) show sectional views of a plurality of profiles of the balancing device according to the embodiment shown in Figs 6 a) and b);

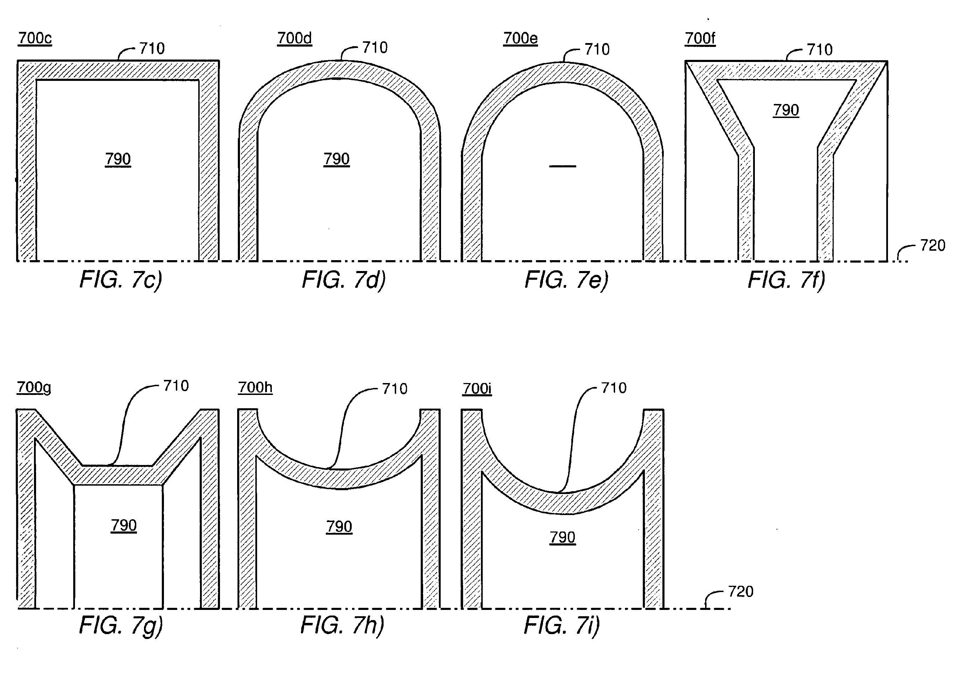

Figs 7 a) and b) show a perspective view and a partial sectional view of a balancing device according to yet another embodiment of the invention, respectively;

Figs 7 c) to i) show sectional views of a plurality of profiles of the balancing device according to the embodiment shown in Figs 7 a) and b);

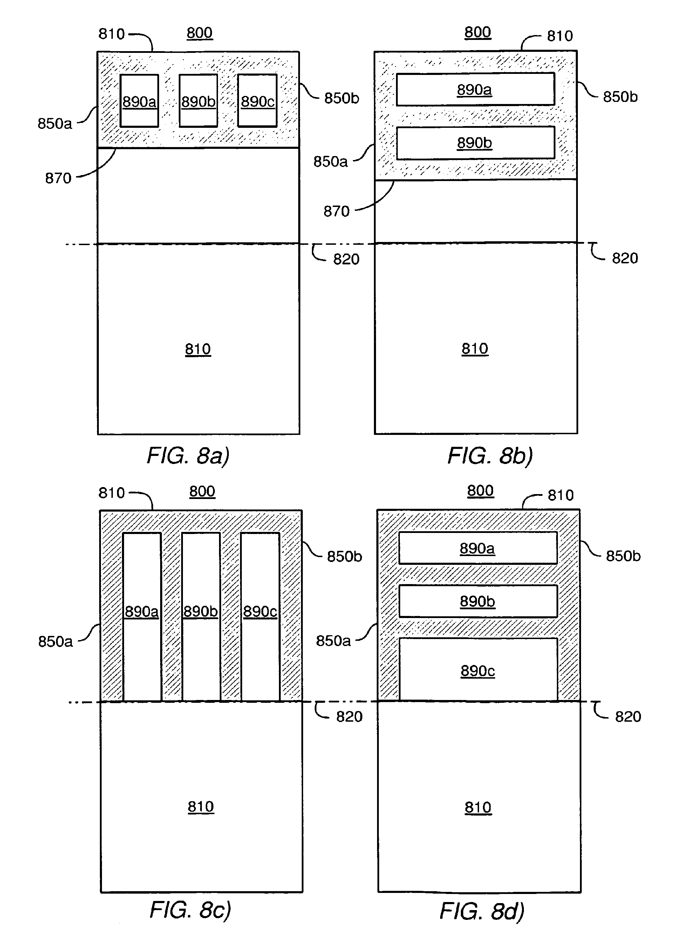

Figs 8 a) to d) show partial sectional views of variations of the balancing device according to the embodiments of the invention;

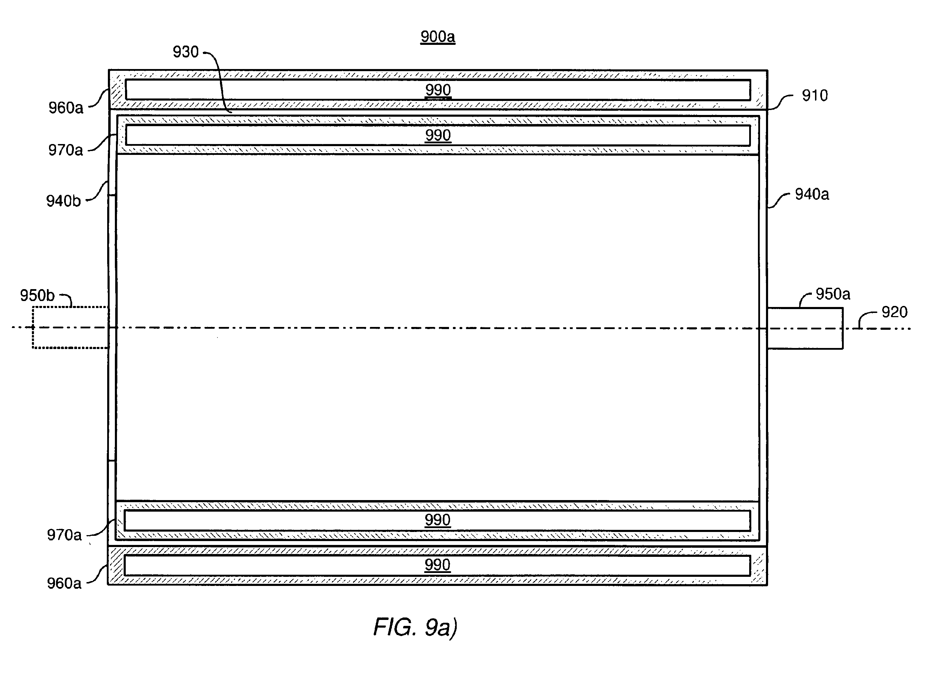

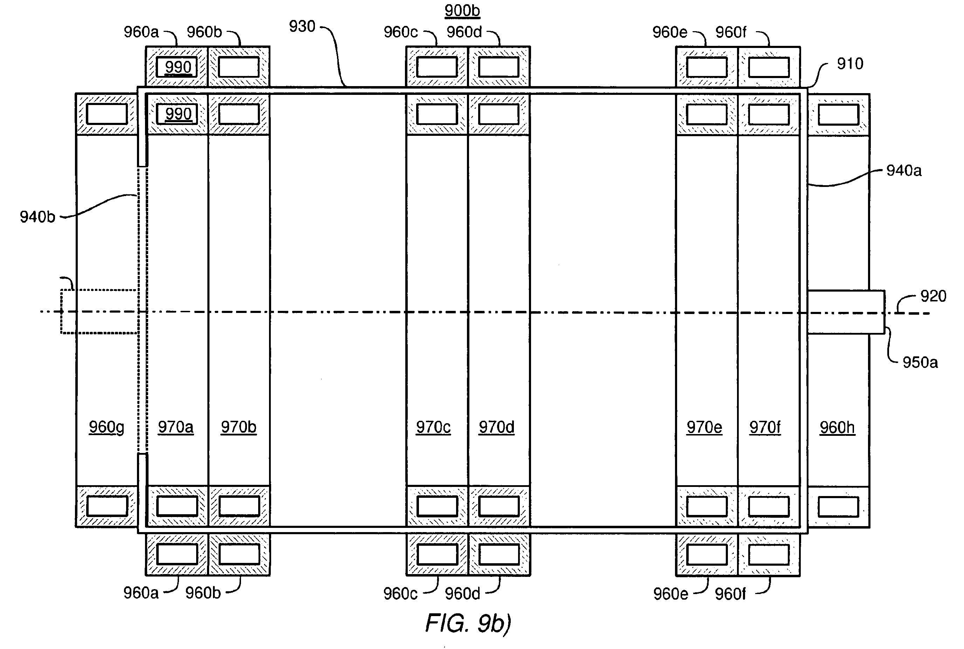

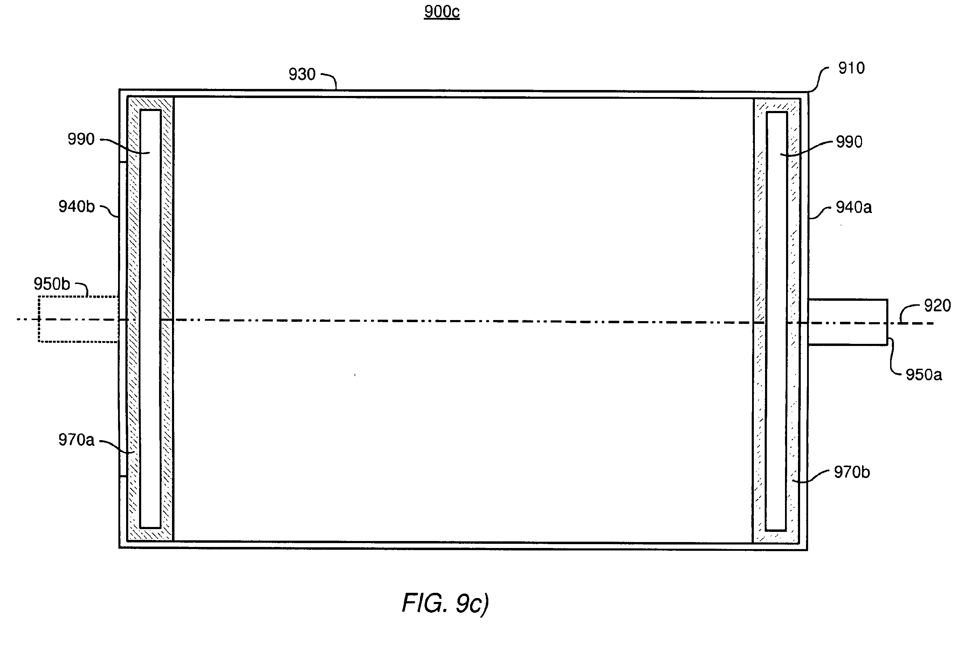

Figs 9 a) to c) show sectional views of a drum, indicating arrangement of the balancing device according to the embodiments of the invention at several locations in relation to the drum;

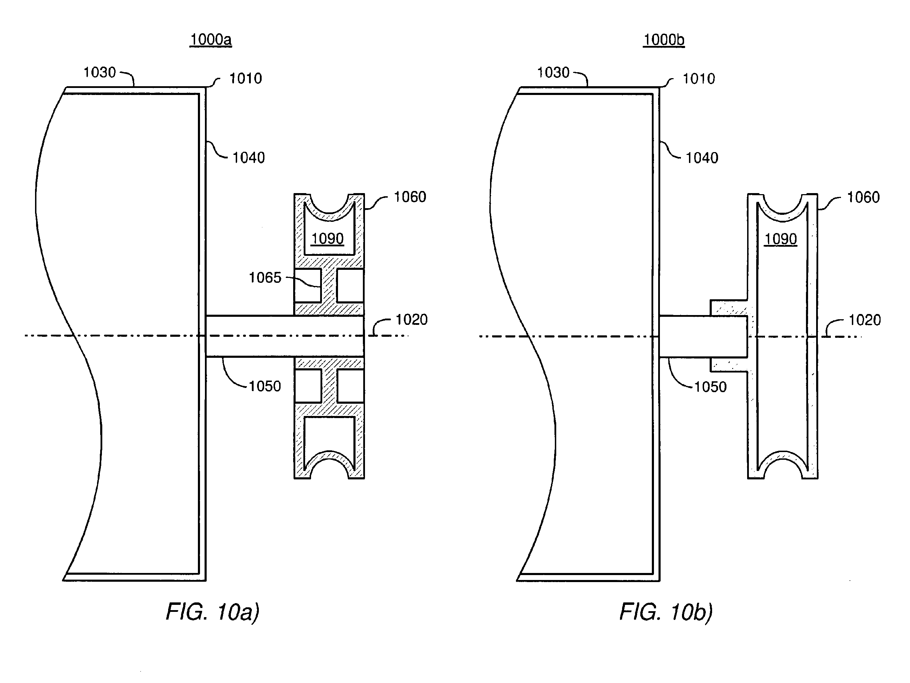

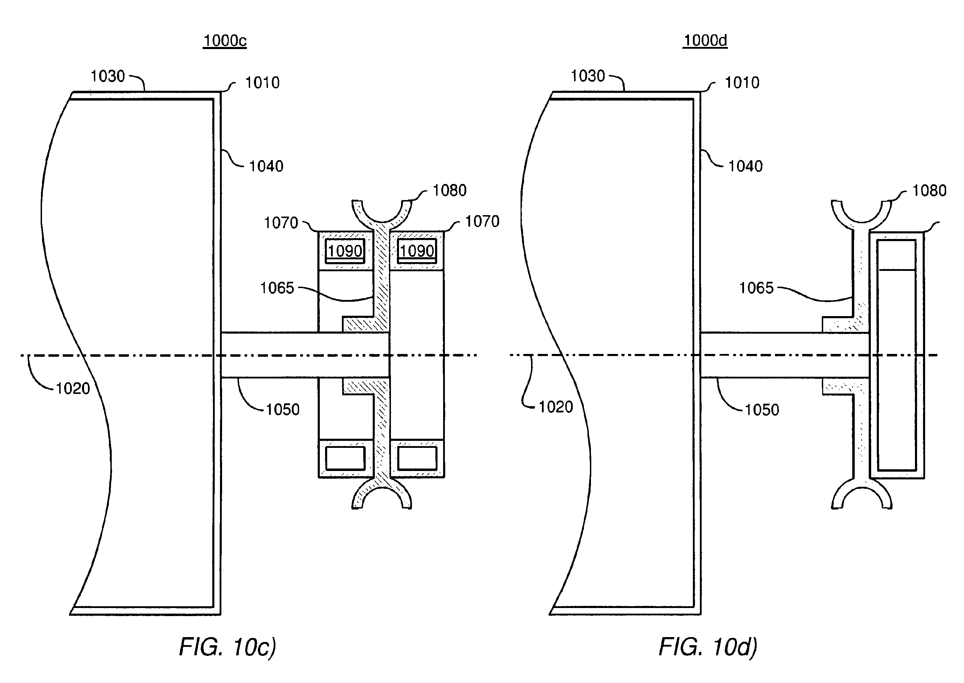

Figs 10 a) and b) show sectional views of drum wheels comprising the balancing device according to the embodiments of the invention;

Figs 10 c) and d) show sectional views of other drum wheels indicating arrangement of the balancing device according to the embodiments of the invention in relation to the other drum wheels;

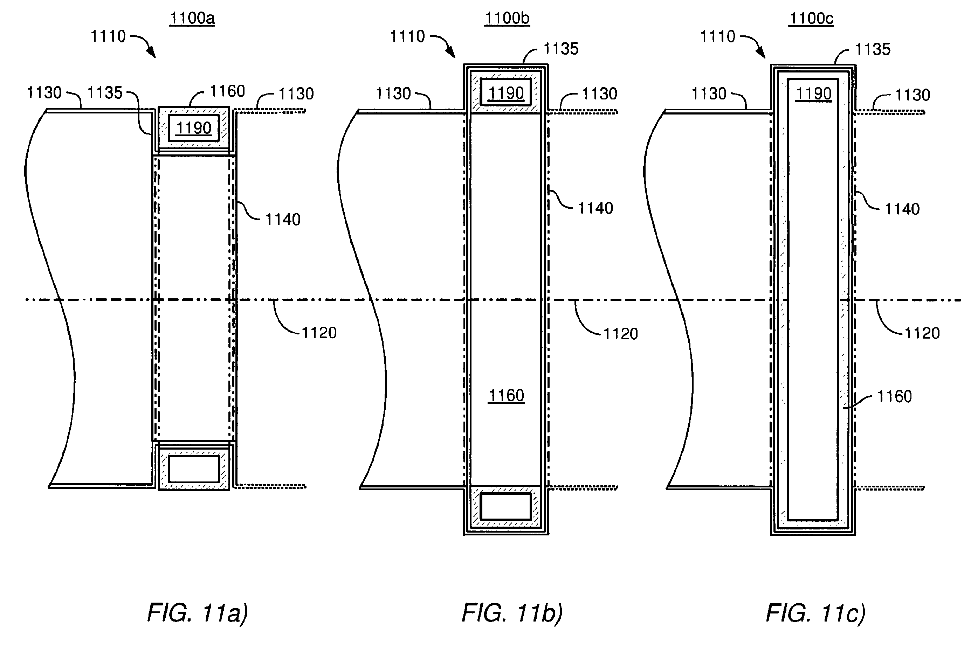

Fig. 11 a) shows a detailed sectional view of a drum, indicating arrangement of the balancing device according to the embodiments of the invention at a location on the drum;

Figs 11 b) and c) show detailed sectional views of a drum, indicating arrangement of the balancing device according to the embodiments of the invention at a location in the drum;

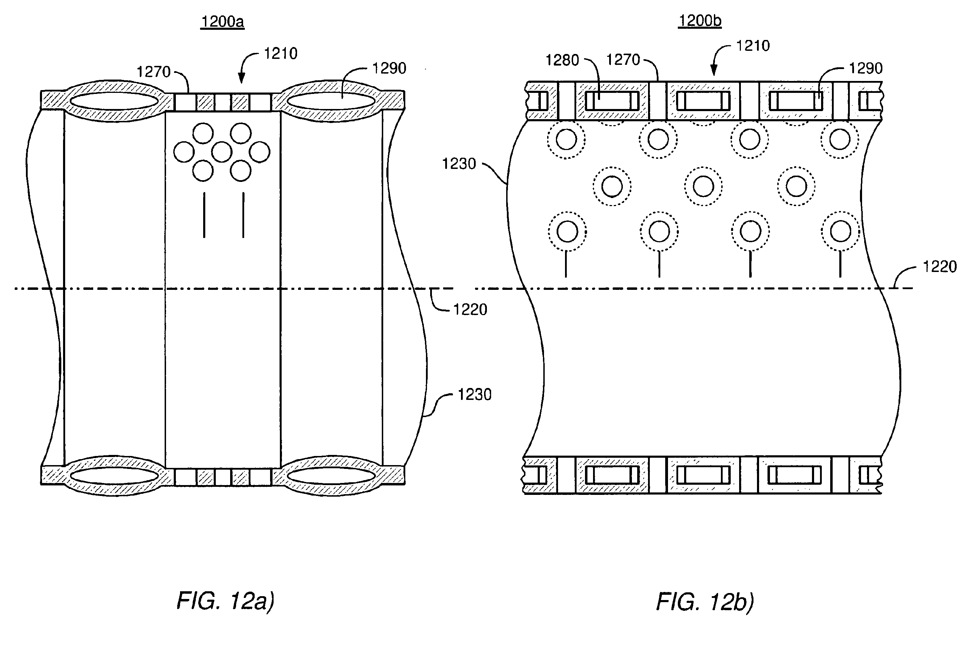

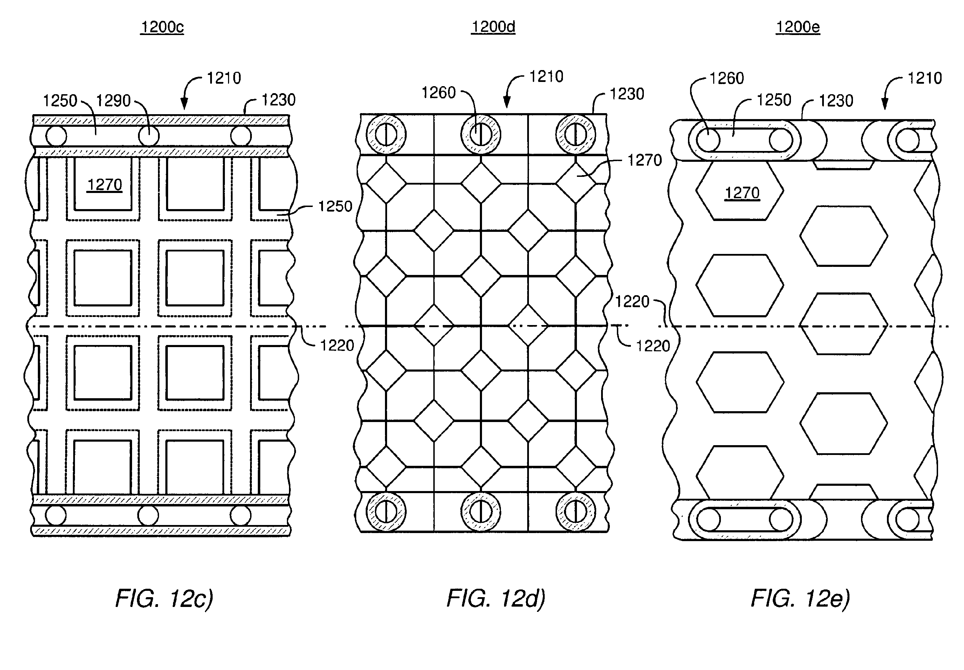

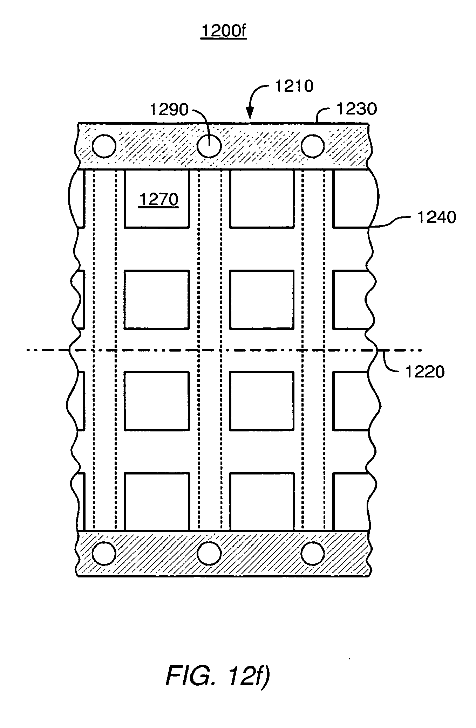

Figs 12 a) to f) show detailed sectional views of the balancing device according to embodiments of the invention forming a drum;

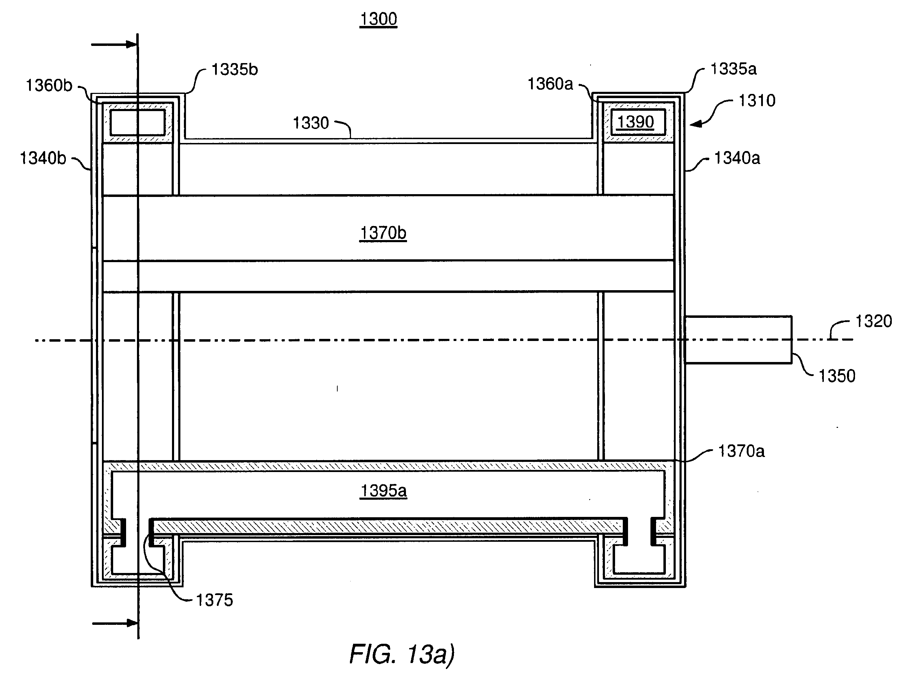

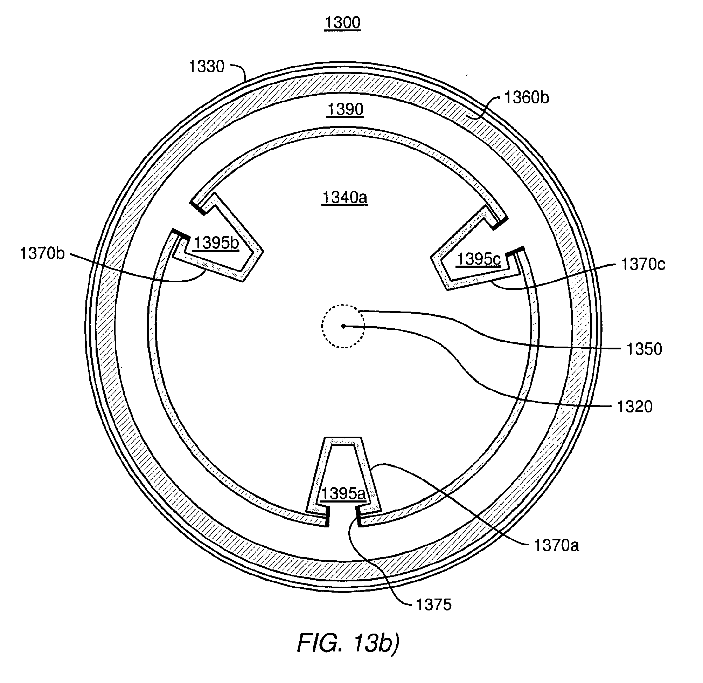

Figs 13 a) and b) show, for an embodiment of the invention, a sectional view and a cross-sectional view of the balancing device according to yet another embodiment of the invention, respectively; and

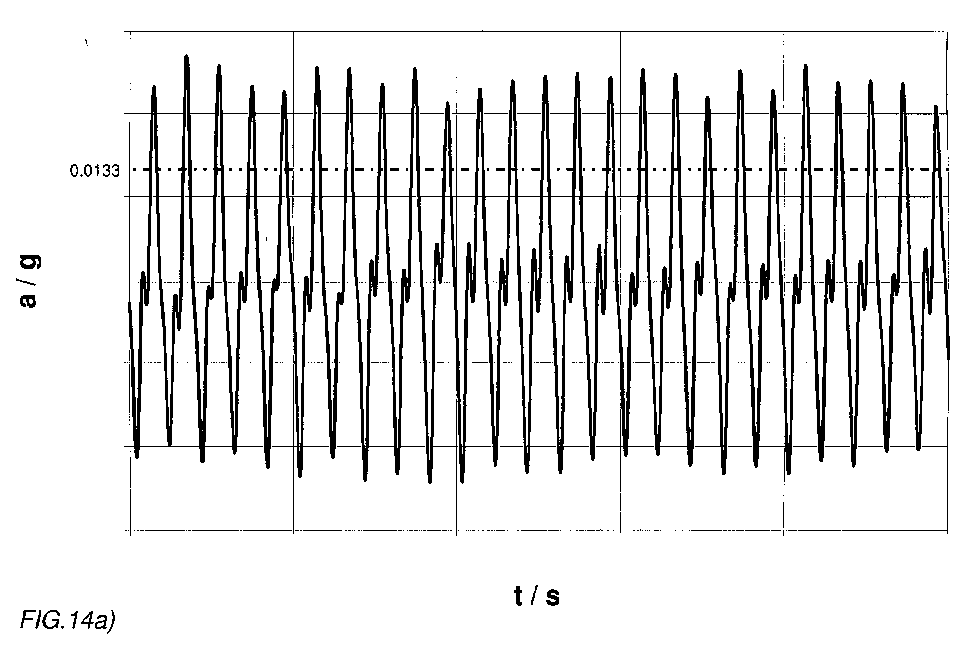

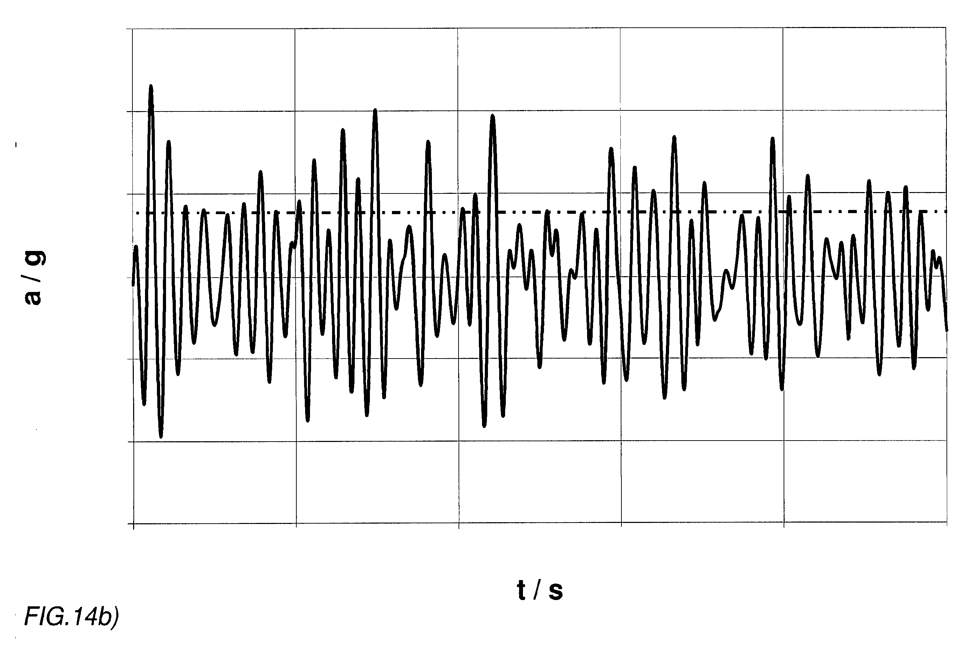

Fig. 14 a) and b) show comparative representations of peak-to-peak accelerations together with a corresponding root mean square (RMS) acceleration of a conventional washing machine without and with a balancing device according to an embodiment of the invention, respectively, over time,.

Detailed Description of the Invention

In the following detailed description of the embodiments, reference is made to the accompanying drawings which form a part hereof and show, by way of illustration, specific embodiments in which the invention may be practiced. In the drawings, like numerals describe substantially similar components throughout the several views. The embodiments are intended to describe aspects of the invention in sufficient detail to enable those of skill in the art to practice the invention. Other embodiments may be utilized and structural, logical or electrical changes or combinations thereof may be made without departing from the scope of the invention. Moreover, it is to be understood, that the various embodiments of the invention, although different, are not necessarily mutually exclusive. For example, a particular feature, structure or characteristic described in one embodiment may be included within other embodiments. Furthermore, it is to be understood, that embodiments of the invention may be implemented using different technologies. Also, the term "exemplary" is merely meant as an example, rather than the best or optimal. The following detailed description is, therefore, not to be taken in a limiting sense, and the scope of the invention is defined only by the appended claims, along with the full scope of equivalents to which such claims are entitled.

Reference will be made to the drawings. In order to show the structures of the embodiments most clearly, the drawings included herein are diagrammatic representations of inventive articles. Thus, actual appearance of the fabricated structures may appear different while still incorporating essential structures of embodiments. Moreover, the drawings show only the structures necessary to understand the embodiments. Additional structures known in the art have not been included to maintain clarity of the drawings. It is also to be understood, that features and/or elements depicted herein are illustrated with particular dimensions relative to one another for purposes of simplicity and ease of understanding, and that actual dimensions may differ substantially from that illustrated herein.

In the following description and claims, the terms "include", "have", "with" or other variants thereof may be used. It is to be understood, that such terms are intended to be inclusive in a manner similar to the term "comprise".

In the following description and claims, the terms "coupled" and "connected", along with derivatives such as "communicatively coupled" may be used. It is to be understood, that these terms are not intended as synonyms for each other. Rather, in particular embodiments, "connected" may be used to indicate, that two or more elements are in direct physical or electrical contact with each other. However, "coupled" may also mean that two or more elements are not in direct contact with each other, but yet still co-operate or interact with each other.

In the following description and claims, terms, such as "upper", "lower", "first", "second", etc., may be only used for descriptive purposes and are not to be construed as limiting. The embodiments of a device or article described herein can be manufactured, used, or shipped in a number of positions and orientations.

In the present context, the term "nanostructure" is to be understood as referring to any surface structure which has surface details of a size in the nanometre range.

An article processing machine, that is article treatment machine, processes an article or a plurality of articles. Article processing machines generally comprise industrial machines, and domestic, that is household, machines or appliances. Article processing machines comprise textile processing machines, for example laundry treatment machines, that is laundry appliances, such as washing machines, that is clothes washers or washers, wash dryers, laundry dryers, that is tumble dryers, and spin dryers, that centrifugal extractors. Washing machines generally comprise front-loading washing machines with horizontal drum, top-loading washing machines with horizontal drum and top-loading washing machines with vertical drum. Washing machines generally process articles of laundry with a fluid, for example a liquid, such as water or solvents. While domestic washing machines generally utilize water, industrial washing machine may also utilize solvents.

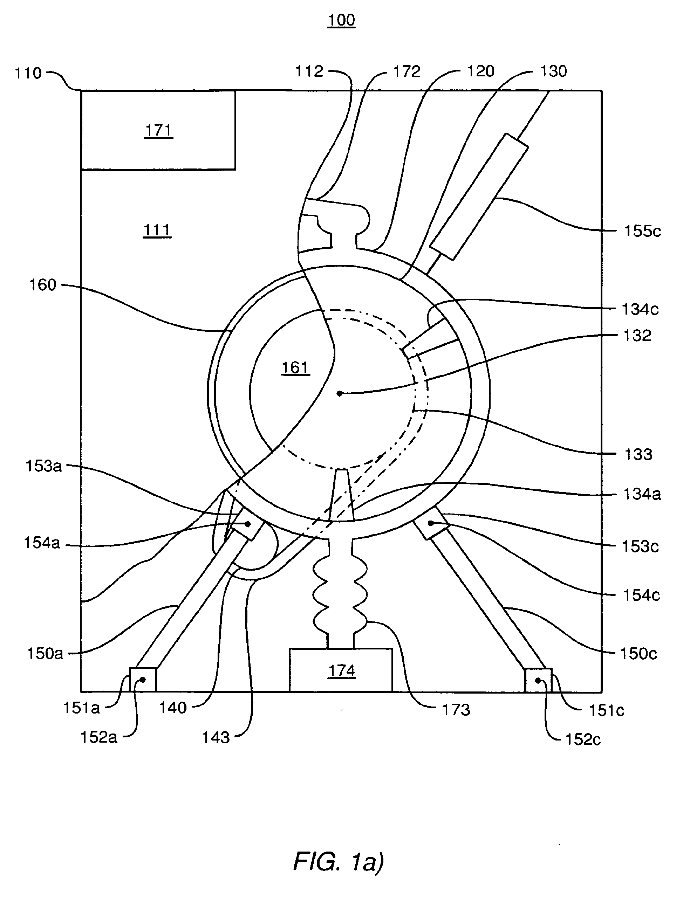

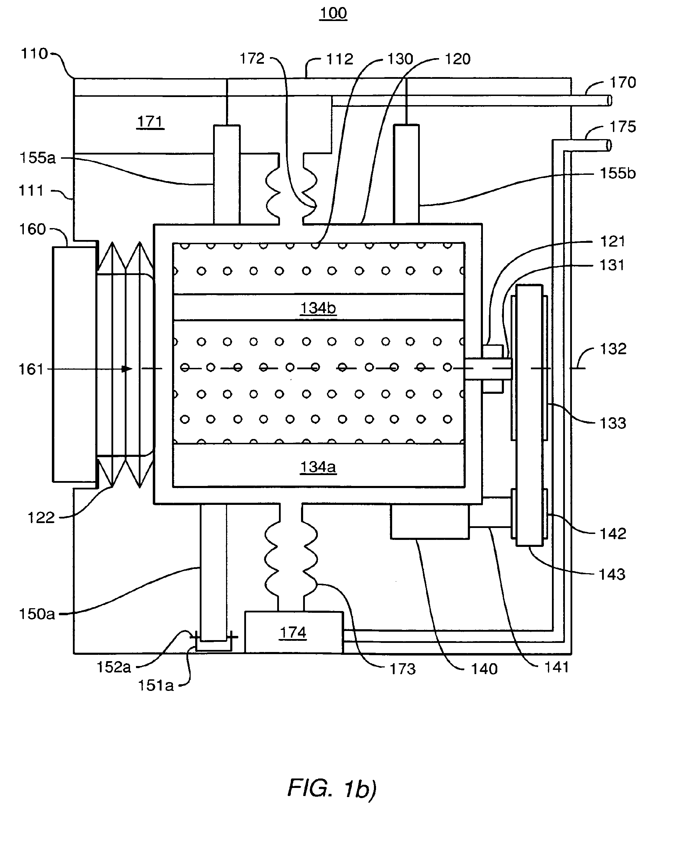

Fig. 1 a) shows a partial sectional schematic front view of a front-loading washing machine 100 with horizontal drum 130. Fig. 1 b) shows a sectional schematic side view of the washing machine 100 shown in Fig. 1 a). The washing machine 100 shown Figs 1 a) and 1 b) is a typical environment wherein the invention is useful and desirable.

The washing machine 100 comprises an outer casing 110, a substantially cylindrical tub 120 horizontally suspended inside the outer casing 110 by means of a plurality of vibration dampers 150a, 150c and a plurality of springs 155a-c for containing washing water, a perforated substantially cylindrical drum 130 rotatably mounted inside the tub 120 for containing and manipulating articles of laundry (not shown), a motor 140 for driving the drum 130, and a hinged door 160 located in an opening on a front face 110 of the outer casing 110 for sealing the tub 120 in a watertight manner during a washing cycle to be carried out by the washing machine 100.

The washing machine 100 generally further comprises a water supply hose 170 for receiving fresh water, a detergent container 171, for example a detergent drawer, generally located in the front face 110 of the outer casing 110 and coupled to the water supply hose 170 and further via a flexible water supply bellow 172 to an inlet hole of the tub 120 for receiving detergent and mixing the detergent with the fresh water to washing water, and a waste water pump 174 coupled via flexible waste water bellow 173 to an outlet hole of the tub 120 and further to a waste water hose 175 for discharging waste water. The waste water pump 174 may be an electric pump, for example an alternate-current (AC) pump or a direct-current (DC) pump.

The washing machine 100 generally further comprises a balancing weight (not shown). The balancing weight may be attached to the tub 120 or the drum 130.

The washing machine 100 generally further comprises a user interface (not shown) comprising an input, for example a switch or dial, or an output, for example a display, or a combination thereof. The user interface may, for example, be located on the front face 111 or on a panel attached to a rear portion of a top face 112 of the outer casing 110.

Each of the plurality of vibration dampers 150a, 150c may be pivotally attached to the outer casing 110, for example, by means of one of a plurality of casing-side brackets 151a, 151c part of or attached, for example welded, to the outer casing 110 and one of a plurality of casing-side bolts 152a, 152c, and resiliently attached to the tub 120, for example, by means of one of a plurality of tub-side brackets 153a, 153c attached to the tub 120 and one of a plurality of tub-side bolts 154a, 154c.

The drum 130 is, in this embodiment horizontally, rotatable about a central axis 132. The drum 130 comprises a circumferential wall, that is shell, generally perforated for circulating and draining washing water, and a back wall. The drum 130 is, at the back wall of the drum 130, fixedly coupled to a first end of a drum shaft 131 extending through a back wall of the tub 130, being rotatably supported by a bearing 121, for example spherical roller bearing or cylindrical roller bearing, attached to the back wall of the tub 130 and having a drum wheel 133 at a second end. The drum 130 may further comprise a plurality of lifters 134a-c substantially equally spaced apart on an inner surface of the circumferential wall in longitudinal direction for lifting and manipulating the articles of laundry during the washing cycle.

The motor 140 generally attached to the tub 120 comprises a rotatable motor shaft 141 having a motor wheel 142, for example a pulley, at a free end. The motor 140 may be an electric motor, for example an AC motor or a DC motor. For coupling the drum 130 to the motor 140, a belt 143, for example a toothed belt or V-belt, is mounted on the drum wheel 133 and the motor wheel 142. Thus, when the motor 140 is operated, the drum shaft 131 and the drum 130 are rotated together. Alternatively, the drum 130 may be connected directly to the motor 140, or coupled indirectly via a chain, a drive shaft, for example prop shaft or cardan shaft, gear wheels, for example cockwheels or pinion wheels, or a gearbox. Furthermore, the drum 130 may be driven directly by the motor; the drum 130 may, for example, act as a rotor of the motor.

The drum 130 may be accessed trough a flexible tub seal 122 attached around the opening on the front face 110 and to the tub 120. The door 160 is openable to allow the articles of laundry to be placed inside the drum 130 prior for commencement of the washing cycle and to be removed from the drum 130 after completion of the washing cycle. The door 160 may comprise a transparent window 161, that may be made of glas.

During the washing cycle, the washing machine 100 is cycled through a suitable sequence of operations selected from a plurality of available sequences of operations for processing the articles of laundry. For example, the operations may comprise a pre-soaking operation, a washing operation at approximately 10 to approximately 100 rpm, a rinsing operation, and a spin drying operation at approximately 600 to approximately 1600 rpm.

The spin drying operation is initiated in order to extract the washing water from, that is dehydrate, the articles of laundry by rotating the perforated drum 130 at a relatively high rate of rotational speed such that a centrifugal force thus produced on the articles of laundry causes the washing water to be extracted from the articles of laundry and enter the tub 120. Owing to factors such as tangling and irregular masses of the articles of laundry, the articles of laundry may be unevenly or non-uniformly distributed during the spin drying operation. The nonuniform mass distribution resulting from a concentration of the articles of laundry at a given circumferential location during the spin drying operation causes an increase in the centrifugal force at the given location, and the drum 130 may rotate in an out-of-balance condition. As the articles of laundry are not uniformly distributed in the drum 130, but concentrated at the given location within the drum 130, an CoG of the drum 130 does not coincide with an CoR, that is geometrical centre, of the drum 130 anymore. A consequence of any imbalance of the drum 130 is a vibration. If the centrifugal force at the location of the out-of-balance load exceeds a normal amount of load imbalance, high reaction forces are generated and transferred from the washing machine 100 to a floor, and the washing machine 100 may shake and even move across the floor. Thus, a dynamic response of the washing machine 100 is defined by a mass and moments of the suspended tub 120 comprising the drum 130, laundry and water, characteristics of the plurality of vibration dampers 150a, 150c and the plurality of springs 155a-c, and their points of attachment in the outer casing 110 and on the tub 120. Thus, the flexible tub seal 122, flexible water supply bellow 172 and flexible waste water bellow 173 are provided for moderate movements of the tub 120 with respect to the outer casing 110.

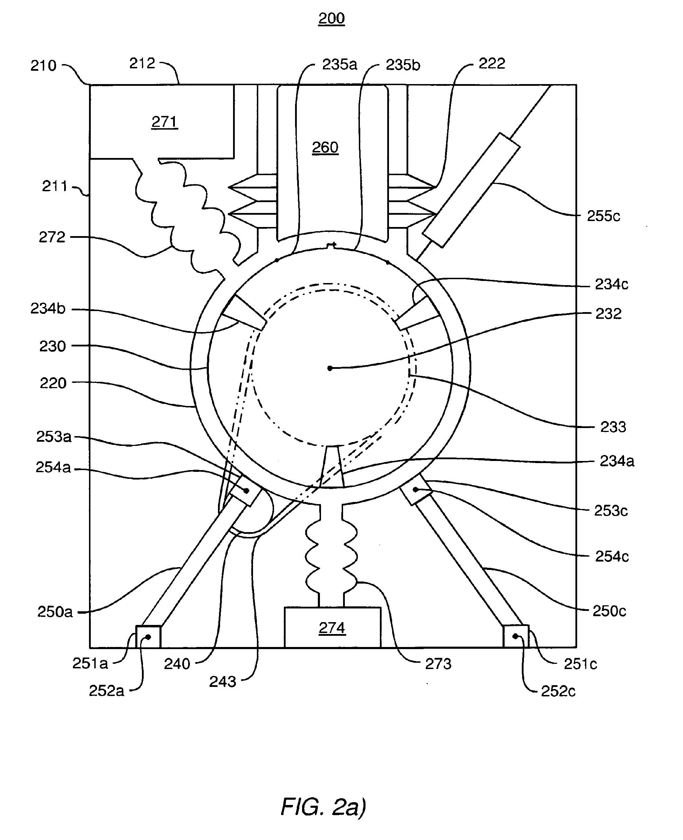

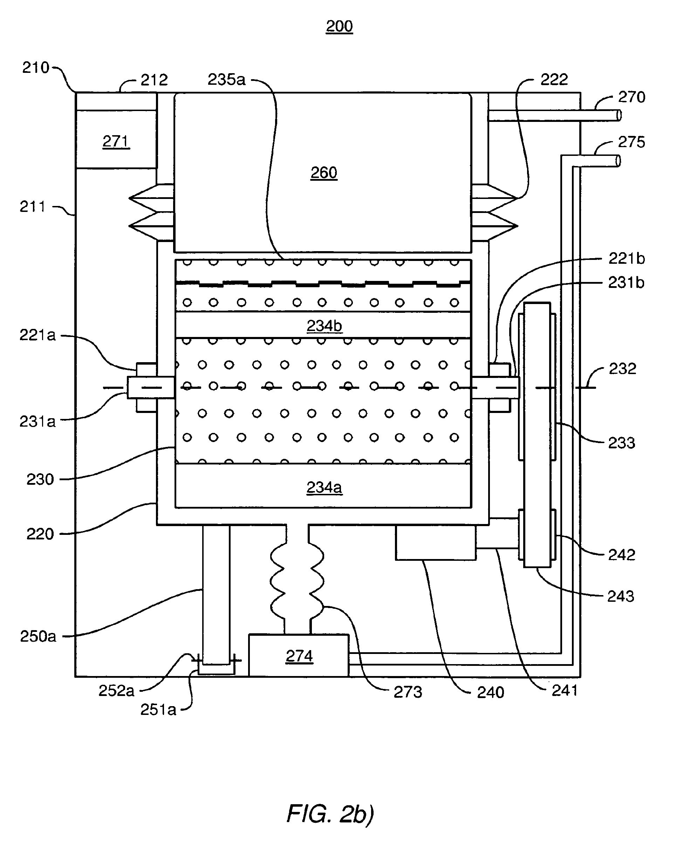

Fig. 2 a) shows a sectional schematic front view of a top-loading washing machine 200 with horizontal drum 230. Fig. 2 b) shows a sectional schematic side view of the washing machine 200 shown in Fig. 2 a). The washing machine 200 shown Figs 2 a) and 2 b) is another typical environment wherein the invention is useful and desirable.

The washing machine 200 comprises an outer casing 210, a substantially cylindrical tub 220 horizontally suspended inside the outer casing 210 by means of a plurality of vibration dampers 250a, 250c and a plurality of springs 255c and comprising in a substantially upward direction an opening, for containing washing water, a perforated substantially cylindrical drum 230 rotatably mounted inside the tub 220 and comprising drum doors 235a-b for containing and manipulating articles of laundry (not shown), a motor 240 for driving the drum 230, and a hinged lid 260 located in an opening on a top face 211 of the outer casing 110 for sealing the tub 220 in a substantially watertight manner during a washing cycle to be carried out by the washing machine 200.

The washing machine 200 generally further comprises a water supply hose 270 for receiving fresh water, a detergent container 271, for example detergent drawer, generally located in a front face 211 of the outer casing 210 or the lid 260 and coupled to the water supply hose 270 and further via a flexible water supply bellow 272 to an inlet hole of the tub 220 for receiving detergent and mixing the detergent with the fresh water to washing water, and a waste water pump 274 coupled via flexible waste water bellow 273 to an outlet hole of the tub 220 and further to a waste water hose 275 for discharging waste water. The waste water pump 274 may be an electric pump, for example an AC pump or a DC pump.

The washing machine 200 generally further comprises a balancing weight (not shown). The balancing weight may be attached to the tub 220 or the drum 230.

The washing machine 200 generally further comprises a user interface (not shown) comprising an input, for example a switch or dial, or an output, for example a display, or a combination thereof. The user interface may, for example, be located on the front face 211 or on a panel attached to a rear portion of a top face 212 of the outer casing 210.

Each of the plurality of vibration dampers 250a, 250c may be pivotally attached to the outer casing 210, for example, by means of one of a plurality of casing-side brackets 251a, 251c part of or attached, for example welded, to the outer casing 210 and one of a plurality of casing-side bolts 252a, 252c, and resiliently attached to the tub 220, for example, by means of one of a plurality of tub-side brackets 253a, 253c attached to the tub 220 and one of a plurality of tub-side bolts 254a, 254c.

The drum 230 is, in this embodiment horizontally, rotatable about a central axis 232. The drum 230 comprises a circumferential wall, that is shell, generally perforated for circulating and draining washing water and comprising the drum doors 235a-b, a first side wall, and a second side wall. The drum 230 is, at the first side wall of the drum 230, fixedly coupled to a first end of a first drum shaft 231b extending through a first side wall of the tub 230, being rotatably supported by a first bearing 221b, for example spherical roller bearing or cylindrical roller bearing, attached to the first side wall of the tub 230 and having a drum wheel 233 at a second end, and, at the second side wall of the drum 230, fixedly coupled to an end of a second drum shaft 231a extending through a second side wall of the tub 230, being rotatably supported by a second bearing 221a, for example spherical roller bearing or cylindrical roller bearing, attached to the first side wall of the tub 230. The drum 230 may further comprise a plurality of lifters 234a-c substantially equally spaced apart on an inner surface of the circumferential wall in longitudinal direction for lifting and manipulating the articles of laundry during the washing cycle. As the drum 230 is supported inside the tub 220 on two positions that are spaced apart, design of the washing machine 200 is generally more robust than design of the washing machine 100 shown in Figs 1a) and 1b).

The motor 240 generally attached to the tub 220 comprises a rotatable motor shaft 241 having a motor wheel 242, for example a pulley, at a free end. The motor 240 may be an electric motor, for example an AC motor or a DC motor. For coupling the drum 230 to the motor 240, a belt 243, for example a toothed belt or V-belt, is mounted on the drum wheel 233 and the motor wheel 242. Thus, when the motor 240 is operated, the drum shaft 231 and the drum 230 are rotated together. Alternatively, the drum 230 may be connected directly to the motor 240, or coupled indirectly via a chain, a drive shaft, for example prop shaft or cardan shaft, gear wheels, for example cockwheels or pinion wheels, or a gearbox. Furthermore, the drum 230 may be driven directly by the motor; the drum 230 may, for example, act as a rotor of the motor.

The drum 230 may be accessed trough a flexible tub seal 222 attached around the opening on the top face 212 and to the tub 220. The lid 260 and the drum doors 235a-b are openable to allow the articles of laundry to be placed inside the drum 230 prior for commencement of the washing cycle and to be removed from the drum 230 after completion of the washing cycle. The washing machine 200 may further comprise a hinged tub lid (not shown) located in the opening of the tub 220 for sealing the tub 220 in a watertight manner during the washing cycle, and the tub seal 222 may not be necessary.

During the washing cycle, the washing machine 200 is cycled through a suitable sequence of operations selected from a plurality of available sequences of operations for processing the articles of laundry as already described above with reference to Figs 1a) and 1b).

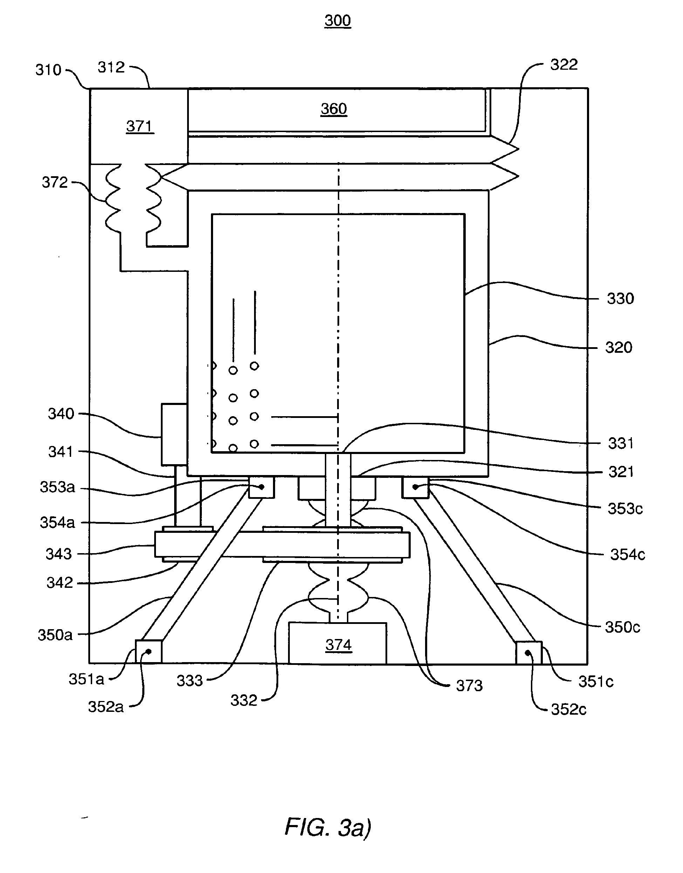

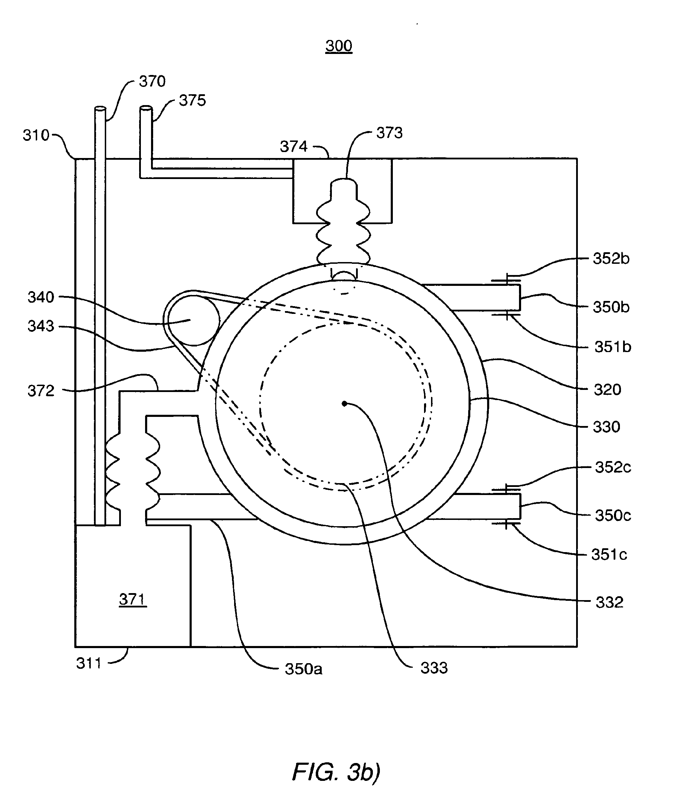

Fig. 3 a) shows a sectional schematic front view of a top-loading washing machine 300 with vertical drum 330. Fig. 3 b) shows a sectional schematic top view of the washing machine 300 shown in Fig. 3 a). The washing machine 300 shown Figs 3 a) and 3 b) is yet another typical environment wherein the invention is useful and desirable.

The washing machine 300 comprises an outer casing 310, a substantially cylindrical tub 320 vertically suspended inside the outer casing 310 by means of a plurality of vibration dampers 350a-c and generally a plurality of springs (not shown) and comprising in a substantially upward direction an opening, for containing washing water, a perforated substantially cylindrical drum 330 rotatably mounted inside the tub 320 for containing and manipulating articles of laundry (not shown), a motor 340 for driving the drum 330, and a hinged lid 360 located in an opening on a top face 311 of the outer casing 310 for sealing the tub 320 in a substantially watertight manner during a washing cycle to be carried out by the washing machine 300.

The washing machine 300 generally further comprises a water supply hose 370 for receiving fresh water, a detergent container 371, for example detergent drawer, generally located in a front face 311 of the outer casing 310 or the lid 360 and coupled to the water supply hose 370 and further via a flexible water supply bellow 372 to an inlet hole of the tub 320 for receiving detergent and mixing the detergent with the fresh water to washing water, and a waste water pump 374 coupled via flexible waste water bellow 373 to an outlet hole of the tub 320 and further to a waste water hose 375 for discharging waste water. The waste water pump 374 may be an electric pump, for example an AC pump or a DC pump.

The washing machine 300 generally further comprises a balancing weight (not shown). The balancing weight may be attached to the tub 320 or the drum 330.

The washing machine 300 generally further comprises a user interface (not shown) comprising an input, for example a switch or dial, or an output, for example a display, or a combination thereof. The user interface may, for example, be located on the front face 311 or on a panel attached to a rear portion of a top face 312 of the outer casing 310.

Each of the plurality of vibration dampers 350a-c may be pivotably attached to the outer casing 310, for example, by means of one of a plurality of casing-side brackets 351a-c part of or attached, for example welded, to the outer casing 310 and one of a plurality of casing-side bolts 352a-c, and resiliently attached to the tub 320, for example, by means of one of a plurality of tub-side brackets 353a, 353c attached to the tub 320 and one of a plurality of tub-side bolts 354a, 354c.

The drum 330 is, in this embodiment vertically, rotatable about a central axis 332. The drum 330 comprises a circumferential wall, that is shell, generally perforated for circulating and draining washing water and comprising a bottom wall. The drum 330 is, at the bottom wall of the drum 330, fixedly coupled to an end of a drum shaft 331 extending through a bottom wall of the tub 330, being rotatably supported by a bearing 321, for example spherical roller bearing or cylindrical roller bearing, attached to the bottom wall of the tub 330. The drum 330 may further comprise a plurality of lifters (not shown) substantially equally spaced apart on an inner surface of the circumferential wall in longitudinal direction for lifting and manipulating the articles of laundry during the washing cycle. As the drum 330 is supported inside the tub 320 substantially at the axis 332, design of the washing machine 300 is generally more robust than design of the washing machine 100 shown in Figs 1a) and 1b), but less robust than design of the washing machine 200 shown in Figs 2a) and 2b).

The motor 340 generally attached to the tub 320 comprises a rotatable motor shaft 341 having a motor wheel 342, for example a pulley, at a free end. The motor 340 may be an electric motor, for example an AC motor or a DC motor. For coupling the drum 330 to the motor 340, a belt 343, for example a toothed belt or V-belt, is mounted on the drum wheel 333 and the motor wheel 342. Thus, when the motor 340 is operated, the drum shaft 331 and the drum 330 are rotated together. Alternatively, the drum 330 may be connected directly to the motor 340, or coupled indirectly via a chain, a drive shaft, for example prop shaft or cardan shaft, gear wheels, for example cockwheels or pinion wheels, or a gearbox. Furthermore, the drum 330 may be driven directly by the motor; the drum 330 may, for example, act as a rotor of the motor.

The drum 330 may be accessed trough a flexible tub seal 322 attached around the opening on the top face 312 and to the tub 320. The lid 360 is openable to allow the articles of laundry to be placed inside the drum 330 prior for commencement of the washing cycle and to be removed from the drum 330 after completion of the washing cycle. The washing machine 300 may further comprise a hinged tub lid (not shown) located in the opening of the tub 320 for sealing the tub 320 in a watertight manner during the washing cycle, and the tub seal 322 may not be necessary.

During the washing cycle, the washing machine 300 is cycled through a suitable sequence of operations selected from a plurality of available sequences of operations for processing the articles of laundry as already described above with reference to Figs 1a) and 1b).

Figs 4 a) and b) show a perspective view and a partial sectional view of a balancing device 400 according to an embodiment of the invention, respectively.

Figs 4 a) and b) show a balancing device 400 having a rotational axis 420. The balancing device 400 comprises a vessel 410, 450a-b comprising a circumferential outer wall 410, a first side wall 450a and a second side wall 450b. The balancing device 400 may be attached to a drum, drum wheel or shaft of a rotary system. The balancing device 400 may be manufactured separately and independently from the rotary system, and manufacturing may be modularized, distributed or sourced out. For upgrading or re-fitting, the balancing device 400 may be added to a conventional rotary system. Alternatively, the balancing device 400 may form a part of the drum, drum wheel or shaft. The balancing device 400 comprises a substantially circular, that is annular, chamber 490 with a circumferential balancing area 430. Accordingly, the side walls 450a-b may be substantially circular or ring-shaped. Alternatively, the chamber 490 may be formed by a plurality of convex segments, and the segments may be identical.

The chamber 490 is partially filled with an amount of a thixotropic balancing substance 440 preferably distributed on the circumferential balancing area 430, such as a thixotropic tyre balancing composition disclosed in EP patent application 0 281 252 and corresponding US patent 4,867,792, having a yield stress value between 1 Pa and 260 Pa and being capable of balancing tyres by being able to flow under the influence of the vibrations induced when a heavy spot on the tyre hits the road surface. Alternatively, the thixotropic balancing substance 440 may have a yield stress value greater than 2 Pa. However, owing to the lower yield stress value, a lower rotational acceleration may be required, especially if the axis 420 is not in a vertical position. Thus, the thixotropic balancing substance 440 may have a yield stress value between approximately 1 Pa and approximately 400 Pa, for example between approximately 2 Pa and approximately 260 Pa, such as approximately 30 Pa.

Rheological properties of a balancing substance are its Critical Yield Stress (CYS) and Elastic (Storage) Modulus (G'), both measured in the linear visco-elastic region, as well as its Yield Stress as determined in stress growth measurements and the relationship between its storage modulus (G') and its loss modulus (G"), measured by a frequency sweep.

Storage modulus (G') is a measure of the strength of the substance, that is the strength and the number of bonds between the molecules of the gel former.

Loss modulus (G") is a measure of a substance's ability to dissipate energy in the form of heat.

The relationship between G' and G" as measured in a frequency sweep is a structural characterization of a substance. The cross-over frequency is the frequency at which G" becomes greater than G'.

Of equal importance as the visco-elastic properties is a long term stability of the balancing substance in service, the performance at various temperatures of the substance, and the chemical inertness of the substance.

A balancing substance should remain functional during the life time of the balancing system and under the various conditions, in particular within a temperature range from approximately -50 °C or -30 °C to +90 °C.

Furthermore, the balancing substance must not have any harmful effect on the balancing system and environment and should be disposable or recyclable.

In more detail, the thixotropic balancing substance 440 may be a balancing gel comprising two components, namely, a base liquid and a gel former, and preferably fulfilling minimum criteria comprising, the regard to rheology, a storage modulus (G') between approximately 100 Pa and approximately 5000 Pa, a cross-over frequency (G" > G') between approximately 1 Hz and approximately 40 Hz and a critical yield stress value greater than approximately 1 Pa; with regard to volatility, an evaporation loss of less than approximately 6 % by weight after 10 hours at 99 °C; a pour point of the base liquid lower than approximately -15 °C according to the Standard Test Method for Pour Point of Petroleum Products, ASTM D97; with regard to separation stability, a separation of the base liquid of less than approximately 20 % by weight after 12 hours at 300 000 x g and 25 °C; and, with regard to chemical reactivity, substantial inertness, such as non-corrosiveness to metals and no effect on polymers, such as rubber. The balancing gel typically comprises, by weight, between approximately 75 % and approximately 99 %, for example between approximately 85 % and approximately 97 %, such as approximately 95 % of the base liquid, and, correspondingly, between approximately 1 % and approximately 25 %, for example between approximately 3 % and approximately 15 %, such as approximately 5 % of the gel former. The balancing gel may further comprise, preferably in minor amounts, a corrosion inhibitor, an anti-oxidant, a dye or a combination thereof.

The base liquid may, for example, comprise a polyalkylene glycol (PAG), such as a polypropylene glycol (PPG) or a polyethylene glycol (PEG); a combination, that is a mixture, of PAGs, such as a combination of a PPG and a PEG; a copolymer of ethylene oxide and propylene oxide; or a combination thereof.

The base liquid may comprise an alcohol-(ROH-)started polymer of oxypropylene groups having a generalized formula:

$$RO\text{-}[CH(CH_3)CH_2\text{-}O\text{-}]_mH, \qquad (1)$$

where R is hydrogen or an alkyl group, having one terminal hydroxyl group and being water-insoluble, such as products with a variety of molecular weights and viscosities marketed by DOW Chemical Company (www.dow.com) under the trade mark UCON LB Fluids.

The base liquid may, alternatively or additionally, comprise an alcohol-(ROH-)started linear random copolymer of ethylene oxide and propylene oxide having a generalized formula:

$$RO\text{-}[CH(CH_3)CH_2\text{-}O\text{-}]_m[CH_2\text{-}CH_2\text{-}O\text{-}]_nH, \qquad (2)$$

where R is hydrogen or an alkyl group.

The base liquid may, alternatively or additionally, comprise an alcohol-(ROH-)started random copolymer of ethylene oxide and propylene oxide preferably comprising approximately equal amounts, that is approximately 50 %, by weight of oxyethylene groups and oxypropylene groups, having one terminal hydroxyl group and being water-soluble at ambient temperature, that is at temperatures below approximately 40 °C, such as products with equal amounts by weight of oxyethylene groups and oxypropylene groups and with a variety of molecular weights and viscosities marketed by DOW Chemical Company under the trade mark UCON 50-HB Fluids. For example, the base liquid may, alternatively or additionally, comprise a butanol-started random copolymer of ethylene oxide and propylene oxide comprising equal amounts by weight of oxyethylene groups and oxypropylene groups with a numbered average molecular weight of 3930, a viscosity of approximately 1020 cSt at 40 °C and a viscosity grade of approximately 1000 according to ISO 3448, such as a product marketed by DOW Chemical Company under the trade mark UCON 50-HB-5100.

The base liquid may, alternatively or additionally, comprise a diol-started random copolymer of ethylene oxide and propylene oxide preferably comprising approximately 75 % by weight oxyethylene groups and, correspondingly, approximately 25 % by weight oxypropylene groups, having two terminal hydroxyl groups (R = H) and being water-soluble at temperatures below approximately 75 °C, such as products with a variety of molecular weights and viscosities marketed by DOW Chemical Company under the trade mark UCON 75-H Fluids. For example, the base liquid may, alternatively or additionally, comprise a diol-started random copolymer of ethylene oxide and propylene oxide comprising 75 % by weight oxyethylene groups and 25 % by weight oxypropylene groups with a numbered average molecular weight of 6950 and a viscosity of approximately 1800 cSt at 40 °C, such as a product marketed by DOW Chemical Company under the trade mark UCON 75-H-9500.

The base liquid may, alternatively or additionally, comprise an alcohol-(ROH-)started random copolymer of ethylene oxide and propylene oxide preferably comprising approximately 40 % by weight of oxyethylene groups and, correspondingly, approximately 60 % by weight oxypropylene groups and being water-soluble, such as products with a variety of molecular weights and viscosities marketed by DOW Chemical Company under the trade mark SYNALOX 40. For example, the base liquid may, alternatively or additionally, comprise an alcohol-started random copolymer of ethylene oxide and propylene oxide comprising 40 % by weight of oxyethylene groups and 60 % by weight oxypropylene groups with a numbered average molecular weight of 5300, a viscosity of 1050 cSt at 40 °C and a viscosity grade of approximately 1000 according to ISO 3448 such as a product marketed by DOW Chemical Company under the trade mark SYNALOX 40-D700.

The base liquid may, alternatively or additionally, comprise a diol-started random copolymer of ethylene oxide and propylene oxide preferably comprising approximately 50 % by weight of oxyethylene and, correspondingly, approximately 50 % by weight oxypropylene groups with a kinematic viscosity of 960 - 1160 cSt (or mm$^2$/s) at 40 °C ASTM D445 such as a product marketed by DOW Chemical Company under the trade mark SYNALOX 50-D700.

The gel former may comprise fumed silica, for example hydrophobic silica or hydrophilic silica, preferably having a BET (Brunauer, Emmett, Teller) surface between approximately 50 m$^2$/g and approximately 400 m$^2$/g, for example a hydrophilic fumed silica having a BET surface of 300 m$^2$/g, such as a product marketed by Evonik Industries (www.evonik.com) under the trade mark Aerosil A300.

The gelling effect of the gel formers on the oils is accomplished by the formation of a network of the molecules of the gel former through hydrogen bonding via hydroxy groups or via van der Waals attraction between segments molecules of the gel former. The number and the strength of these bonds determines the gel strength, and the ability of the gel to support a load (critical yield stress).

The thixotropic balancing substance 338a may be a balancing gel comprising a balancing gel composition comprising

1) 85 to 97 % by weight of a glycol ether component comprising one or more ethylene/propylene glycol copolymer ethers of the general formula (I) or the general (II) or mixtures thereof

$$R-O\{[CH(CH3)CH2-O-]m[CH2-CH2-O-]n\}H \qquad (I)$$

$$R1-(O-\{[CH(CH3)CH2-O-]m[CH2-CH2-O-]n\}H)2 \qquad (II)$$

wherein R is hydrogen or an alkyl group of 2-8 carbon atoms; R1 is an alkylene moiety of 2-8 carbon atoms in which the two substituents are not carried on the same carbon atom; m is the mole percentage of propylene glycol in the ethylene/propylene glycol copolymer moiety or moieties; and n is the mole percentage of ethylene glycol in the ethylene/propylene glycol copolymer moiety or moieties, wherein the ratio n:m is in the range from 35:65 to 80:20; each glycol copolymer compound having a number average molecular weight in the range of 2000-10000; and
2) 3 to 15 % by weight of a fumed silica gel former; said balancing composition being visco-elastic and having a storage modulus (G') between 1500 Pa and 5000 Pa at 22 °C, a loss modulus (G") smaller than the storage modulus up to a cross-over frequency of 10-40 Hz, and a Critical Yield Stress exceeding 2 Pa.

The number average molecular weight of the glycol ether component(s) may be in the range of 3000-10000. The ratio n:m may be in the range from 35:65 to 80:20, preferably in the range from 40:60 to 75:22, in particular from 40:60 to 60:40, such as 50:50. The fumed silica gel former may be a hydrophilic type fumed silica having a BET surface area of from 90 to 400 m$^2$/g, preferably from 200 to 300 m$^2$/g; or the fumed silica gel former is a hydrophobized type fumed silica having has a BET surface area of from 50 to 300 m$^2$/g, preferably from 250 to 350 m$^2$/g; or mixtures of such hydrophilic and hydrophobized type fumed silica gel formers. The glycol ether component(s) may exhibit a Viscosity Grade determined according to ISO3448 of above 500, preferably in the range of 800-1200.

The compositions of the invention are typically made by mixing together the ingredients, if necessary under slight heating to below approximately 40 °C.

Using base liquids and gel formers as described above, a series of exemplary balancing substances have been prepared, and evaluated in field tests using a model helicopters as will be described below. The compositions are shown in Table 1.

Table 1: Balancing Substance Formulations (in % by weight)

| Composition # | Aerosil A300 | UCON 75-HB-9500 | UCON 50-HB-5100 | SYNALOX D50-700 |
|---|---|---|---|---|
| 1 | 4 | 0 | 96 | 0 |
| 2 | 4 | 0,5 | 95,5 | 0 |
| 3 | 4 | 0 | 0 | 96 |
| 4 | 4 | 0,5 | 0 | 95,5 |
| 5 | 5 | 0 | 95 | 0 |
| 6 | 5 | 0,5 | 94,5 | 0 |
| 7 | 5 | 0 | 0 | 95 |
| 8 | 5 | 0,5 | 0 | 94,5 |
| 9 | 6 | 0 | 94 | 0 |
| 10 | 6 | 0,5 | 93,5 | 0 |
| 11 | 6 | 0 | 0 | 94 |
| 12 | 6 | 0,5 | 0 | 93,5 |

The amount of the thixotropic balancing substance 440 may be between approximately 0.01 kg and approximately 20 kg, for example between approximately 0.1 kg and approximately 10 kg, preferably between approximately 0.5 kg and approximately 5 kg, such as approximately 1 kg. The chamber 490 may be filled with the amount of the thixotropic balancing substance 440 to between approximately 1 % and approximately 90 %, for example between approximately 10 % and approximately 80 %, preferably between approximately 25 % and approximately 75 %, such as approximately 50 %.

The balancing device 400 utilizes vibration in the rotary system for changing the thixotropic balancing substance 440 from a relaxed, rather solid state, wherein the thixotropic balancing substance 440 is substantially fixed in relation to the chamber 490, into an agitated, rather fluid state, wherein the thixotropic balancing substance 440 is substantially movable in relation to the chamber 490; and, independent from spatial orientation, a rotational force for distributing the thixotropic balancing substance 440 within the chamber 490. Hence, owing to the vibration, the thixotropic balancing substance 440 distributes itself in the chamber 490 to reduce or minimize the vibration. Among other things, a distance of the chamber 490 with the thixotropic balancing substance 440 therein from the axis 420, that is a radius R, determines size of this effect according to the moment of inertia. A centre of rotation (CofR) of the rotary system moves towards an ideal CofR, and the balancing device 400 compensates for shift of the CofG. Among other things, vibration and noise are reduced.

The chamber 490 may allow, owing to a larger diameter, for an efficient use of the thixotropic balancing substance 440, and the amount of the thixotropic balancing substance 440 may be reduced.

A surface area of the chamber 490, for example the circumferential balancing area 430, may comprise a nanostructure. The nanostructure may be formed by a material, such as a varnish, comprising nanoparticles, or imprinted on the surface area. The nanostructure may be provided by distributing, for example spraying and drying or hardening, the material on the surface area. Drying or hardening may comprise curing nanomaterial, that is the nanovarnish, using ultra-violet (UV) radiation, that is UV light, for example. The material, that is the nanomaterial, may provide the nanostructure as nanosubstrate. The nanomaterial may comprise two or more components, for instance a first component A, for example a resin, and a second component B, for example a hardener. The nanomaterial may be a two-component material. The nanomaterial, that is the first component A and the second component B, may react by chemical crosslinking or polymerisation. The chemical crosslinking reaction may start immediately or soon after mixing the first component A and the second component B. The nanostructure may increase movability of the thixotropic balancing substance 440 on the surface area, and the effect of balancing may be improved.

The chamber 490 may have an outer diameter of between approximately 0.1 m and approximately 10 m, for example between approximately 0.2 m and approximately 1.5 m, preferably between approximately 0.5 m and approximately 1 m, such as approximately 0.75 m, and a length of between approximately 0.01 m and approximately 2 m, for example between approximately 0.02 m and approximately 1 m, preferably between approximately 0.05 m and approximately 0.5 m, such as approximately 0.1 m.

The vessel 410, 450a-b may comprise metal, for example steel, preferably stainless steel, aluminium or copper, or composite material, for example glas-fibre-reinforced material or carbon-fibre-reinforced material, or synthetic material, for example plastics or plexiglas. The vessel 410, 450a-b may be converted, moulded, for example injection-moulded, or extruded. The vessel 410, 450a-b may be expandable, flexible or deformable, simplifying handling, manipulation and locating the vessel 410, 450a-b in or on the rotary system. The vessel 410, 450a-b may be transparent or translucent, simplifying visual inspection of the chamber 490 with the thixotropic balancing substance 440 therein.

The balancing device 400 may further comprise a weight body (not shown) being in contact with the thixotropic balancing substance 440 and contributing to balancing of the rotary system. The weight body has, defined by a body size of the weight body, a body surface and a body weight, such that the weight body overcomes adhesion between the body surface and the thixotropic balancing substance 440 when the thixotropic balancing substance 440 is subjected to the vibration and changes into the agitated state. The body size ensures movability of the weight body in the chamber 490 with the thixotropic balancing substance 440 therein. The weight body may be a ball. The body size corresponds with a diameter of the ball. The diameter may be determined by a ratio between the body surface according to:

$$A = 4 \pi r^2, \qquad (3)$$

where r is a radius of the ball, accounting for surface structure, i. e. roughness, and adhesion, and a body volume according to:

$$V = 4/3 \pi r^3, \qquad (4)$$

where r is a radius of the ball, accounting for body density and body weight. For increasing radius r, the volume, and therefore body weight, increases faster than the body surface, and movability of the weight body in the chamber 490 increases. The weight body may comprise metal, for example steel, such as stainless steel.

An article processing machine comprising a balancing device according to embodiments of the invention may further comprise means for controlling the rotary system, comprising, for example, a sensor for collecting data indicative of conditions of the rotary system, including, for example, rotational speed and vibration, and a processor for analysing the collected data and determining, from the analysed data, data for controlling the rotary system. The means for controlling preferably takes into account characteristics of the balancing device; for example, during acceleration of the rotary system, the means for controlling allows the thixotropic balancing substance to flow and settle down at a location or locations in the balancing device, such that vibration owing to imbalance is reduced or minimized

Figs 4 c) and d) show partial sectional views of variations of the balancing device according to the embodiment shown in Figs 4 a) and b).

Fig. 4 c) shows a balancing device 400 wherein the first side wall 450a is circular. The balancing device 400 may be coupled to the drum, drum wheel or shaft via the first side wall 450a.

Fig. 4 d) shows a balancing device 400 further comprising spokes 465a-b or a disc (not shown). The balancing device 400 may be coupled to the shaft via the spokes 465a-b or disc. The spokes 465a-b or disc may be positioned substantially centrally between the side walls 450a-b and extend from the axis 420 to the circumferential balancing area 430 on the circumferential outer wall 410.

Alternatively, the spokes 465a-b or disc may be positioned at another position between or on the side walls 450a-b. The two or more spokes 465a-b may be evenly spaced apart from each other, and the vessel and spokes 465a-b may be balanced with regards to the axis 420.

Figs 4 e) to k) show sectional views of a plurality of profiles of the balancing device according to the embodiment shown in Figs 4 a) and b).

Fig. 4 e) shows an annular balancing device 400e with the chamber 490 having a rectangular cross section. Owing to this cross section, the thixotropic balancing substance 440 may operate most effective, and the amount of the thixotropic balancing substance 440 may be reduced.

Fig. 4 f) shows an annular balancing device 400f with the chamber 490 having a semi-elliptical cross section.

Fig. 4 g) shows an annular balancing device 400g with the chamber 490 having a semi-circular cross section.

Fig. 4 h) shows an annular balancing device 400h with the chamber 490 having a trapezoidal cross section. Owing to this cross section, the thixotropic balancing substance 440 may operate most effective, and the amount of the thixotropic balancing substance 440 may be reduced.

Fig. 4 i) shows an annular balancing device 400i with the chamber 490 having an M-shaped cross section or V-shaped cross section (not shown). Owing to this cross section, the balancing device 400i may form part of the drum wheel of the rotary system, coupling the rotary system via a correspondingly M-shaped or V-shaped belt to a motor, and provide for a dual functionality.

Fig. 4 j) shows an annular balancing device 400j with the chamber 490 having a inversely semi-elliptical cross section. Owing to this cross section, the balancing device 400j may form part of the drum wheel of the rotary system and provide for a dual functionality.

Fig. 4 k) shows an annular balancing device 400k with the chamber 490 having a inversely semi-circular cross section. Owing to this cross section, the balancing device 400k may form part of the drum wheel of the rotary system and provide for a dual functionality.

Alternatively, the annular balancing device 400 may have a bell-shaped cross section. Owing to this cross section, the thixotropic balancing substance 440 may operate most effective, and the amount of the thixotropic balancing substance 440 may be reduced. Another cross section may be quadratic, for example.

Fig. 5 shows a cross-sectional view of the balancing device according to the embodiment shown in Figs 4 a) and b).

Fig. 5 shows a balancing device 500 having a rotational axis 520. The balancing device 500 comprises a vessel 510, 550 comprising a circumferential outer wall 510 and a side wall 550. The balancing device 500 comprises a substantially annular chamber 590 with a circumferential balancing area 530. The chamber 590 is partially filled with an amount of a thixotropic balancing substance 540. The balancing device 500 may be attached to a drum, drum wheel or shaft of a rotary system. The rotary system forms part of an article processing machine, such as a washing machine 100; 200; 300, and comprises articles of laundry 570. The articles of laundry 570 are unevenly distributed in the rotary system and have shifted a centre of gravity 580 of the rotary system away from the rotational axis and geometrical centre 520.

As the rotary system rotates about its rotational axis 520, the shifted centre of gravity 580 results in a vibration, and the thixotropic balancing substance 540 liquefies owing to the vibration and flows, owing to rotational force, along the circumferential balancing area 530 of the chamber 590. The thixotropic balancing substance 540 distributes itself along the circumferential balancing area 530, such that the centre of gravity 580 moves to the rotational axis 520 and the vibration caused by the articles of laundry 570 is reduced. When the vibration is reduced, the thixotropic balancing substance 540 maintains its position and solidifies. As can be seen, the thixotropic balancing substance 338b has accumulated opposite the articles of laundry 570 with respect to the rotational axis 520.

Figs 6 a) and b) show a perspective view and a partial sectional view of a balancing device according to another embodiment of the invention, respectively. This is the best mode presently known for carrying out the invention.

Figs 6 a) and b) show a balancing device 600 having a rotational axis 620. The balancing device 600 comprises a vessel 610, 650a-b, 670 comprising a circumferential outer wall 610, a first side wall 650a, a second side wall 650b and a circumferential inner wall 670. The balancing device 600 may be attached to a drum, drum wheel or shaft of a rotary system, as described above with reference to Figs 4 a) and b). The balancing device 600 comprises a closed substantially circular, that is annular, chamber 690 with a circumferential balancing area 630. The chamber 690 may be airtight. The side walls 650a-b may be substantially circular or ring-shaped. Alternatively, the chamber 690 may be formed by a plurality of convex segments, and the segments may be identical.

The chamber 690 is partially filled with an amount of a thixotropic balancing substance 640 preferably distributed on the circumferential balancing area 630, as described above with reference to Figs 4 a) and b).

The balancing device 600 utilizes vibration in the rotary system for changing the thixotropic balancing substance 640 from a relaxed state into an agitated state, and a rotational force for distributing the thixotropic balancing substance 640 within the chamber 690, as described above with reference to Figs 4 a) and b).

The chamber 690 may allow, owing to a larger diameter, for an efficient use of the thixotropic balancing substance 640, and the amount of the thixotropic balancing substance 640 may be reduced.

A surface area of the chamber 690, for example the circumferential balancing area 630, may comprise a nanostructure, as described above with reference to Figs 4 a) and b).

The chamber 690 may have an outer diameter of between approximately 0.1 m and approximately 10 m, as described above with reference to Figs 4 a) and b).

The vessel 610, 650a-b, 670 may comprise metal, composite material or synthetic material, as described above with reference to Figs 4 a) and b). Conversion of the vessel 610, 650a-b, 670 may comprise cutting a piece of tube comprising two ends from an endless tube to length and joining, for example gluing together, the two ends.

The vessel 610, 650a-b, 670 may further comprise an opening for filling the amount of a thixotropic balancing substance 640 into the chamber 690. The opening may be located on the first side wall 650a, second side wall 650b or inner circumferential wall 670. The opening may be sealed by a seal 680, for example an adhesive pad, a membrane, such as a self-sealing membrane, a plug, such as a snap-in plug, a screw or a valve, for protecting the chamber 690 from environmental effects. Alternatively, the vessel 610, 650a-b, 670 may be formed of a plurality of parts, and the parts may be dismountable.

The balancing device 600 may further comprise a weight body, as described above with reference to Figs 4 a) and b).

Figs 6 c) and d) show partial sectional views of variations of the balancing device according to the embodiment shown in Figs 6 a) and b).

Fig. 6 c) shows a balancing device 600 wherein the first side wall 650a is circular. The balancing device 600 may be coupled to the drum, drum wheel or shaft via the first side wall 650a.

Fig. 6 d) shows a balancing device 600 further comprising spokes 665a-b or a disc (not shown). The balancing device 600 may be coupled to the shaft via the spokes 665a-b or disc. The spokes 665a-b or disc may be positioned substantially centrally between the side walls 650a-b and extend from the axis 620 to the circumferential inner wall 670. Alternatively, the spokes 665a-b or disc may be positioned at another position between or on the side walls 650a-b. The two or more spokes 665a-b may be evenly spaced apart from each other, and the vessel and spokes 665a-b may be balanced with regards to the axis 620.

Figs 6 e) to n) show sectional views of a plurality of profiles of the balancing device according to the embodiment shown in Figs 6 a) and b).

Fig. 6 e) shows an annular balancing device 600e with the chamber 690 having a rectangular cross section. Owing to this cross section, the thixotropic balancing substance 640 may operate most effective, and the amount of the thixotropic balancing substance 640 may be reduced.

Fig. 6 f) shows an annular balancing device 600f with the chamber 690 having an elliptical cross section.

Fig. 6 g) shows an annular balancing device 600g with the chamber 690 having a semi-circular cross section and a straight circumferential inner wall.

Fig. 6 h) shows an annular balancing device 600h with the chamber 690 having a semi-circular cross section.

Fig. 6 i) shows an annular balancing device 600i with the chamber 690 having a semi-circular cross section and a straight circumferential outer wall. Owing to this cross section, the thixotropic balancing substance 640 may operate most effective, and the amount of the thixotropic balancing substance 640 may be reduced.

Fig. 6 j) shows an annular balancing device 600j with the chamber 690 having a trapezoidal cross section. Owing to this cross section, the thixotropic balancing substance 640 may operate most effective, and the amount of the thixotropic balancing substance 640 may be reduced.

Fig. 6 k) shows an annular balancing device 600k with the chamber 690 having a triangular cross section. Owing to this cross section, the thixotropic balancing substance 640 may operate most effective, and the amount of the thixotropic balancing substance 640 may be reduced.

Fig. 6 l) shows an annular balancing device 600l with the chamber 690 having an M-shaped cross section or V-shaped cross section (not shown). Owing to this cross section, the balancing device 600l may form part of the drum wheel of the rotary system, coupling the rotary system via a correspondingly M-shaped or V-shaped belt to a motor, and provide for a dual functionality.

Fig. 6 m) shows an annular balancing device 600m with the chamber 690 having a inversely semi-elliptical cross section. Owing to this cross section, the balancing device 600m may form part of the drum wheel of the rotary system and provide for a dual functionality.

Fig. 6 n) shows an annular balancing device 600n with the chamber 690 having a inversely semi-circular cross section. Owing to this cross section, the balancing device 600n may form part of the drum wheel of the rotary system and provide for a dual functionality.

Alternatively, the annular balancing device 600 may have a bell-shaped cross section. Owing to this cross section, the thixotropic balancing substance 640 may operate most effective, and the amount of the thixotropic balancing substance 640 may be reduced. Other cross sections may be quadratic, hexagonal and oval, for example.

Figs 7 a) and b) show a perspective view and a partial sectional view of a balancing device according to yet another embodiment of the invention, respectively.

Figs 7 a) and b) show a balancing device 700 having a rotational axis 720. The balancing device 700 comprises a vessel 710, 750a-b comprising a circumferential outer wall 710, a first side wall 750a and a second side wall 750b. The balancing device 700 may be attached to a drum, drum wheel or shaft of a rotary system, as described above with reference to Figs 4 a) and b). The balancing device 700 comprises a closed substantially circular, that is cylindrical, chamber 790 with a circumferential balancing area 730. The chamber 790 may require less space and may be integrated into the rotary system. The chamber 790 may be airtight. The side walls 750a-b may be substantially circular. Alternatively, the circumferential balancing area 730 may be formed by a plurality of convex segments, and the segments may be identical.

The chamber 790 is partially filled with an amount of a thixotropic balancing substance 740 preferably distributed on the circumferential balancing area 730, as described above with reference to Figs 4 a) and b).

The balancing device 700 utilizes vibration in the rotary system for changing the thixotropic balancing substance 740 from a relaxed state into an agitated state, and a rotational force for distributing the thixotropic balancing substance 740 within the chamber 790, as described above with reference to Figs 4 a) and b).

A surface area of the chamber 790, for example the circumferential balancing area 730, may comprise a nanostructure, as described above with reference to Figs 4 a) and b).

The chamber 790 may have an outer diameter of between approximately 0.1 m and approximately 10 m, as described above with reference to Figs 4 a) and b).

The vessel 710, 750a-b may comprise metal, composite material or synthetic material, as described above with reference to Figs 4 a) and b).

The vessel 710, 750a-b, 770 may further comprise an opening (not shown) for filling the amount of a thixotropic balancing substance 740 into the chamber 790. The opening may be located on the first side wall 750a or second side wall 750b. The opening may be sealed by a seal (not shown), for example an adhesive pad, a membrane, such as a self-sealing membrane, a plug, such as a snap-in plug, a screw or a valve, for protecting the chamber 690 from environmental effects. Alternatively, the vessel 710, 750a-b may be formed of a plurality of parts, and the parts may be dismountable.

The balancing device 700 may further comprise a weight body, as described above with reference to Figs 4 a) and b).

Figs 7 c) to i) show sectional views of a plurality of profiles of the balancing device according to the embodiment shown in Figs 7 a) and b).

Fig. 7 c) shows an annular balancing device 700c with the chamber 790 having a straight shell.

Fig. 7 d) shows an annular balancing device 700d with the chamber 790 having an elliptically convex shell.

Fig. 7 e) shows an annular balancing device 700e with the chamber 790 having a circularly convex shell.

Fig. 7 f) shows an annular balancing device 700f with the chamber 790 having a broadened straight shell.

Fig. 7 g) shows an annular balancing device 700g with the chamber 790 having an M-shaped shell or V-shaped shell (not shown). Owing to this shell, the balancing device 700g may form part of the drum wheel of the rotary system, coupling the rotary system via a correspondingly M-shaped or V-shaped belt to a motor, and provide for a dual functionality.

Fig. 7 h) shows an annular balancing device 700h with the chamber 790 having an elliptically concave shell. Owing to this shell, the balancing device 700h may form part of the drum wheel of the rotary system and provide for a dual functionality.

Fig. 7 i) shows an annular balancing device 700i with the chamber 790 having an circularly concave shell. Owing to this shell, the balancing device 700i may form part of the drum wheel of the rotary system and provide for a dual functionality.

Figs 8 a) to d) show partial sectional views of variations of the balancing device according to the embodiments of the invention.

Fig. 8 a) shows a balancing device 800 having a rotational axis 820. The balancing device 800 comprises a vessel 810, 850a-b, 870 comprising a circumferential outer wall 810, a first side wall 850a, a second side wall 850b and a circumferential inner wall 870, and corresponds with the balancing device 600 described above with reference to Figs 6 a) to n). However, the balancing device 800 comprises a plurality of annular chambers 890a-c separated by partition walls, and the chambers 890a-c are arranged parallel to each other along the rotational axis 820. The chambers 890a-c may be isolated from each other, and each of the plurality of isolated chambers 890a-c may comprise a thixotropic balancing substance of a different amount or a different type. Alternatively, the chambers 890a-c may be coupled, for example connected, to each other and, thus, be in fluid communication with each other. The chambers 890a-c may be coupled via an opening or recess in the partition walls, or connected via a pipe or a tube, for example. Furthermore, the coupled chambers 890a-c may comprise extension chambers as described below with reference to Figs 13 a) and b). Thus, the balancing device 800 may provide for distributed balancing.

Fig. 8 b) shows a balancing device 800 having a rotational axis 820. The balancing device 800 comprises a vessel 810, 850a-b, 870 comprising a circumferential outer wall 810, a first side wall 850a, a second side wall 850b and a circumferential inner wall 870, and corresponds with the balancing device 600 described above with reference to Figs 6 a) to n). However, the balancing device 800 comprises a plurality of annular chambers 890a-b, and the chambers 890a-b are arranged concentrically to each other around the rotational axis 820. The chambers 890a-c may be isolated from each other, or coupled to each other, as described above with reference to Fig. 8 a).

Fig. 8 c) shows a balancing device 800 having a rotational axis 820. The balancing device 800 comprises a vessel 810, 850a-b comprising a circumferential outer wall 810, a first side wall 850a and a second side wall 850b, and corresponds with the balancing device 700 described above with reference to Figs 7 a) to i). However, the balancing device 800 comprises a plurality of cylindrical chambers 890a-c, and the chambers 890a-c are arranged parallel to each other along the rotational axis 820. The chambers 890a-c may be isolated from each other, or coupled to each other, as described above with reference to Fig. 8 a).

Fig. 8 d) shows a balancing device 800 having a rotational axis 820. The balancing device 800 comprises a vessel 810, 850a-b comprising a circumferential outer wall 810, a first side wall 850a and a second side wall 850b, and corresponds with the balancing device 700 described above with reference to Figs 7 a) to i). However, the balancing device 800 comprises a plurality of cylindrical chambers 890a-c, and the chambers 890a-c are arranged concentrically to each other around the rotational axis 820. The chambers 890a-c may be isolated from each other, or coupled to each other, as described above with reference to Fig. 8 a).

Figs 9 a) to c) show sectional views of a drum, indicating arrangement of the balancing device according to the embodiments of the invention at several locations in relation to the drum.

Fig. 9 a) shows a drum assembly of a rotary system 900a of a washing machine, such as a front-loading washing machine with horizontal drum, top-loading washing machine with horizontal drum or top-loading washing machine with vertical drum; a wash dryer; or a laundry dryer, for example a tumble dryer or and spin dryer. The drum assembly comprises a substantially cylindrical drum 910 being rotatable about an axis 920 in a substantially horizontal orientation, a substantially vertically orientation or any other spatial orientation. The drum 910 comprises a circumferential wall 930, that is a shell, being generally perforated for circulating and draining washing water and a first side wall 940a, and may further comprise a second side wall 940b. The second side wall 940b may be ring-shaped, or, for example in a top-loading washing machine with horizontal drum, circular. The drum assembly may further comprise a first drum shaft 950a. The shaft 950a may be coupled to said drum 910 at the first side wall 940a, extend through a side wall of a tub (not shown), be rotatably supported by a bearing (not shown) and rotatable about the axis 920. The drum assembly may further comprise, for example in the top-loading washing machine with horizontal drum, a second drum shaft 950b improving structural stability of the drum assembly. The drum assembly may further comprise a drum wheel (not shown).

The drum assembly further comprises an annular balancing device 960a, 970a comprising a chamber 990 being partially filled with an amount of a thixotropic balancing substance (not shown) and corresponding with the balancing device 600 described above with reference to Figs 6 a) to n).

As indicated in Fig. 9 a), the balancing device 960a may be located outside the drum 910. The outer balancing device 960a may be attached, for example clipped, tightly fitted, glued, riveted, snapped, soldered, springed, screwed, tensed or welded, to the drum 910. The chamber 990 is located onto the rotary system 900a, such that the rotary system 900a is balanced more efficiently. The balancing device 960a may fully extend along the circumferential wall 930, or partially as described below with reference to Fig. 9 b).

As also indicated in Fig. 9 a), the balancing device 970a may be located inside the drum 910. The inner balancing device 970a may be attached, for example clipped, tightly fitted, glued, riveted, snapped, soldered, springed, screwed, tensed or welded, to the drum 910. The chamber 990 is integrated into the rotary system 900a, in particular the drum 910, such that the balancing device 970a does not impact on overall dimensions of the drum 910. For upgrading or re-fitting, the balancing device 970a may be added to a conventional rotary system. The balancing device 970a may fully extend along the circumferential wall 930, or partially as described below with reference to Fig. 9 b).

Fig. 9 b) shows a drum assembly of a rotary system 900b, corresponding with the drum assembly described above with reference to Fig. 9 a).

The drum assembly further comprises an annular balancing device or a plurality of annular balancing devices 960a-h, 970a-f comprising a chamber 990 being partially filled with an amount of a thixotropic balancing substance (not shown) and corresponding with the balancing device 600 described above with reference to Figs 6 a) to n).

As indicated in Fig. 9 b), the annular balancing device 960a-h, 970a-f. The balancing device 960a-h may be located outside the drum 910, or the balancing device 970a-f may be located inside the drum 910. For example, balancing device 960a, 960g or 970a is located at a free top end of the vertical drum of the top-loading washing machine, such that the thixotropic balancing substance operates towards the top end of the drum, where an amplitude of the vibration may reach a maximum, and an effect of balancing may be maximized. The balancing device 960a-h, 970a-f may be attached to the drum 910, first side wall 940a, second side wall 940b, shaft 950a or second shaft 950b, and extends partially along the axis 920, for example along the circumferential wall 930.

The plurality of balancing devices 960a-h, 970a-f provides for a plurality of annular chambers 990 being arranged parallel to each other along the rotational axis 820, concentrically to each other around the rotational axis 820 or a combination thereof, as described above with reference to Figs 8 a) and b). The balancing devices 960a-h, 970a-f may be located next to each other or spaced apart.

Fig. 9 c) shows a drum assembly of a rotary system 900c, corresponding with the drum assembly described above with reference to Fig. 9 a).

The drum assembly further comprises a cylindrical balancing device or a plurality of cylindrical balancing devices 970a-f comprising a chamber 990 being partially filled with an amount of a thixotropic balancing substance (not shown) and corresponding with the balancing device 700 described above with reference to Figs 6 a) to i).

As indicated in Fig. 9 c), the balancing device 970a-b may be located inside the drum 910. The inner balancing device 970a-b may be attached, for example clipped, tightly fitted, glued, riveted, snapped, soldered, springed, screwed, tensed or welded, to the drum 910. The chamber 990 is integrated into the rotary system 900c, in particular the drum 910, such that the balancing device 970a-b does not impact on overall dimensions of the drum 910. For upgrading or re-fitting, the balancing device 970a-b may be added to a conventional rotary system. The balancing device 970a-b may partially extend along the circumferential wall 930, described above with reference to Fig. 9 b).

The plurality of balancing devices 970a-b provides for a plurality of annular chambers 990 being arranged parallel to each other along the rotational axis 820, as described above with reference to Figs 8 c) and d). The balancing devices 970a-b may be located next to each other or spaced apart. For example, the balancing device 970a-b are each located at the first side wall 940a and the second side wall 940b, respectively, of the horizontal drum of the top-loading washing machine.

Figs 10 a) and b) show sectional views of drum wheels comprising the balancing device according to the embodiments of the invention.

Fig. 10 a) shows a drum assembly of a rotary system 1000a of a washing machine, such as a front-loading washing machine with horizontal drum, top-loading washing machine with horizontal drum or top-loading washing machine with vertical drum; a wash dryer; or a laundry dryer, for example a tumble dryer or and spin dryer. The drum assembly may comprise a drum 1010 comprising a circumferential wall 1030 and a side wall 1040, an axis 1020 and a drum shaft 1050, and correspond with the drum assembly described above with reference to Fig. 9 a).

However, the drum assembly comprises a balancing drum wheel 1060 mounted on the shaft 1050 for coupling the drum assembly via a belt (not shown) and a motor wheel (not shown) to a motor (not shown). The balancing drum wheel 1060 may be coupled to the shaft 1050 via spokes 1065 or a disc, as described above with reference to Fig. 6 d). The balancing drum wheel 1060 may be attached, for example clipped, tightly fitted, glued, riveted, snapped, soldered, springed, screwed, tensed or welded, to or integrally formed with the shaft 1050. Furthermore, the balancing drum wheel 1060 forms an annular balancing device comprising a chamber 1090 being partially filled with an amount of a thixotropic balancing substance (not shown) and corresponding with the balancing device 600 described above with reference to Figs 6 a) to n). The annular balancing device is located away from the drum 1010 and outside a tub (not shown). Design of the rotary system may be more flexible, and the shaft provides for a dual functionality and may not impact on overall dimensions of the rotary system.

Fig. 10 b) shows a drum assembly of a rotary system 1000b, corresponding with the drum assembly described above with reference to Fig. 10 a).

However, the drum assembly comprises a balancing drum wheel 1060 mounted on the shaft 1050 for coupling the drum assembly via a belt (not shown) and a motor wheel (not shown) to a motor (not shown). The balancing drum wheel 1060 may be coupled to the shaft 1050 via a side wall, as described above with reference to Fig. 4 c). The balancing drum wheel 1060 may be attached, for example clipped, tightly fitted, glued, riveted, snapped, soldered, springed, screwed, tensed or welded, to or integrally formed with the shaft 1050. As indicated in Fig. 10 b), the side wall may comprise, at the axis 1020, a receiving member for receiving the shaft 1050. Furthermore, the balancing drum wheel 1060 forms a cylindrical balancing device comprising a chamber 1090 and corresponding with the balancing device 700 described above with reference to Figs 7 a) to i). The cylindrical balancing device is located away from the drum 1010 and outside a tub (not shown). Design of the rotary system may be more flexible, and the shaft provides for a dual functionality and may not impact on overall dimensions of the rotary system.

Figs 10 c) and d) show sectional views of other drum wheels indicating arrangement of the balancing device according to the embodiments of the invention in relation to the other drum wheels.

Fig. 10 c) shows a drum assembly of a rotary system 1000c, corresponding with the drum assembly described above with reference to Fig. 10 a).

However, the drum assembly comprises a drum wheel 1080 mounted on the shaft 1050 for coupling the drum assembly via a belt (not shown) and a motor wheel (not shown) to a motor (not shown). The drum wheel 1080 may be coupled to the shaft 1050 via spokes 1065 or a disc. The drum wheel 1080 may be attached, for example clipped, tightly fitted, glued, riveted, snapped, soldered, springed, screwed, tensed or welded, to or integrally formed with the shaft 1050. As indicated in Fig. 10 c), the spokes 1065 or disc may be connected, at the axis 1020, to a receiving member for receiving the shaft 1050. The drum assembly further comprises an annular balancing device 1070 or a plurality of annular balancing devices 1070 laterally coupled to the drum wheel 1080, comprising a chamber 1090 and corresponding with the balancing device 600 described above with reference to Figs 6 a) to n). The annular balancing device 1070 is located away from the drum 1010 and outside a tub (not shown). The annular balancing device 1070 may extend at least partially or substantially completely along the shaft 1050. For upgrading or re-fitting, the balancing device 1070 may be added to a conventional rotary system.

Fig. 10 d) shows a drum assembly of a rotary system 1000d comprising a drum wheel 1080 and corresponding with the drum assembly described above with reference to Fig. 10 c).

However, the drum assembly further comprises a cylindrical balancing device 1070 laterally coupled to the drum wheel 1080 opposite to the shaft 1050, comprising a chamber 1090 and corresponding with the balancing device 700 described above with reference to Figs 7 a) to i). The cylindrical balancing device 1070 is located away from the drum 1010 and outside a tub (not shown). For upgrading or re-fitting, the balancing device 1070 may be added to a conventional rotary system.

The drum assembly may further comprises an annular balancing device (not shown), as described above with reference to Fig. 10 c).

According to other embodiments of the invention, a balancing device is formed by a shaft being rotatable about an axis and forming part of a rotary system. The shaft comprises a chamber and corresponds with the balancing devices 600 and 700 described above with reference to Figs 6 a) to n) and 7 a) to i), respectively. Design of the rotary system may be more flexible, and the shaft provides for a dual functionality and may not impact on overall dimensions of the rotary system.

Fig. 11 a) shows a detailed sectional view of a drum, indicating arrangement of the balancing device according to the embodiments of the invention at a location on the drum.

Fig. 11 a) shows a drum assembly of a rotary system 1100a of a washing machine, such as a front-loading washing machine with horizontal drum, top-loading washing machine with horizontal drum or top-loading washing machine with vertical drum; a wash dryer; or a laundry dryer, for example a tumble dryer or and spin dryer. The drum assembly comprises a drum 1110 having a drum diameter and comprising a circumferential wall 1130 and a side wall 1140, and an axis 1120, and corresponds with the drum assembly described above with reference to Fig. 9 a).

The circumferential wall 1130 comprises a substantially circumferential recess 1135 or a plurality of substantially circumferential recesses 1135 being substantially perpendicular to the axis 1120 for at least partially or substantially completely receiving an annular balancing device 1160 at a location on the drum 1110. The annular balancing device 1160 comprises a chamber 1190 being partially filled with an amount of a thixotropic balancing substance (not shown), has a balancing device inner diameter and a balancing device cross section, and corresponds with the annular balancing device 600 described above with reference to Figs 6 a) to n). The recess 1135 may extend at least partially or substantially completely along the circumferential wall 1130.

The recess 1135 has a recess diameter being less than the drum diameter and a recess cross section, both of which substantially matching the balancing device inner diameter and the balancing device cross section, respectively. As indicated in Fig. 11 a), for a rectangular balancing device cross section, the recess cross section may also be rectangular. However, recess cross sections may be rectangular, quadratic, trapezoidal, triangular or V-shaped, elliptically concave or circularly concave, for example. As indicated in Fig. 11 a) as a first alternative, the recess 1135 may be situated at any position along the circumferential wall 1130, and the circumferential wall 1130 forms the recess 1135. As indicated in Fig. 11 a) as a second alternative, the recess 1135 may be situated at a position at the side wall 1140, and the side wall 1140 may form part of the recess 1135. Owing to the recess 1135, the drum 1110 may have a higher structural stability and the annular balancing device 1160 may be more securely located on the drum 1110. Furthermore, the annular balancing device 1160 may be integrated into the rotary system 1100a, in particular the drum 1110, such that the annular balancing device 1160 does not impact on overall dimensions of the rotary system 1100a.

According to other embodiments of the invention, the recess 1135 may be formed by two circumferential ring walls (not shown) being arranged on a substantially straight circumferential wall 1130 substantially perpendicularly to the axis 1120.

Figs 11 b) and c) show detailed sectional views of a drum, indicating arrangement of the balancing device according to the embodiments of the invention at a location in the drum.

Fig. 11 b) shows a drum assembly of a rotary system 1100b and corresponding with the drum assembly described above with reference to Fig. 11 a).

The circumferential wall 1130 comprises a substantially circumferential recess 1135 or a plurality of substantially circumferential recesses 1135 being substantially perpendicular to the axis 1120 for at least partially or substantially completely receiving a balancing device 1160 at a location in the drum 1110. The balancing device 1160 comprises a chamber 1190 being partially filled with an amount of a thixotropic balancing substance (not shown), has a balancing device outer diameter and a balancing device cross section, and corresponds with the annular balancing device 600 described above with reference to Figs 6 a) to n). The recess 1135 may extend at least partially or substantially completely along the circumferential wall 1130.

The recess 1135 has a recess diameter being greater than the drum diameter and a recess cross section, both of which substantially matching the balancing device outer diameter and the balancing device cross section, respectively. As indicated in Fig. 11 a), for a rectangular balancing device cross section, the recess cross section may also be rectangular. However, recess cross sections may be rectangular, quadratic, trapezoidal, triangular or V-shaped, elliptically convex or circularly convex, for example. As indicated in Fig. 11 b) as a first alternative, the recess 1135 may be situated at any position along the circumferential wall 1130, and the circumferential wall 1130 forms the recess 1135. As indicated in Fig. 11 b) as a second alternative, the recess 1135 may be situated at a position at the side wall 1140, and the side wall 1140 may form part of the recess 1135. Owing to the recess 1135, the drum 1110 may have a higher structural stability and the balancing device 1160 may be more securely located in the drum 1110.

According to other embodiments of the invention, the recess 1135 may be formed by two circumferential ring walls (not shown) being arranged in a substantially straight circumferential wall 1130 substantially perpendicularly to the axis 1120.

Fig. 11 c) shows a drum assembly of a rotary system 1100c and corresponding with the drum assembly described above with reference to Fig. 11 b).

However, the balancing device 1160 comprises a chamber 1190 being partially filled with an amount of a thixotropic balancing substance (not shown), has a balancing device outer diameter and a balancing device cross section, and corresponds with the cylindrical balancing device 700 described above with reference to Figs 6 a) to i). The recess 1135 may extend at least partially or substantially completely along the circumferential wall 1130.

The recess 1135 has a recess diameter being greater than the drum diameter and a recess cross section, both of which substantially matching the balancing device outer diameter and the balancing device cross section, respectively. As indicated in Fig. 11 a), for a rectangular balancing device cross section, the recess cross section may also be rectangular. However, recess cross sections may be rectangular, quadratic, trapezoidal, triangular or V-shaped, elliptically convex or circularly convex, for example. As indicated in Fig. 11 c) as a first alternative, the recess 1135 may be situated at any position along the circumferential wall 1130, and the circumferential wall 1130 forms the recess 1135. As indicated in Fig. 11 c) as a second alternative, the recess 1135 may be situated at a position at the side wall 1140, and the side wall 1140 may form part of the recess 1135. Owing to the recess 1135, the drum 1110 may have a higher structural stability and the cylindrical balancing device 1160 may be more securely located in the drum 1110.

According to other embodiments of the invention, the side wall 1140 comprises a substantially concentric recess or a plurality of substantially concentric recesses 1135 being substantially perpendicular to the axis 1120 for at least partially or substantially completely receiving a balancing device balancing device corresponding with the balancing device 600 described above with reference to Figs 6 a) to n), for example, at a location in or on the drum 1110.

Figs 12 a) to f) show detailed sectional views of the balancing device according to embodiments of the invention forming a drum.

Fig. 12 a) shows a drum assembly of a rotary system 1200a of a washing machine, such as a front-loading washing machine with horizontal drum, top-loading washing machine with horizontal drum or top-loading washing machine with vertical drum; a wash dryer; or a laundry dryer, for example a tumble dryer or and spin dryer. The drum assembly comprises a drum 1210 comprising a circumferential wall 1230 and an axis 1220.

The drum 1210 comprises a circumferential balancing section or a plurality of circumferential balancing sections comprising an annular chamber 1290 being partially filled with an amount of a thixotropic balancing substance (not shown), and corresponding with the annular balancing device 600 described above with reference to Figs 6 a) to n). Thus, the chamber 1290 is integrated within the drum 1210. The circumferential balancing section may extend at least partially or substantially completely along the circumferential wall 1230.

The circumferential wall 1230 may be formed by an inner circumferential wall and an outer circumferential wall substantially concentrically enclosing the inner circumferential wall, such that the drum 1210 is at least partially double-walled. The inner circumferential wall may comprise a substantially circumferential inner recess being substantially perpendicular to the axis 1220 or the outer circumferential wall may comprise a substantially circumferential outer recess being substantially perpendicular to the axis 1220 or both, providing, as indicated in Fig. 12 a) for a substantially oval cross section of the chamber 1290. However, chamber cross section may be rectangular, quadratic, trapezoidal, triangular, semi-elliptical, elliptical, semi-circular, circular, oval or hexagonal, for example. The chamber 1290 forms part of the drum 1210, and the drum 1210 provides for a dual functionality and may not impact on overall dimensions of the rotary system.

The drum 1210 may further comprise a substantially circumferential perforated section or a plurality of substantially circumferential perforated sections comprising a plurality of openings 1270, for example holes, for circulating and draining washing water. The openings 1270 may be hexagonal, rectangular, quadratic or circular, for example.

Fig. 12 b) shows a drum assembly of a rotary system 1200b, corresponding with the drum assembly described above with reference to Fig. 12 a).

The drum 1210 comprises a circumferential perforated balancing section or a plurality of circumferential perforated balancing sections comprising an annular chamber 1290 being partially filled with an amount of a thixotropic balancing substance (not shown), and substantially corresponding with the annular balancing device 600 described above with reference to Figs 6 a) to n). Thus, the chamber 1290 is integrated within the drum 1210. The circumferential perforated balancing section may extend at least partially or substantially completely along the circumferential wall 1230.

The circumferential wall 1230 may be formed by an inner circumferential wall and an outer circumferential wall substantially concentrically enclosing the inner circumferential wall, such that the drum 1210 is at least partially double-walled. The inner circumferential wall and the outer circumferential wall are spaced apart, providing, as indicated in Fig. 12 b) for a substantially elongated cross section of the chamber 1290. The circumferential wall 1230 may further comprise a plurality of hollow spacers 1280, each of which penetrating the chamber 1290 and providing an opening 1270, for example a hole, for circulating and draining washing water. The plurality of spacers 1280 may be arranged in a systematic, preferably regular, such as quadratic or hexagonal, pattern. For forming the spacers 1280, the inner circumferential wall may comprise a plurality of inner openings, each of which may be formed on an outbound, for example substantially circular, recess, the outer circumferential wall may comprise a plurality of outer openings, each of which matching with a corresponding inner opening and may be formed on an inbound, for example substantially circular, recess, and the inner circumferential wall and the outer circumferential wall may be coupled to each other at a plurality of pairs of inner openings and matching outer openings, for example by clipping, tightly fitting, gluing, bending, snapping, soldering, tensing or welding. The plurality of openings 1270 may not be initially produced by separately producing the plurality of inner openings and the plurality of outer openings, but may also be produced during or after the coupling using advanced production techniques comprising, for example, friction welding. The openings 1270 may be hexagonal, rectangular, quadratic or circular, for example. The chamber 1290 forms part of the drum 1210, and the drum 1210 provides for a dual functionality comprising, for example, structural stability and drainage and may not impact on overall dimensions of the rotary system.

Fig. 12 c) shows a drum assembly of a rotary system 1200c, corresponding with the drum assembly described above with reference to Fig. 12 a).

The drum 1210 comprises a circumferential perforated balancing section or a plurality of circumferential perforated balancing sections comprising a plurality of annular channels 1290, being partially filled with an amount of a thixotropic balancing substance (not shown), and substantially corresponding with the annular balancing device 600 described above with reference to Figs 6 a) to n). The circumferential perforated balancing section further comprises a plurality of elongated longitudinal channels 1250 interconnecting the plurality of annular channels 1290, preferably at regular intervals. Thus, the plurality of annular channels 1290 are in fluid communication. The plurality of annular channels 1290 and plurality of longitudinal channels 1250 form a chamber. Thus, the chamber is integrated within the drum 1210. The circumferential perforated balancing section may extend at least partially or substantially completely along the circumferential wall 1230.

The circumferential wall 1230 may have a tube-like structure forming a plurality of openings 1270, for example holes, for circulating and draining washing water. The circumferential wall 1230 may be integrally formed or produced from a plurality of parts. The structure may have a systematic, preferably regular, such as quadratic, pattern. The openings 1270 may be rectangular, quadratic or circular, for example. The annular channels 1290 and longitudinal channels 1250 have, as indicated in Fig. 12 c), a substantially circular cross section. However, the channel cross section may be rectangular, quadratic, trapezoidal, triangular, semi-elliptical, elliptical, semi-circular, circular, oval or hexagonal, for example. The chamber forms part of the drum 1210, and the drum 1210 provides for a dual functionality comprising, for example, structural stability and drainage and may not impact on overall dimensions of the rotary system.

Fig. 12 d) shows a drum assembly of a rotary system 1200d, corresponding with the drum assembly described above with reference to Fig. 12 a).

The drum 1210 comprises a circumferential perforated balancing section or a plurality of circumferential perforated balancing sections comprising a first plurality of sloping substantially diagonal channels 1260 and a second plurality of sloping substantially diagonal channels 1260 interconnecting the first plurality of sloping channels 1260, preferably at regular intervals, being partially filled with an amount of a thixotropic balancing substance (not shown), and substantially corresponding with the annular balancing device 600 described above with reference to Figs 6 a) to n). The first plurality of sloping channels 1260 and second plurality of sloping channels 1260 form a chamber. Thus, the chamber is integrated within the drum 1210. The circumferential perforated balancing section may extend at least partially or substantially completely along the circumferential wall 1230.

The circumferential wall 1230 may have a tube-like structure forming a plurality of openings 1270, for example holes, for circulating and draining washing water. The circumferential wall 1230 may be integrally formed or produced from a plurality of parts. The structure may have a systematic, preferably regular, such as diamond-shaped, pattern. The openings 1270 may be rectangular, quadratic or circular, for example. The sloping channels 1260 have, as indicated in Fig. 12 d), a substantially circular cross section. However, the channel cross section may be rectangular, quadratic, trapezoidal, triangular, semi-elliptical, elliptical, semi-circular, circular, oval or hexagonal, for example. The chamber forms part of the drum 1210, and the drum 1210 provides for a dual functionality comprising, for example, structural stability and drainage and may not impact on overall dimensions of the rotary system.

Fig. 12 e) shows a drum assembly of a rotary system 1200e, corresponding with the drum assembly described above with reference to Fig. 12 a).

The drum 1210 comprises a circumferential perforated balancing section or a plurality of circumferential perforated balancing sections comprising a plurality of longitudinal channels, a first plurality of sloping channels 1260 and a second plurality of sloping channels 1260 coupled at regular intervals, being partially filled with an amount of a thixotropic balancing substance (not shown), and substantially corresponding with the annular balancing device 600 described above with reference to Figs 6 a) to n). The plurality of longitudinal channels, first plurality of sloping channels 1260 and second plurality of sloping channels 1260 form a chamber. Thus, the chamber is integrated within the drum 1210. The circumferential perforated balancing section may extend at least partially or substantially completely along the circumferential wall 1230.

The circumferential wall 1230 may have a tube-like structure forming a plurality of openings 1270, for example holes, for circulating and draining washing water. The circumferential wall 1230 may be integrally formed or produced from a plurality of parts. The structure may have a systematic, for example hexagonal, pattern. The openings 1270 may be hexagonal, rectangular, quadratic or circular, for example. The channels have, as indicated in Fig. 12 e), a substantially circular cross section. However, the channel cross section may be rectangular, quadratic, trapezoidal, triangular, semi-elliptical, elliptical, semi-circular, circular, oval or hexagonal, for example. The channels and openings 1270 are interleaved, such that the channels do not extend on a straight line along or around the circumferential wall 1230, but extend between openings 1270. The chamber forms part of the drum 1210, and the drum 1210 provides for a dual functionality comprising, for example, structural stability and drainage and may not impact on overall dimensions of the rotary system.

Fig. 12 f) shows a drum assembly of a rotary system 1200f, corresponding with the drum assembly described above with reference to Fig. 12 a).

The drum 1210 comprises a circumferential perforated balancing section or a plurality of circumferential perforated balancing sections comprising a plurality of annular chambers 1290 being partially filled with an amount of a thixotropic balancing substance (not shown), and substantially corresponding with the annular balancing device 600 described above with reference to Figs 6 a) to n). The circumferential perforated balancing section further comprises a plurality of longitudinal bars 1240 attaching the plurality of annular channels 1290, preferably at regular intervals. Thus, the plurality of annular chambers 1290 are not in fluid communication. The chambers 1290 are integrated within the drum 1210. The circumferential perforated balancing section may extend at least partially or substantially completely along the circumferential wall 1230.

The circumferential wall 1230 may have a tube-like structure forming a plurality of openings 1270, for example holes, for circulating and draining washing water. The circumferential wall 1230 may be integrally formed or produced from a plurality of parts. The structure may have a systematic, preferably regular, such as quadratic, pattern. Outer diameters of a balancing device comprising the chamber 1290 and the longitudinal bars are preferably substantially identical. The openings 1270 may be rectangular, quadratic or circular, for example. The annular chambers 1290 have, as indicated in Fig. 12 f), a substantially circular cross section. However, the channel cross section may be rectangular, quadratic, trapezoidal, triangular, semi-elliptical, elliptical, semi-circular, circular, oval or hexagonal, for example. The chambers 1290 form part of the drum 1210, and the drum 1210 provides for a dual functionality comprising, for example, structural stability and drainage and may not impact on overall dimensions of the rotary system.

Figs 13 a) and b) show, for an embodiment of the invention, a sectional view and a cross-sectional view of the balancing device according to yet another embodiment of the invention, respectively.

Figs 13 a) and b) show a drum assembly of a rotary system 1300 of a washing machine, such as a front-loading washing machine with horizontal drum, top-loading washing machine with horizontal drum or top-loading washing machine with vertical drum; a wash dryer; or a laundry dryer, for example a tumble dryer or and spin dryer. The drum assembly comprises a substantially cylindrical drum 1310 being rotatable about an axis 1320 in a substantially horizontal orientation, a substantially vertically orientation or any other spatial orientation.

The drum 1310 comprises a circumferential wall 1330, that is a shell, being generally perforated for circulating and draining washing water and a first side wall 1340a, and may further comprise a second side wall 1340b. The second side wall 1340b may be ring-shaped. The drum assembly may further comprise a drum shaft 1350a. The shaft 1350 may be coupled to said drum 1310 at the first side wall 1340a, extend through a side wall of a tub (not shown), be rotatably supported by a bearing (not shown) and rotatable about the axis 1320. The drum assembly may further comprise, for example in the top-loading washing machine with horizontal drum, a second drum shaft (not shown) improving structural stability of the drum assembly. The drum assembly may further comprise a drum wheel (not shown).

The drum assembly further comprises a first annular balancing device 1360a and second annular balancing device 1360b, comprising chambers 1390 being partially filled with an amount of a thixotropic balancing substance (not shown) and corresponding with the balancing device 600 described above with reference to Figs 6 a) to n). As indicated in Figs 13 a) and b), the circumferential wall 1330 may comprise a first substantially circumferential recess 1135a and second substantially circumferential recess 1335b both of which being substantially perpendicular to the axis 1320 for at least partially or substantially completely receiving the first balancing device 1360a and second balancing devices 1360b, respectively, at locations in the drum 1310 as described above with reference to Fig. 11 b). Alternatively, the circumferential wall 1330 may comprise a first substantially circumferential recess and second substantially circumferential recess both of which being substantially perpendicular to the axis 1320 for at least partially or substantially completely receiving the first balancing device 1360a and second balancing devices 1360b, respectively, at locations on the drum 1310 as described above with reference to Fig. 11 a).

The drum assembly further comprises a plurality of elongated extension chambers 1395a-b being arranged along the circumferential wall 1330, preferably evenly spaced apart from each other around the circumferential wall 1330. For three extension chambers 1395a-c any two may be arranged at 120 degree with reference to the axis 1320, for example. As indicated in Figs. 13 a) und b), the extension chambers 1395a-b may be located on an inner surface of the circumferential wall 1330, and each of the plurality of extension chambers 1395a-b may be accommodated in one of a plurality of lifters 1370a-c for lifting and manipulating articles of laundry during a washing cycle. Alternatively, the extension chambers 1395a-b may be located on an outer surface of the circumferential wall 1330. The plurality of extension chambers 1395a-b muliplely interconnects the first annular balancing device 1360a and second annular balancing device 1360b, preferably via sealed joints 1375. Thus, the plurality of annular chambers 1390 are in fluid communication. The plurality of annular chambers 1390 and plurality of extension chambers 1395a-b form a chamber wherein the thixotropic balancing substance may freely flow and settle down at a location or locations in the annular chambers 1390 and extension chambers 1395a-b, such that vibration owing to imbalance is reduced or minimized.

Fig. 14 a) and b) show comparative representations of peak-to-peak accelerations (a) in acceleration of gravity (g), that is approximately 9.81 m/s$^2$, together with a corresponding root mean square (RMS) acceleration of a conventional washing machine without and with a balancing device according to an embodiment of the invention, respectively, over time (t) in seconds (s). The conventional washing machine is a make Haier (www.haier.com) front-load washer with a horizontal drum, model HW-E 1450 TVE comprising a homocentric tub and having a class-A efficiency, unit dimensions (height x width x depth) of 85 cm x 59.5 cm x 56 cm, a net weight of 69 kg, a maximum spin speed of 1400 rpm, and a wash load capacity of 5 kg. Experiments have been made with a wash load of towels weighting approximately 3 kg and a spinning speed of approximately 1000 rpm. The washing machine has been modified according to an embodiment of the invention using three circumferential hoses attached to a drum, each of which comprising approximately 1.33 kg of thixotropic balancing substance, totalling to approximately 4 kg of balancing substance. The representations derive from experimental data taken with an acceleration sensor module make Crossbow (www.xbow.com), model CXL10HF3 attached to an upper end of a side wall of an outer casing at a rate of approximately 1000 1/s and cover a period of approximately 3 s.

As indicated in Fig. 14 a) by a solid curve, the peak-to-peak values of the acceleration vary between approximately +0.026 g and approximately -0.024 g for the washing machine without balancing device. As indicated in Fig. 14 a) by a horizontal solid line, the RMS value of this acceleration is approximately 0.0133 g.

As indicated in Fig. 14 b) by a chain curve, the peak-to-peak values of the acceleration vary between approximately +0.022 g and approximately -0.018 g for the washing machine with the balancing device according to an embodiment of the invention. Thus, peak-to-peak values for the washing machine with the balancing device are lower than the peak-to-peak values for the washing machine without balancing device and also tend to decrease over time. As indicated in Fig. 14 b) by a horizontal chain line, the RMS value of this acceleration is approximately 0.0078 g. Thus, the RMS value for the washing machine with the balancing device is lower than the RMS values for the washing machine without balancing device.

Embodiments of the inventions comprise a corresponding system, that may carry out the method, possibly across a number of devices.

Embodiments of the inventions comprise corresponding devices, that may carry out the method.

Although specific embodiments have been illustrated and described herein, it will be appreciated by those of ordinary skill in the art, that any arrangement which is calculated to achieve the same purpose may be substituted for the specific embodiments shown. It is to be understood, that the above description is intended to be illustrative and not restrictive. This application is intended to cover any adaptations or variations of the invention. Combinations of the above embodiments and many other embodiments will be apparent to those of skill in the art upon reading and understanding the above description. The scope of the invention includes any other embodiments and applications in which the above structures and methods may be used. The scope of the invention should, therefore, be determined with reference to the appended claims along with the full scope of equivalents to which such claims are entitled.

**Claims**

1.   A method for reducing vibration in a rotary system (130, 131, 133; 230, 231a-b, 233; 330, 331, 333; 900a-c; 1000a-d; 1100a-c; 1200a-f; 1300) of an article processing machine (100; 200; 300), for example a washing machine, comprising:

  - providing a substantially circular chamber (490; 590; 690; 790; 890a-c; 990; 1090; 1190; 1250, 1260, 1290; 1390) having a fulcrum on an axis (132; 232; 332; 420; 520; 620; 720; 820; 920; 1020; 1120; 1220; 1320) of said rotary system (130, 131, 133; 230, 231a-b, 233; 330, 331, 333; 900a-c; 1000a-d; 1100a-c; 1200a-f; 1300) and being partially filled with an amount of a balancing substance (440; 540; 640; 740), and
  - balancing said rotary system (130, 131, 133; 230, 231a-b, 233; 330, 331, 333; 900a-c; 1000a-d; 1100a-c; 1200a-f; 1300) by distributing said amount of said balancing substance (440; 540; 640; 740) in said chamber (490; 590; 690; 790; 890a-c; 990; 1090; 1190; 1250, 1260, 1290; 1390),
  **characterized in that**
  - said balancing substance (440; 540; 640; 740) is a thixotropic balancing substance (440; 540; 640; 740) that, owing to said vibration, changes from a relaxed state into an agitated state and distributes itself.

2.   The method of claim 1, wherein:

  - said thixotropic balancing substance (440; 540; 640; 740) has a yield stress value between approximately 1 Pa and approximately 400 Pa, for example between approximately 2 Pa and approximately 260 Pa, such as approximately 30 Pa.

3. The method of claim 1 or 2, wherein:

- said chamber (490; 590; 690; 790; 890a-c; 990; 1090; 1190; 1250, 1260, 1290; 1390) is annular and preferably has a cross section being rectangular (400e; 600e), quadratic, semi-elliptical (400f), elliptical (600f), semi-circular (400g; 600g, 600i), circular (600h), trapezoidal (400h; 600j), triangular (600k), V-shaped, M-shaped (400i; 6001), inversely semi-elliptical (400j; 600m), inversely semi-circular (400k; 600n) bell-shaped, oval or hexagonal; or
- said chamber (490; 590; 690; 790; 890a-c; 990; 1090; 1190; 1250, 1260, 1290; 1390) is cylindrical and has a shell preferably being straight (700c), broadened straight (700f), elliptically convex (700d), circularly convex (700e), V-shaped, M-shaped (700g), elliptically concave (700h) or circularly concave (700i).

4. The method of claim 1, 2 or 3, wherein:

- said chamber (490; 590; 690; 790; 890a-c; 990; 1090; 1190; 1250, 1260, 1290; 1390) is located inside, and preferably attached, for example clipped, tightly fitted, glued, riveted, snapped, soldered, springed, screwed, tensed or welded, to, a drum (130; 230; 330; 910; 1010; 1110; 1210; 1310) of said rotary system (130, 131, 133; 230, 231a-b, 233; 330, 331, 333; 900a-c; 1000a-d; 1100a-c; 1200a-f; 1300), said drum (130; 230; 330; 910; 1010; 1110; 1210; 1310) being rotatable about said axis (132; 232; 332; 420; 520; 620; 720; 820; 920; 1020; 1120; 1220; 1320), said drum (130; 230; 330; 910; 1010; 1110; 1210; 1310) preferably comprising a recess for receiving said chamber (490; 590; 690; 790; 890a-c; 990; 1090; 1190; 1250, 1260, 1290; 1390), and said chamber (490; 590; 690; 790; 890a-c; 990; 1090; 1190; 1250, 1260, 1290; 1390) being for example located on a circumferential wall or a side wall of said drum (130; 230; 330; 910; 1010; 1110; 1210; 1310); or
- said chamber (490; 590; 690; 790; 890a-c; 990; 1090; 1190; 1250, 1260, 1290; 1390) is located outside, and preferably attached to, said drum (130; 230; 330; 910; 1010; 1110; 1210; 1310); or
- said chamber (490; 590; 690; 790; 890a-c; 990; 1090; 1190; 1250, 1260, 1290; 1390) is integrated within said drum (130; 230; 330; 910; 1010; 1110; 1210; 1310), said drum (130; 230; 330; 910; 1010; 1110; 1210; 1310) preferably being at least partially double-walled; or
- said chamber (490; 590; 690; 790; 890a-c; 990; 1090; 1190; 1250, 1260, 1290; 1390) is located on, and preferably attached, for example clipped, tightly fitted, glued, riveted, snapped, soldered, springed, screwed, tensed or welded, to, a drum wheel (133; 233; 333; 1060; 1080) of said rotary system (130, 131, 133; 230, 231a-b, 233; 330, 331, 333; 900a-c; 1000a-d; 1100a-c; 1200a-f; 1300), said drum wheel (133; 233; 333; 1060; 1080) being coupled to said drum (130; 230; 330; 910; 1010; 1110; 1210; 1310) and rotatable about said axis (132; 232; 332; 420; 520; 620; 720; 820; 920; 1020; 1120; 1220; 1320); or
- said chamber (490; 590; 690; 790; 890a-c; 990; 1090; 1190; 1250, 1260, 1290; 1390) is integrated within said drum wheel (133; 233; 333; 1060; 1080); or
- said chamber (490; 590; 690; 790; 890a-c; 990; 1090; 1190; 1250, 1260, 1290; 1390) is integrated within a shaft (131; 231a-b; 331; 950a-b; 1050; 1350) of said rotary system (130, 131, 133; 230, 231a-b, 233; 330, 331, 333; 900a-c; 1000a-d; 1100a-c; 1200a-f; 1300), said shaft (131; 231a-b; 331; 950a-b; 1050; 1350) being coupled to said drum (130; 230; 330; 910; 1010; 1110; 1210; 1310) and rotatable about said axis (132; 232; 332; 420; 520; 620; 720; 820; 920; 1020; 1120; 1220; 1320).

5. The method of one of claims 1 to 4, wherein:

- said chamber (490; 590; 690; 790; 890a-c; 990; 1090; 1190; 1250, 1260, 1290; 1390) comprises a surface area, for example a circumferential balancing area (430; 530; 630; 730), with a nanostructure, said nanostructure being, for example, formed by a material, such as a varnish, comprising nanoparticles, or imprinted on said surface area; or
- said chamber (490; 590; 690; 790; 890a-c; 990; 1090; 1190; 1250, 1260, 1290; 1390) is structured, for example honeycombed; or
- said chamber (490; 590; 690; 790; 890a-c; 990; 1090; 1190; 1250, 1260, 1290; 1390) is one of a plurality of chambers (490; 590; 690; 790; 890a-c; 990; 1090; 1190; 1250, 1260, 1290; 1390), said plurality of chambers (490; 590; 690; 790; 890a-c; 990; 1090; 1190; 1250, 1260, 1290; 1390) preferably being arranged in parallel or concentrically or a combination thereof, said plurality of chambers (490; 590; 690; 790; 890a-c; 990; 1090; 1190; 1250, 1260, 1290; 1390) preferably being isolated or coupled, for example connected, each of said plurality of isolated chambers (490; 590; 690; 790; 890a-c; 990; 1090; 1190; 1250, 1260, 1290; 1390) preferably comprising a thixotropic balancing substance (440; 540; 640; 740) of a different amount or a different type, said plurality of coupled chambers (490; 590; 690; 790; 890a-c; 990; 1090; 1190; 1250, 1260, 1290; 1390) preferably being in fluid communication with each other, and said plurality of coupled chambers (490; 590; 690; 790; 890a-c; 990; 1090; 1190; 1250, 1260, 1290; 1390) preferably comprising extension chambers (1395a-c); or

- said chamber (490; 590; 690; 790; 890a-c; 990; 1090; 1190; 1250, 1260, 1290; 1390) has an outer diameter of between approximately 0.1 m and approximately 10 m, for example between approximately 0.2 m and approximately 1.5 m, preferably between approximately 0.5 m and approximately 1 m, such as approximately 0.75 m; or
- said chamber (490; 590; 690; 790; 890a-c; 990; 1090; 1190; 1250, 1260, 1290; 1390) has a length of between approximately 0.01 m and approximately 2 m, for example between approximately 0.02 m and approximately 1 m, preferably between approximately 0.05 m and approximately 0.5 m, such as approximately 0.1 m; or
- a combination thereof.

6. The method of one of claims 1 to 5, wherein:

- said chamber (490; 590; 690; 790; 890a-c; 990; 1090; 1190; 1250, 1260, 1290; 1390) is situated in a vessel (410, 450a-b; 510, 550; 610, 650a-b, 670; 710, 750a-b; 810, 850a-b); and
- said vessel (410, 450a-b; 510, 550; 610, 650a-b, 670; 710, 750a-b; 810, 850a-b) comprises metal, for example steel, preferably stainless steel, aluminium or copper, or composite material, for example glas-fibre-reinforced material or carbon-fibre-reinforced material, or synthetic material, for example plastics or plexiglas; or
- said vessel (410, 450a-b; 510, 550; 610, 650a-b, 670; 710, 750a-b; 810, 850a-b) is converted, moulded, for example injection-moulded, or extruded; or
- said vessel (410, 450a-b; 510, 550; 610, 650a-b, 670; 710, 750a-b; 810, 850a-b) is expandable, flexible, deformable or a combination thereof; or
- said vessel (410, 450a-b; 510, 550; 610, 650a-b, 670; 710, 750a-b; 810, 850a-b) is closed, preferably airtight, said vessel (410, 450a-b; 510, 550; 610, 650a-b, 670; 710, 750a-b; 810, 850a-b) preferably being integrally formed, said vessel (410, 450a-b; 510, 550; 610, 650a-b, 670; 710, 750a-b; 810, 850a-b) preferably being substantially balanced with respect to said axis (132; 232; 332; 420; 520; 620; 720; 820; 920; 1020; 1120; 1220; 1320), said vessel 410, 450a-b; 510, 550; 610, 650a-b, 670; 710, 750a-b; 810, 850a-b preferably being filled with the amount of a thixotropic balancing substance (440; 540; 640; 740) during forming of the vessel or through an opening, said opening preferably being located on an inner circumferential wall or a side wall (450a-b; 650a-b; 750a-b; 850a-b) of said vessel (410, 450a-b; 510, 550; 610, 650a-b, 670; 710, 750a-b; 810, 850a-b), and said opening preferably being sealed by a seal 680, for example an adhesive pad, a membrane, such as a self-sealing membrane, a plug, such as a snap-in plug, a screw or a valve; or
- said vessel (410, 450a-b; 510, 550; 610, 650a-b, 670; 710, 750a-b; 810, 850a-b) is transparent or translucent; or
- said vessel (410, 450a-b; 510, 550; 610, 650a-b, 670; 710, 750a-b; 810, 850a-b) is coupled to a or said shaft (131; 231b; 331; 1050) via a or said side wall (450a-b; 650a-b; 750a-b; 850a-b) of said vessel (410, 450a-b; 510, 550; 610, 650a-b, 670; 710, 750a-b; 810, 850a-b), a disc or spokes (465a-b; 665a-b; 1065), said spokes (465a-b; 665a-b; 1065) preferably being evenly spaced apart from each other; or
- a combination thereof.

7. The method of one of claims 1 to 6, wherein:

- said amount of said thixotropic balancing substance (440; 540; 640; 740) is between approximately 0.01 kg and approximately 20 kg, for example between approximately 0.1 kg and approximately 10 kg, preferably between approximately 0.5 kg and approximately 5 kg, such as approximately 1 kg; or
- said chamber (490; 590; 690; 790; 890a-c; 990; 1090; 1190; 1250; 1260, 1290; 1390) is filled with said amount of said thixotropic balancing substance (440; 540; 640; 740) to between approximately 1 % and approximately 90 %, for example between approximately 10 % and approximately 80 %, preferably between approximately 25 % and approximately 75 %, such as approximately 50 %; or
- a combination thereof.

8. The method of one of claims 1 to 7, wherein:

- a weight body is in contact with said thixotropic balancing substance (440; 540; 640; 740); and
- said weight body has, defined by a body size of said weight body, a body surface and a body weight, such that said weight body overcomes adhesion between said body surface and said thixotropic balancing substance (440; 540; 640; 740) when said thixotropic balancing substance (440; 540; 640; 740) is subjected to said vibration and changes in an agitated state; or
- said weight body preferably is a ball; or
- said weight body comprises metal, for example steel, such as stainless steel; or
- a combination thereof.

9.  A balancing device (400, 400e-400k; 500; 600, 600e-600n; 700, 700c-700i; 800; 960a-960h, 970a-970f; 1200a-1200f; 1360a-b, 1370a-c) for reducing vibration in a rotary system (130, 131, 133; 230, 231a-b, 233; 330, 331, 333) of an article processing machine (100; 200; 300), for example a washing machine, comprising:

    - a substantially circular chamber (490; 590; 690; 790; 890a-c; 990; 1090; 1190; 1250, 1260, 1290; 1390) having a fulcrum on an axis (132; 232; 332; 420; 520; 620; 720; 820; 920; 1020; 1120; 1220; 1320) of said rotary system (130, 131, 133; 230, 231a-b, 233; 330, 331, 333; 900a-c; 1000a-d; 1100a-c; 1200a-f; 1300) and being partially filled with an amount of a balancing substance (440; 540; 640; 740),
    **characterized in that**
    - said balancing substance (440; 540; 640; 740) is a thixotropic balancing substance (440; 540; 640; 740) that, owing to said vibration, changes from a relaxed state into an agitated state and distributes itself.

10. The balancing device (400, 400e-400k; 500; 600, 600e-600n; 700, 700c-700i; 800; 960a-960h, 970a-970f; 1200a-1200f; 1360a-b, 1370a-c) of claim 9, wherein:

    - said thixotropic balancing substance (440; 540; 640; 740) has a yield stress value between approximately 1 Pa and approximately 400 Pa, for example between approximately 2 Pa and approximately 260 Pa, such as approximately 30 Pa.

11. The balancing device (400, 400e-400k; 500; 600, 600e-600n; 700, 700c-700i; 800; 960a-960h, 970a-970f; 1200a-1200f; 1360a-b, 1370a-c) of claim 9 or 10, wherein:

    - said chamber (490; 590; 690; 790; 890a-c; 990; 1090; 1190; 1250, 1260, 1290; 1390) is annular and preferably has a cross section being rectangular (400e; 600e), quadratic, semi-elliptical (400f), elliptical (600f), semi-circular (400g; 600g, 600i), circular (600h), trapezoidal (400h; 600j), triangular (600k), V-shaped, M-shaped (400i; 600l), inversely semi-elliptical (400j; 600m), inversely semi-circular (400k; 600n), bell-shaped, oval or hexagonal; or
    - said chamber (490; 590; 690; 790; 890a-c; 990; 1090; 1190; 1250, 1260, 1290; 1390) is cylindrical and has a shell preferably being straight (700c), broadened straight (700f), elliptically convex (700d), circularly convex (700e), V-shaped, M-shaped (700g), elliptically concave (700h) or circularly concave (700i).

12. The balancing device (400, 400e-400k; 500; 600, 600e-600n; 700, 700c-700i; 800; 960a-960h, 970a-970f; 1200a-1200f; 1360a-b, 1370a-c) of claim 9, 10 or 11, wherein:

    - said chamber (490; 590; 690; 790; 890a-c; 990; 1090; 1190; 1250, 1260, 1290; 1390) comprises a surface area, for example a circumferential balancing area (430; 530; 630; 730), with a nanostructure, said nanostructure being, for example, formed by a material, such as a varnish, comprising nanoparticles, or imprinted on said surface area; or
    - said chamber (490; 590; 690; 790; 890a-c; 990; 1090; 1190; 1250, 1260, 1290; 1390) is structured, for example honeycombed; or
    - said chamber (490; 590; 690; 790; 890a-c; 990; 1090; 1190; 1250, 1260, 1290; 1390) is one of a plurality of chambers (490; 590; 690; 790; 890a-c; 990; 1090; 1190; 1250, 1260, 1290; 1390), said plurality of chambers (490; 590; 690; 790; 890a-c; 990; 1090; 1190; 1250, 1260, 1290; 1390) preferably being arranged in parallel or concentrically or a combination thereof, said plurality of chambers (490; 590; 690; 790; 890a-c; 990; 1090; 1190; 1250, 1260, 1290; 1390) preferably being isolated or coupled, for example connected, each of said plurality of isolated chambers (490; 590; 690; 790; 890a-c; 990; 1090; 1190; 1250, 1260, 1290; 1390) preferably comprising a thixotropic balancing substance (440; 540; 640; 740) of a different amount or a different type, said plurality of coupled chambers (490; 590; 690; 790; 890a-c; 990; 1090; 1190; 1250, 1260, 1290; 1390) preferably being in fluid communication with each other, and said plurality of coupled chambers (490; 590; 690; 790; 890a-c; 990; 1090; 1190; 1250, 1260, 1290; 1390) preferably comprising extension chambers (1395a-c); or
    - said chamber (490; 590; 690; 790; 890a-c; 990; 1090; 1190; 1250, 1260, 1290; 1390) has an outer diameter of between approximately 0.1 m and approximately 10 m, for example between approximately 0.2 m and approximately 1.5 m, preferably between approximately 0.5 m and approximately 1 m, such as approximately 0.75 m; or
    - said chamber (490; 590; 690; 790; 890a-c; 990; 1090; 1190; 1250, 1260, 1290; 1390) has a length of between approximately 0.01 m and approximately 2 m, for example between approximately 0.02 m and approximately 1 m, preferably between approximately 0.05 m and approximately 0.5 m, such as approximately 0.1 m; or
    - a combination thereof.

**13.** The balancing device (400, 400e-400k; 500; 600, 600e-600n; 700, 700c-700i; 800; 960a-960h, 970a-970f; 1200a-1200f; 1360a-b, 1370a-c) of one of claims 9 to 12, wherein:

- said chamber (490; 590; 690; 790; 890a-c; 990; 1090; 1190; 1250, 1260, 1290; 1390) is situated in a vessel (410, 450a-b; 510, 550; 610, 650a-b, 670; 710, 750a-b; 810, 850a-b); and
- said vessel (410, 450a-b; 510, 550; 610, 650a-b, 670; 710, 750a-b; 810, 850a-b) comprises metal, for example steel, preferably stainless steel, aluminium or copper, or composite material, for example glas-fibre-reinforced material or carbon-fibre-reinforced material, or synthetic material, for example plastics or plexiglas; or
- said vessel (410, 450a-b; 510, 550; 610, 650a-b, 670; 710, 750a-b; 810, 850a-b) is converted, moulded, for example injection-moulded, or extruded; or
- said vessel (410, 450a-b; 510, 550; 610, 650a-b, 670; 710, 750a-b; 810, 850a-b) is expandable, flexible, deformable or a combination thereof; or
- said vessel (410, 450a-b; 510, 550; 610, 650a-b, 670; 710, 750a-b; 810, 850a-b) is closed, preferably airtight, said vessel (410, 450a-b; 510, 550; 610, 650a-b, 670; 710, 750a-b; 810, 850a-b) preferably being integrally formed, said vessel (410, 450a-b; 510, 550; 610, 650a-b, 670; 710, 750a-b; 810, 850a-b) preferably being substantially balanced with respect to said axis (132; 232; 332; 420; 520; 620; 720; 820; 920; 1020; 1120; 1220; 1320), said vessel 410, 450a-b; 510, 550; 610, 650a-b, 670; 710, 750a-b; 810, 850a-b preferably being filled with the amount of a thixotropic balancing substance (440; 540; 640; 740) during forming of the vessel or through an opening, said opening preferably being located on an inner circumferential wall or a side wall (450a-b; 650a-b; 750a-b; 850a-b) of said vessel (410, 450a-b; 510, 550; 610, 650a-b, 670; 710, 750a-b; 810, 850a-b), and said opening preferably being sealed by a seal 680, for example an adhesive pad, a membrane, such as a self-sealing membrane, a plug, such as a snap-in plug, a screw or a valve; or
- said vessel (410, 450a-b; 510, 550; 610, 650a-b, 670; 710, 750a-b; 810, 850a-b) is transparent or translucent; or
- said vessel (410, 450a-b; 510, 550; 610, 650a-b, 670; 710, 750a-b; 810, 850a-b) is coupled to a or said shaft (131; 231b; 331; 1050) via a or said side wall (450a-b; 650a-b; 750a-b; 850a-b) of said vessel (410, 450a-b; 510, 550; 610, 650a-b, 670; 710, 750a-b; 810, 850a-b), a disc or spokes (465a-b; 665a-b; 1065), said spokes (465a-b; 665a-b; 1065) preferably being evenly spaced apart from each other; or
- a combination thereof.

**14.** The balancing device (400, 400e-400k; 500; 600, 600e-600n; 700, 700c-700i; 800; 960a-960h, 970a-970f; 1200a-1200f; 1360a-b, 1370a-c) of one of claims 9 to 13, wherein:

- said amount of said thixotropic balancing substance (440; 540; 640; 740) is between approximately 0.01 kg and approximately 20 kg, for example between approximately 0.1 kg and approximately 10 kg, preferably between approximately 0.5 kg and approximately 5 kg, such as approximately 1 kg; or
- said chamber (490; 590; 690; 790; 890a-c; 990; 1090; 1190; 1250, 1260, 1290; 1390) is filled with said amount of said thixotropic balancing substance (440; 540; 640; 740) to between approximately 1 % and approximately 90 %, for example between approximately 10 % and approximately 80 %, preferably between approximately 25 % and approximately 75 %, such as approximately 50 %; or
- a combination thereof.

**15.** A drum (130; 230; 330; 910; 1010; 1110; 1210; 1310) comprising the balancing device (400, 400e-400k; 500; 600, 600e-600n; 700, 700c-700i; 800; 960a-960h, 970a-970f; 1200a-1200f; 1360a-b, 1370a-c) as claimed in one of claims 9 to 14, said device (400, 400e-400k; 500; 600, 600e-600n; 700, 700c-700i; 800; 960a-960h, 970a-970f; 1200a-1200f; 1360a-b, 1370a-c) preferably being attached, for example clipped, tightly fitted, glued, riveted, snapped, soldered, springed, screwed, tensed or welded, to or integrally formed by said drum (130; 230; 330; 910; 1010; 1110; 1210; 1310), and said drum (130; 230; 330; 910; 1010; 1110; 1210; 1310) preferably being substantially balanced with respect to said axis (132; 232; 332; 420; 520; 620; 720; 820; 920; 1020; 1120; 1220; 1320).

**16.** A drum wheel (133; 233; 333; 1060; 1080) comprising the balancing device (400, 400e-400k; 500; 600, 600e-600n; 700, 700c-700i; 800; 960a-960h, 970a-970f; 1200a-1200f; 1360a-b, 1370a-c) as claimed in one of claims 9 to 14, said balancing device (400, 400e-400k; 500; 600, 600e-600n; 700, 700c-700i; 800; 960a-960h, 970a-970f; 1200a-1200f; 1360a-b, 1370a-c) preferably being attached, for example clipped, tightly fitted, glued, riveted, snapped, soldered, springed, screwed, tensed or welded, to or integrally formed by said drum wheel (133; 233; 333; 1060; 1080), and said drum wheel (133; 233; 333; 1060; 1080) preferably being substantially balanced with respect to said axis (132; 232; 332; 420; 520; 620; 720; 820; 920; 1020; 1120; 1220; 1320).

**Patentansprüche**

1. Verfahren zur Verringerung von Vibrationen in einem rotierenden System (130, 131, 133; 230, 231a-b, 233; 330, 331, 333; 900a-c; 1000a-d; 1100a-c; 1200a-f; 1300) einer Artikelbearbeitungsmaschine (100; 200; 300), beispielsweise einer Waschmaschine, umfassend:

   - Bereitstellen einer im Wesentlichen kreisförmigen Kammer (490; 590; 690; 790; 890a-c; 990; 1090; 1190; 1250, 1260, 1290; 1390) mit einem Drehpunkt auf einer Achse (132; 232; 332; 420; 520; 620; 720; 820; 920; 1020; 1120; 1220; 1320) des rotierenden Systems (130, 131, 133; 230, 231a-b, 233; 330, 331, 333; 900a-c; 1000a-d; 1100a-c; 1200a-f; 1300), die teilweise mit einer Menge an Auswuchtsubstanz (440; 540; 640; 740) gefüllt ist, und
   - Auswuchten des rotierenden Systems (130, 131, 133; 230, 231a-b, 233; 330, 331, 333; 900a-c; 1000a-d; 1100a-c; 1200a-f; 1300) durch Verteilen der Menge an Auswuchtsubstanz (440; 540; 640; 740) in der Kammer (490; 590; 690; 790; 890a-c; 990; 1090; 1190; 1250, 1260, 1290; 1390),
   **dadurch gekennzeichnet, dass**
   - die Auswuchtsubstanz (440; 540; 640; 740) eine thixotrope Auswuchtsubstanz (440; 540; 640; 740) ist, die aufgrund der Vibrationen von einem entspannten Zustand in einen bewegten Zustand übergeht und sich verteilt.

2. Verfahren nach Anspruch 1, wobei:

   - die thixotrope Auswuchtsubstanz (440; 540; 640; 740) einen Fließspannungswert zwischen ungefähr 1 Pa und ungefähr 400 Pa, beispielsweise zwischen ungefähr 2 Pa und ungefähr 260 Pa, wie ungefähr 30 Pa, aufweist.

3. Verfahren nach Anspruch 1 oder 2, wobei:

   - die Kammer (490; 590; 690; 790; 890a-c; 990; 1090; 1190; 1250, 1260, 1290; 1390) ringförmig ist und vorzugsweise einen Querschnitt aufweist, der rechteckig (400e; 600e), quadratisch, halbelliptisch (400f), elliptisch (600f), halbkreisförmig (400g; 600g, 600i), kreisförmig (600h), trapezförmig (400h; 600j), dreieckig (600k), V-förmig, M-förmig (400i; 600l), umgekehrt halbelliptisch (400j; 600m), umgekehrt halbkreisförmig (400k; 600n), glockenförmig, oval oder hexagonal ist; oder
   - die Kammer (490; 590; 690; 790; 890a-c; 990; 1090; 1190; 1250, 1260, 1290; 1390) zylinderförmig ist und einen Mantel aufweist, der vorzugsweise gerade (700c), verbreitert gerade (700f), elliptisch konvex (700d), kreisförmig konvex (700e), V-förmig, M-förmig (700g), elliptisch konkav (700h) oder kreisförmig konkav (700i) ist.

4. Verfahren nach Anspruch 1, 2 oder 3, wobei:

   - die Kammer (490; 590; 690; 790; 890a-c; 990; 1090; 1190; 1250, 1260, 1290; 1390) sich innerhalb einer Trommel (130; 230; 330; 910; 1010; 1110; 1210; 1310) des rotierenden Systems (130, 131, 133; 230, 231a-b, 233; 330, 331, 333; 900a-c; 1000a-d; 1100a-c; 1200a-f; 1300) befindet und vorzugsweise daran befestigt, beispielsweise eingeklemmt, dicht eingepasst, geklebt, genietet, eingeschnappt, gelötet, federnd befestigt, geschraubt, eingespannt oder geschweißt, ist, wobei die Trommel (130; 230; 330; 910; 1010; 1110; 1210; 1310) um die Achse (132; 232; 332; 420; 520; 620; 720; 820; 920; 1020; 1120; 1220; 1320) rotierbar ist, wobei die Trommel (130; 230; 330; 910; 1010; 1110; 1210; 1310) vorzugsweise eine Vertiefung zur Aufnahme der Kammer (490; 590; 690; 790; 890a-c; 990; 1090; 1190; 1250, 1260, 1290; 1390) aufweist und wobei die Kammer (490; 590; 690; 790; 890a-c; 990; 1090; 1190; 1250, 1260, 1290; 1390) sich beispielsweise an einer Umfangswand oder Seitenwand der Trommel (130; 230; 330; 910; 1010; 1110; 1210; 1310) befindet; oder
   - die Kammer (490; 590; 690; 790; 890a-c; 990; 1090; 1190; 1250, 1260, 1290; 1390) sich außerhalb der Trommel (130; 230; 330; 910; 1010; 1110; 1210; 1310) befindet, aber vorzugsweise daran befestigt ist; oder
   - die Kammer (490; 590; 690; 790; 890a-c; 990; 1090; 1190; 1250, 1260, 1290; 1390) einstückig mit der Trommel (130; 230; 330; 910; 1010; 1110; 1210; 1310) ausgebildet ist, wobei die Trommel (130; 230; 330; 910; 1010; 1110; 1210; 1310) vorzugsweise mindestens teilweise doppelwandig ist; oder
   - die Kammer (490; 590; 690; 790; 890a-c; 990; 1090; 1190; 1250, 1260, 1290; 1390) sich auf einem Trommelrad (133; 233; 333; 1060; 1080) des rotierenden Systems (130, 131, 133; 230, 231a-b, 233; 330, 331, 333; 900a-c; 1000a-d; 1100a-c; 1200a-f; 1300) befindet und vorzugsweise daran befestigt, beispielsweise eingeklemmt, dicht eingepasst, geklebt, genietet, eingeschnappt, gelötet, federnd befestigt, geschraubt, eingespannt oder geschweißt, ist, wobei das Trommelrad (133; 233; 333; 1060; 1080) mit der Trommel (130; 230; 330; 910; 1010; 1110; 1210; 1310) gekoppelt und um die Achse (132; 232; 332; 420; 520; 620; 720; 820; 920; 1020; 1120; 1220; 1320) rotierbar ist; oder

- die Kammer (490; 590; 690; 790; 890a-c; 990; 1090; 1190; 1250, 1260, 1290; 1390) einstückig mit dem Trommelrad (133; 233; 333; 1060; 1080) ausgebildet ist; oder
- die Kammer (490; 590; 690; 790; 890a-c; 990; 1090; 1190; 1250, 1260, 1290; 1390) einstückig mit einer Welle (131; 231a-b; 331; 950a-b; 1050; 1350) des rotierenden Systems (130, 131, 133; 230, 231a-b, 233; 330, 331, 333; 900a-c; 1000a-d; 1100a-c; 1200a-f; 1300) ausgebildet ist, wobei die Welle (131; 231a-b; 331; 950a-b; 1050; 1350) mit der Trommel (130; 230; 330; 910; 1010; 1110; 1210; 1310) gekoppelt und um die Achse (132; 232; 332; 420; 520; 620; 720; 820; 920; 1020; 1120; 1220; 1320) rotierbar ist.

5. Verfahren nach einem der Ansprüche 1 bis 4, wobei

- die Kammer (490; 590; 690; 790; 890a-c; 990; 1090; 1190; 1250, 1260, 1290; 1390) eine Oberfläche, beispielsweise eine Umfangsauswuchtfläche (430; 530; 630; 730), mit einer Nanostruktur umfasst, wobei die Nanostruktur beispielsweise durch ein Material, wie Nanopartikel enthaltenden Lack, ausgebildet ist oder auf die Oberfläche aufgedruckt wird; oder
- die Kammer (490; 590; 690; 790; 890a-c; 990; 1090; 1190; 1250, 1260, 1290; 1390) strukturiert, beispielsweise wabenartig gemustert, ist; oder
- die Kammer (490; 590; 690; 790; 890a-c; 990; 1090; 1190; 1250, 1260, 1290; 1390) eine einer Mehrzahl von Kammern (490; 590; 690; 790; 890a-c; 990; 1090; 1190; 1250, 1260, 1290; 1390) ist, wobei die Mehrzahl von Kammern (490; 590; 690; 790; 890a-c; 990; 1090; 1190; 1250, 1260, 1290; 1390) vorzugsweise parallel oder konzentrisch oder in einer Kombination davon angeordnet ist, wobei die Mehrzahl von Kammern (490; 590; 690; 790; 890a-c; 990; 1090; 1190; 1250, 1260, 1290; 1390) vorzugsweise isoliert oder gekoppelt, beispielsweise miteinander verbunden, ist, wobei jede der Mehrzahl von isolierten Kammern (490; 590; 690; 790; 890a-c; 990; 1090; 1190; 1250, 1260, 1290; 1390) vorzugsweise eine thixotrope Auswuchtsubstanz (440; 540; 640; 740) in einer anderen Menge oder von einer anderen Art umfasst, wobei die Mehrzahl von gekoppelten Kammern (490; 590; 690; 790; 890a-c; 990; 1090; 1190; 1250, 1260, 1290; 1390) vorzugsweise in Fluidverbindung ist und wobei die Mehrzahl von gekoppelten Kammern (490; 590; 690; 790; 890a-c; 990; 1090; 1190; 1250, 1260, 1290; 1390) vorzugsweise Erweiterungskammern (1395a-c) umfasst; oder

- die Kammer (490; 590; 690; 790; 890a-c; 990; 1090; 1190; 1250, 1260, 1290; 1390) einen Außendurchmesser von zwischen etwa 0,1 m und etwa 10 m, beispielsweise zwischen etwa 0,2 m und etwa 1,5 m, vorzugsweise zwischen etwa 0,5 m und etwa 1 m, wie etwa 0,75 m aufweist; oder
- die Kammer (490; 590; 690; 790; 890a-c; 990; 1090; 1190; 1250, 1260, 1290; 1390) eine Länge von zwischen etwa 0,01 m und etwa 2 m, beispielsweise zwischen etwa 0,02 m und etwa 1 m, vorzugsweise zwischen etwa 0,05 m und etwa 0,5 m, wie etwa 0,1 m aufweist; oder
- eine Kombination davon.

6. Verfahren nach einem der Ansprüche 1 bis 5, wobei

- die Kammer (490; 590; 690; 790; 890a-c; 990; 1090; 1190; 1250, 1260, 1290; 1390) sich in einem Behälter (410, 450a-b; 510, 550; 610, 650a-b, 670; 710, 750a-b; 810, 850a-b) befindet; und
- der Behälter (410, 450a-b; 510, 550; 610, 650a-b, 670; 710, 750a-b; 810, 850a-b) Metall umfasst, beispielsweise Stahl, vorzugsweise Edelstahl, Aluminium oder Kupfer, oder ein Verbundmaterial, beispielsweise glasfaserverstärktes Material oder kohlenstofffaserverstärktes Material, oder ein synthetisches Material, beispielsweise Kunststoff oder Plexiglas; oder
- der Behälter (410, 450a-b; 510, 550; 610, 650a-b, 670; 710, 750a-b; 810, 850a-b) umgerüstet, geformt, beispielsweise spritzgeformt, oder extrudiert ist; oder
- der Behälter (410, 450a-b; 510, 550; 610, 650a-b, 670; 710, 750a-b; 810, 850a-b) expandierbar, flexibel, verformbar oder eine Kombination davon ist; oder
- der Behälter (410, 450a-b; 510, 550; 610, 650a-b, 670; 710, 750a-b; 810, 850a-b) geschlossen, vorzugsweise luftdicht, ist, wobei der Behälter (410, 450ab; 510, 550; 610, 650a-b, 670; 710, 750a-b; 810, 850a-b) vorzugsweise einstückig ausgebildet ist, wobei der Behälter (410, 450a-b; 510, 550; 610, 650ab, 670; 710, 750a-b; 810, 850a-b) vorzugsweise im Wesentlichen in Bezug auf die Achse (132; 232; 332; 420; 520; 620; 720; 820; 920; 1020; 1120; 1220; 1320) ausgewuchtet ist, wobei der Behälter (410, 450a-b; 510, 550; 610, 650a-b, 670; 710, 750a-b; 810, 850a-b vorzugsweise während des Formen des Behälters oder durch eine Öffnung mit der Menge an einer thixotropen Auswuchtsubstanz (440; 540; 640; 740) gefüllt wird, wobei sich die Öffnung vorzugsweise an einer inneren Umfangswand oder einer Seitenwand (450a-b; 650a-b; 750a-b; 850a-b) des Behälters (410, 450a-b; 510, 550; 610, 650a-b, 670; 710, 750a-b; 810, 850a-b) befindet und wobei die Öffnung vorzugsweise mit einer Dichtung (680), beispielsweise einer Klebeeinlage, einer Membran, wie einer selbstdichtenden Membran, einem Stopfen, wie einem Einschnappstopfen, einer Schraube oder einem Ventil abgedichtet ist; oder
- der Behälter (410, 450a-b; 510, 550; 610, 650a-b, 670; 710, 750a-b; 810, 850a-b) durchsichtig oder durchscheinend ist; oder
- der Behälter (410, 450a-b; 510, 550; 610, 650a-b, 670; 710, 750a-b; 810, 850a-b) mit einer oder der Welle (131; 231b; 331; 1050) über eine oder die Seitenwand (450a-b; 650a-b; 750a-b; 850a-b) des Behälters (410, 450a-b; 510, 550; 610, 650a-b, 670; 710, 750a-b; 810, 850a-b), eine Scheibe oder Speichen (465a-b; 665a-b; 1065) gekoppelt ist, wobei die Speichen (465a-b; 665a-b; 1065) vorzugsweise gleichmäßig voneinander beabstandet sind; oder
- eine Kombination davon.

7. Verfahren nach einem der Ansprüche 1 bis 6, wobei

- die Menge an der thixotropen Auswuchtsubstanz (440; 540; 640; 740) zwischen etwa 0,01 kg und etwa 20 kg, beispielsweise zwischen etwa 0,1 kg und etwa 10 kg, vorzugsweise zwischen etwa 0,5 kg und etwa 5 kg, wie etwa 1 kg ist; oder
- die Kammer (490; 590; 690; 790; 890a-c; 990; 1090; 1190; 1250, 1260, 1290; 1390) mit der Menge an der thixotropen Auswuchtsubstanz (440; 540; 640; 740) zu zwischen etwa 1 % und etwa 90 %, beispielsweise zwischen etwa 10 % und etwa 80 %, vorzugsweise zwischen etwa 25 % und etwa 75 %, wie etwa 50 % gefüllt ist; oder
- eine Kombination davon.

8. Verfahren nach einem der Ansprüche 1 bis 7, wobei

- ein Gewichtskörper mit der thixotropen Auswuchtsubstanz (440; 540; 640; 740) in Kontakt ist; und
- und der Gewichtskörper, festgelegt durch eine Körpergröße des Gewichtskörpers, eine Körperoberfläche und ein Körpergewicht aufweist, sodass der Gewichtskörper Adhäsion zwischen der Körperoberfläche und der thixotropen Auswuchtsubstanz (440; 540; 640; 740) überwinden kann, wenn die thixotrope Auswuchtsubstanz (440; 540; 640; 740) den Vibrationen ausgesetzt ist und in einen bewegten Zustand übergeht; oder
- der Gewichtskörper vorzugsweise eine Kugel ist; oder
- der Gewichtskörper Metall, beispielsweise Stahl, wie Edelstahl, umfasst; oder
- eine Kombination davon.

9. Auswuchtvorrichtung (400, 400e-400k; 500; 600, 600e-600n; 700, 700c-700i; 800; 960a-960h, 970a-970f; 1200a-1200f; 1360a-b, 1370a-c) zur Verringerung von Vibrationen in einem rotierenden System (130, 131, 133, 230, 231a-b, 233; 330, 331, 333) einer Artikelbearbeitungsmaschine (100; 200; 300), beispielsweise einer Waschmaschine, umfassend:

- eine im Wesentlichen kreisförmige Kammer (490; 590; 690; 790; 890a-c; 990; 1090; 1190; 1250, 1260, 1290; 1390) mit einem Drehpunkt auf einer Achse (132; 232; 332; 420; 520; 620; 720; 820; 920; 1020; 1120; 1220; 1320) des rotierenden Systems (130, 131, 133; 230, 231a-b, 233; 330, 331, 333; 900a-c; 1000a-d; 1100a-c; 1200a-f; 1300), die teilweise mit einer Menge an Auswuchtsubstanz (440; 540; 640; 740) gefüllt ist, und **dadurch gekennzeichnet, dass**
- die Auswuchtsubstanz (440; 540; 640; 740) eine thixotrope Auswuchtsubstanz (440; 540; 640; 740) ist, die aufgrund der Vibrationen von einem entspannten Zustand in einen bewegten Zustand übergeht und sich verteilt.

10. Auswuchtvorrichtung (400, 400e-400k; 500; 600, 600e-600n; 700, 700c-700i; 800; 960a-960h, 970a-970f; 1200a-1200f; 1360a-b, 1370a-c) nach Anspruch 9, wobei:

- die thixotrope Auswuchtsubstanz (440; 540; 640; 740) einen Fließspannungswert zwischen ungefähr 1 Pa und ungefähr 400 Pa, beispielsweise zwischen ungefähr 2 Pa und ungefähr 260 Pa, wie ungefähr 30 Pa, aufweist.

11. Auswuchtvorrichtung (400, 400e-400k; 500; 600, 600e-600n; 700, 700c-700i; 800; 960a-960h, 970a-970f; 1200a-1200f; 1360a-b, 1370a-c) nach Anspruch 9 oder 10, wobei:

- die Kammer (490; 590; 690; 790; 890a-c; 990; 1090; 1190; 1250, 1260, 1290; 1390) ringförmig ist und vorzugsweise einen Querschnitt aufweist, der rechteckig (400e; 600e), quadratisch, halbelliptisch (400f), elliptisch (600f), halbkreisförmig (400g; 600g, 600i), kreisförmig (600h), trapezförmig (400h; 600j), dreieckig (600k), V-förmig, M-förmig (400i; 600l), umgekehrt halbelliptisch (400j; 600m), umgekehrt halbkreisförmig (400k; 600n), glockenförmig, oval oder hexagonal ist; oder
- die Kammer (490; 590; 690; 790; 890a-c; 990; 1090; 1190; 1250, 1260, 1290; 1390) zylinderförmig ist und einen Mantel aufweist, der vorzugsweise gerade (700c), verbreitert gerade (700f), elliptisch konvex (700d), kreisförmig konvex (700e), V-förmig, M-förmig (700g), elliptisch konkav (700h) oder kreisförmig konkav (700i) ist.

12. Auswuchtvorrichtung (400, 400e-400k; 500; 600, 600e-600n; 700, 700c-700i; 800; 960a-960h, 970a-970f; 1200a-1200f; 1360a-b, 1370a-c) nach Anspruch 9, 10 oder 11, wobei:

- die Kammer (490; 590; 690; 790; 890a-c; 990; 1090; 1190; 1250, 1260, 1290; 1390) eine Oberfläche, beispielsweise eine Umfangsauswuchtfläche (430; 530; 630; 730), mit einer Nanostruktur umfasst, wobei die Nanostruktur beispielsweise durch ein Material, wie Nanopartikel enthaltenden Lack, ausgebildet ist oder auf die Oberfläche aufgedruckt wird; oder
- die Kammer (490; 590; 690; 790; 890a-c; 990; 1090; 1190; 1250, 1260, 1290; 1390) strukturiert, beispielsweise wabenartig gemustert, ist; oder
- die Kammer (490; 590; 690; 790; 890a-c; 990; 1090; 1190; 1250, 1260, 1290; 1390) eine einer Mehrzahl von Kammern (490; 590; 690; 790; 890a-c; 990; 1090; 1190; 1250, 1260, 1290; 1390) ist, wobei die Mehrzahl von Kammern (490; 590; 690; 790; 890a-c; 990; 1090; 1190; 1250, 1260, 1290; 1390) vorzugsweise parallel oder konzentrisch oder in einer Kombination davon angeordnet ist, wobei die Mehrzahl von Kammern (490; 590; 690; 790; 890a-c; 990; 1090; 1190; 1250, 1260, 1290; 1390) vorzugsweise isoliert oder gekoppelt, beispielsweise miteinander verbunden, ist, wobei jede der Mehrzahl von isolierten Kammern (490; 590; 690; 790; 890a-c; 990; 1090; 1190; 1250, 1260, 1290; 1390) vorzugsweise eine thixotrope Auswuchtsubstanz (440; 540; 640; 740) in einer anderen Menge oder von einer anderen Art umfasst, wobei die Mehrzahl von gekoppelten Kammern (490; 590; 690; 790; 890a-c; 990; 1090; 1190; 1250, 1260, 1290; 1390) vorzugsweise in Fluidverbindung ist und wobei die Mehrzahl von gekoppelten Kammern (490; 590; 690; 790; 890a-c; 990; 1090; 1190; 1250, 1260, 1290; 1390) vorzugsweise Erweiterungskammern (1395a-c) umfasst; oder
- die Kammer (490; 590; 690; 790; 890a-c; 990; 1090; 1190; 1250, 1260, 1290; 1390) einen Außendurchmesser von zwischen etwa 0,1 m und etwa 10 m, beispielsweise zwischen etwa 0,2 m und etwa 1,5 m, vorzugsweise zwischen etwa 0,5 m und etwa 1 m, wie etwa 0,75 m aufweist; oder
- die Kammer (490; 590; 690; 790; 890a-c; 990; 1090; 1190; 1250, 1260, 1290; 1390) eine Länge von zwischen etwa 0,01 m und etwa 2 m, beispielsweise zwischen etwa 0,02 m und etwa 1 m, vorzugsweise zwischen etwa 0,05 m und etwa 0,5 m, wie etwa 0,1 m aufweist; oder
- eine Kombination davon.

13. Auswuchtvorrichtung (400, 400e-400k; 500; 600, 600e-600n; 700, 700c-700i; 800; 960a-960h, 970a-970f; 1200a-1200f; 1360a-b, 1370a-c) nach einem der Ansprüche 9 bis 12, wobei:

- die Kammer (490; 590; 690; 790; 890a-c; 990; 1090; 1190; 1250, 1260, 1290; 1390) sich in einem Behälter (410, 450a-b; 510; 550; 610, 650a-b, 670; 710; 750a-b; 810, 850a-b) befindet; und
- der Behälter (410, 450a-b; 510, 550; 610, 650a-b, 670; 710, 750a-b; 810, 850a-b) Metall umfasst, beispielsweise Stahl, vorzugsweise Edelstahl, Aluminium oder Kupfer, oder ein Verbundmaterial, beispielsweise glasfaserverstärktes Material oder kohlenstofffaserverstärktes Material, oder ein synthetisches Material, beispielsweise Kunststoff oder Plexiglas; oder
- der Behälter (410, 450a-b; 510, 550; 610, 650a-b, 670; 710, 750a-b; 810, 850a-b) umgerüstet, geformt, beispielsweise spritzgeformt, oder extrudiert ist; oder
- der Behälter (410, 450a-b; 510, 550; 610, 650a-b, 670; 710, 750a-b; 810, 850a-b) expandierbar, flexibel, verformbar oder eine Kombination davon ist; oder
- der Behälter (410, 450a-b; 510, 550; 610, 650a-b, 670; 710, 750a-b; 810, 850a-b) geschlossen, vorzugsweise luftdicht, ist, wobei der Behälter (410, 450ab; 510, 550; 610, 650a-b, 670; 710, 750a-b; 810, 850a-b) vorzugsweise einstückig ausgebildet ist, wobei der Behälter (410, 450a-b; 510, 550; 610, 650ab, 670; 710, 750a-b; 810, 850a-b) vorzugsweise im Wesentlichen in Bezug auf die Achse (132; 232; 332; 420; 520; 620; 720; 820; 920; 1020; 1120; 1220; 1320) ausgewuchtet ist, wobei der Behälter (410, 450a-b; 510, 550; 610, 650a-b, 670; 710, 750a-b; 810, 850a-b vorzugsweise während des Formen des Behälters oder durch eine Öffnung mit der Menge an einer thixotropen Auswuchtsubstanz (440; 540; 640; 740) gefüllt wird, wobei sich die Öffnung vorzugsweise an einer inneren Umfangswand oder einer Seitenwand (450a-b; 650a-b; 750a-b; 850a-b) des Behälters (410, 450a-b; 510, 550; 610, 650a-b, 670; 710, 750a-b; 810, 850a-b) befindet und wobei die Öffnung vorzugsweise mit einer Dichtung (680), beispielsweise einer Klebeeinlage, einer Membran, wie einer selbstdichtenden Membran, einem Stopfen, wie einem Einschnappstopfen, einer Schraube oder einem Ventil abgedichtet ist; oder

- der Behälter (410, 450a-b; 510, 550; 610, 650a-b, 670; 710, 750a-b; 810, 850a-b) durchsichtig oder durchscheinend ist; oder
- der Behälter (410, 450a-b; 510, 550; 610, 650a-b, 670; 710, 750a-b; 810, 850a-b) mit einer oder der Welle (131; 231b; 331; 1050) über eine oder die Seitenwand (450a-b; 650a-b; 750a-b; 850a-b) des Behälters (410, 450a-b; 510, 550; 610, 650a-b, 670; 710, 750a-b; 810, 850a-b), eine Scheibe oder Speichen (465a-b; 665a-b; 1065) gekoppelt ist, wobei die Speichen (465a-b; 665a-b; 1065) vorzugsweise gleichmäßig voneinander beabstandet sind; oder
- eine Kombination davon.

14. Auswuchtvorrichtung (400, 400e-400k; 500; 600, 600e-600n; 700, 700c-700i; 800; 960a-960h, 970a-970f; 1200a-1200f; 1360a-b, 1370a-c) nach einem der Ansprüche 9 bis 13, wobei:

- die Menge an der thixotropen Auswuchtsubstanz (440; 540; 640; 740) zwischen etwa 0,01 kg und etwa 20 kg, beispielsweise zwischen etwa 0,1 kg und etwa 10 kg, vorzugsweise zwischen etwa 0,5 kg und etwa 5 kg, wie etwa 1 kg ist; oder
- die Kammer (490; 590; 690; 790; 890a-c; 990; 1090; 1190; 1250, 1260, 1290; 1390) mit der Menge an der thixotropen Auswuchtsubstanz (440; 540; 640; 740) zu zwischen etwa 1 % und etwa 90 %, beispielsweise zwischen etwa 10 % und etwa 80 %, vorzugsweise zwischen etwa 25 % und etwa 75 %, wie etwa 50 % gefüllt ist; oder
- eine Kombination davon.

15. Trommel (130; 230; 330; 910; 1010; 1110; 1210; 1310), umfassend die Auswuchtvorrichtung (400, 400e-400k; 500; 600, 600e-600n; 700, 700c-700i; 800; 960a-960h, 970a-970f; 1200a-1200f; 1360a-b, 1370a-c) nach einem der Ansprüche 9 bis 14, wobei die Vorrichtung (400, 400e-400k; 500; 600, 600e-600n; 700, 700c-700i; 800; 960a-960h, 970a-970f; 1200a-1200f; 1360a-b, 1370a-c) vorzugsweise an der Trommel (130; 230; 330; 910; 1010; 1110; 1210; 1310) befestigt, beispielsweise eingeklemmt, dicht eingepasst, geklebt, genietet, eingeschnappt, gelötet, federnd befestigt, geschraubt, eingespannt oder geschweißt, oder einstückig damit ausgebildet ist, und wobei die Trommel (130; 230; 330; 910; 1010; 1110; 1210; 1310) vorzugsweise im Wesentlichen in Bezug auf die Achse (132; 232; 332; 420; 520; 620; 720; 820; 920; 1020; 1120; 1220; 1320) ausgewuchtet ist.

16. Trommelrad (133; 233; 333; 1060; 1080), umfassend die Auswuchtvorrichtung (400, 400e-400k; 500; 600, 600e-600n; 700, 700c-700i; 800; 960a-960h, 970a-970f; 1200a-1200f; 1360a-b, 1370a-c) nach einem der Ansprüche 9 bis 14, wobei die Auswuchtvorrichtung (400, 400e-400k; 500; 600, 600e-600n; 700, 700c-700i; 800; 960a-960h, 970a-970f; 1200a-1200f; 1360a-b, 1370a-c) vorzugsweise an dem Trommelrad (133; 233; 333; 1060; 1080) befestigt, beispielsweise eingeklemmt, dicht eingepasst, geklebt, genietet, eingeschnappt, gelötet, federnd befestigt, geschraubt, eingespannt oder geschweißt, oder einstückig damit ausgebildet ist, und wobei das Trommelrad (133; 233; 333; 1060; 1080;) vorzugsweise im Wesentlichen in Bezug auf die Achse (132; 232; 332; 420; 520; 620; 720; 820; 920; 1020; 1120; 1220; 1320) ausgewuchtet ist.

## Revendications

1. Procédé pour la réduction de vibrations dans un système rotatif (130, 131, 133 ; 230, 231a-b, 233 ; 330, 331, 333 ; 900a-c ; 1000a-d ; 1100a-c ; 1200a-f ; 1300) d'une machine de traitement d'articles (100 ; 200 ; 300), par exemple une machine à laver, comprenant les étapes suivantes :

- apport d'une chambre essentiellement circulaire (490 ; 590 ; 690 ; 790 ; 890a-c ; 990 ; 1090 ; 1190 ; 1250, 1260, 1290 ; 1390) possédant un pivot sur un axe (132 ; 232 ; 332 ; 420 ; 520 ; 620 ; 720 ; 820 ; 920 ; 1020 ; 1120 ; 1220 ; 1320) dudit système rotatif (130, 131, 133 ; 230, 231a-b, 233 ; 330, 331, 333 ; 900a-c ; 1000a-d ; 1100a-c ; 1200a-f ; 1300) et étant partiellement remplie d'une quantité d'une substance d'équilibrage (440 ; 540 ; 640 ; 740), et
- équilibrage dudit système rotatif (130, 131, 133 ; 230, 231a-b, 233 ; 330, 331, 333 ; 900a-c ; 1000a-d ; 1100a-c ; 1200a-f ; 1300) en répartissant ladite quantité de ladite substance d'équilibrage (440 ; 540 ; 640 ; 740) dans ladite chambre (490 ; 590 ; 690 ; 790 ; 890a-c ; 990 ; 1090 ; 1190 ; 1250, 1260, 1290 ; 1390),
**caractérisé en ce que**
- ladite substance d'équilibrage (440 ; 540 ; 640 ; 740) est une substance d'équilibrage thixotrope (440 ; 540 ; 640 ; 740) qui, en raison desdites vibrations, passe d'un état statique à un état agité et se répartit.

**2.** Le procédé de la revendication 1, dans lequel :

- ladite substance d'équilibrage thixotrope (440 ; 540 ; 640 ; 740) possède une valeur de contrainte d'écoulement comprise entre environ 1 Pa et environ 400 Pa, par exemple entre environ 2 Pa et environ 260 Pa, telle qu'environ 30 Pa.

**3.** Le procédé de la revendication 1 ou 2, dans lequel :

- ladite chambre (490 ; 590 ; 690 ; 790 ; 890a-c ; 990 ; 1090 ; 1190 ; 1250, 1260, 1290 ; 1390) est annulaire et possède de préférence une section transversale rectangulaire (400e ; 600e), quadrique, semi-elliptique (400f), elliptique (600f), semi-circulaire (400g ; 600g, 600i), circulaire (600h), trapézoïdale (400h ; 600j), triangulaire (600k), en V, en M (400i ; 600l), semi-elliptique inversée (400j ; 600m), semi-circulaire inversée (400k ; 600n), en cloche, ovale ou hexagonale ; ou
- ladite chambre (490 ; 590 ; 690 ; 790 ; 890a-c ; 990 ; 1090 ; 1190 ; 1250, 1260, 1290 ; 1390) est cylindrique et possède une enveloppe de préférence droite (700c), droite élargie (700f), convexe elliptique (700d), convexe circulaire (700e), en V, en M (700g), concave elliptique (700h) ou concave circulaire (700i).

**4.** Le procédé de la revendication 1, 2 ou 3, dans lequel :

- ladite chambre (490 ; 590 ; 690 ; 790 ; 890a-c ; 990 ; 1090 ; 1190 ; 1250, 1260, 1290 ; 1390) est située à l'intérieur de, et de préférence fixée, par exemple par pincement, emmanchement, collage, rivetage, enclenchement, brasage, montage par ressort, vissage, tension ou soudage, à un tambour (130 ; 230 ; 330 ; 910 ; 1010 ; 1110 ; 1210 ; 1310) dudit système rotatif (130, 131, 133 ; 230, 231a-b, 233 ; 330, 331, 333 ; 900a-c ; 1000a-d ; 1100a-c ; 1200a-f ; 1300), ledit tambour (130 ; 230 ; 330 ; 910 ; 1010 ; 1110 ; 1210 ; 1310) étant capable de tourner autour dudit axe (132 ; 232 ; 332 ; 420 ; 520 ; 620 ; 720 ; 820 ; 920 ; 1020 ; 1120 ; 1220 ; 1320), ledit tambour (130 ; 230 ; 330 ; 910 ; 1010 ; 1110 ; 1210 ; 1310) comprenant de préférence un logement pour recevoir ladite chambre (490 ; 590 ; 690 ; 790 ; 890a-c ; 990 ; 1090 ; 1190 ; 1250, 1260, 1290 ; 1390), et ladite chambre (490 ; 590 ; 690 ; 790 ; 890a-c ; 990 ; 1090 ; 1190 ; 1250, 1260, 1290 ; 1390) étant par exemple située sur une paroi circonférentielle ou une paroi latérale dudit tambour (130 ; 230 ; 330 ; 910 ; 1010 ; 1110 ; 1210 ; 1310); ou
- ladite chambre (490 ; 590 ; 690 ; 790 ; 890a-c ; 990 ; 1090 ; 1190 ; 1250, 1260, 1290 ; 1390) est située à l'extérieur de, et de préférence fixée, au dit tambour (130 ; 230 ; 330 ; 910 ; 1010 ; 1110 ; 1210 ; 1310) ; ou
- ladite chambre (490 ; 590 ; 690 ; 790 ; 890a-c ; 990 ; 1090 ; 1190 ; 1250, 1260, 1290 ; 1390) est intégrée à l'intérieur dudit tambour (130 ; 230 ; 330 ; 910 ; 1010 ; 1110 ; 1210 ; 1310), ledit tambour (130 ; 230 ; 330 ; 910 ; 1010 ; 1110 ; 1210 ; 1310) possédant de préférence une paroi au moins partiellement double ; ou
- ladite chambre (490 ; 590 ; 690 ; 790 ; 890a-c ; 990 ; 1090 ; 1190 ; 1250, 1260, 1290 ; 1390) est située sur, et de préférence fixée, par exemple par pincement, emmanchement, collage, rivetage, enclenchement, brasage, montage par ressort, vissage, tension ou soudage, à une roue de tambour (133 ; 233 ; 333 ; 1060 ; 1080) dudit système rotatif (130, 131, 133 ; 230, 231a-b, 233 ; 330, 331, 333 ; 900a-c ; 1000a-d ; 1100a-c ; 1200a-f ; 1300), ladite roue de tambour (133 ; 233 ; 333 ; 1060 ; 1080) étant couplée au dit tambour (130 ; 230 ; 330 ; 910 ; 1010 ; 1110 ; 1210 ; 1310) et capable de tourner autour dudit axe (132 ; 232 ; 332 ; 420 ; 520 ; 620 ; 720 ; 820 ; 920 ; 1020 ; 1120 ; 1220 ; 1320) ; ou
- ladite chambre (490 ; 590 ; 690 ; 790 ; 890a-c ; 990 ; 1090 ; 1190 ; 1250, 1260, 1290 ; 1390) est intégrée à l'intérieur de ladite roue de tambour (133 ; 233 ; 333 ; 1060 ; 1080) ; ou
- ladite chambre (490 ; 590 ; 690 ; 790 ; 890a-c ; 990 ; 1090 ; 1190 ; 1250, 1260, 1290 ; 1390) est intégrée à l'intérieur d'un arbre (131 ; 231a-b ; 331 ; 950a-b ; 1050 ; 1350) dudit système rotatif (130, 131, 133 ; 230, 231a-b, 233 ; 330, 331, 333 ; 900a-c ; 1000a-d ; 1100a-c ; 1200a-f ; 1300), ledit arbre (131 ; 231a-b ; 331 ; 950a-b ; 1050 ; 1350) étant couplé au dit tambour (130 ; 230 ; 330 ; 910 ; 1010 ; 1110 ; 1210 ; 1310) et capable de tourner autour dudit axe (132 ; 232 ; 332 ; 420 ; 520 ; 620 ; 720 ; 820 ; 920 ; 1020 ; 1120 ; 1220 ; 1320).

**5.** Le procédé de l'une des revendications 1 à 4, dans lequel :

- ladite chambre (490 ; 590 ; 690 ; 790 ; 890a-c ; 990 ; 1090 ; 1190 ; 1250, 1260, 1290 ; 1390) comprend une surface, par exemple une surface d'équilibrage circonférentielle (430 ; 530 ; 630 ; 730), possédant une nanostructure, ladite nanostructure étant, par exemple, formée par un matériau, tel qu'un vernis, comprenant des nanoparticules, ou imprimée sur ladite surface ; ou
- ladite chambre (490 ; 590 ; 690 ; 790 ; 890a-c ; 990 ; 1090 ; 1190 ; 1250, 1260, 1290 ; 1390) est structurée, par exemple en nid d'abeilles ; ou

- ladite chambre (490 ; 590 ; 690 ; 790 ; 890a-c ; 990 ; 1090 ; 1190 ; 1250, 1260, 1290 ; 1390) est l'une de plusieurs chambres (490 ; 590 ; 690 ; 790 ; 890a-c ; 990 ; 1090 ; 1190 ; 1250, 1260, 1290 ; 1390), lesdites plusieurs chambres (490 ; 590 ; 690 ; 790 ; 890a-c ; 990 ; 1090 ; 1190 ; 1250, 1260, 1290 ; 1390) étant de préférence disposées parallèlement ou concentriquement ou d'une manière combinant ces dispositions, lesdites plusieurs chambres (490 ; 590 ; 690 ; 790 ; 890a-c ; 990 ; 1090 ; 1190 ; 1250, 1260, 1290 ; 1390) étant de préférence isolées ou couplées, par exemple raccordées, chacune desdites plusieurs chambres isolées (490 ; 590 ; 690 ; 790 ; 890a-c ; 990 ; 1090 ; 1190 ; 1250, 1260, 1290 ; 1390) comprenant de préférence une substance d'équilibrage thixotrope (440 ; 540 ; 640 ; 740) dans une quantité différente ou d'un type différent, lesdites plusieurs chambres couplées (490 ; 590 ; 690 ; 790 ; 890a-c ; 990 ; 1090 ; 1190 ; 1250, 1260, 1290 ; 1390) étant de préférence en communication par fluide les unes avec les autres, et lesdites plusieurs chambres couplées (490 ; 590 ; 690 ; 790 ; 890a-c ; 990 ; 1090 ; 1190 ; 1250, 1260, 1290 ; 1390) comprenant de préférence des chambres d'extension (1395a-c) ; ou
- ladite chambre (490 ; 590 ; 690 ; 790 ; 890a-c ; 990 ; 1090 ; 1190 ; 1250, 1260, 1290 ; 1390) possède un diamètre externe compris entre environ 0,1 m et environ 10 m, par exemple entre environ 0,2 m et environ 1,5 m, de préférence entre environ 0,5 m et environ 1 m, tel qu'environ 0,75 m ; ou
- ladite chambre (490 ; 590 ; 690 ; 790 ; 890a-c ; 990 ; 1090 ; 1190 ; 1250, 1260, 1290 ; 1390) possède une longueur comprise entre environ 0,01 m et environ 2 m, par exemple entre environ 0,02 m et environ 1 m, de préférence entre environ 0,05 m et environ 0,5 m, telle qu'environ 0,1 m ; ou
- une combinaison de cela.

6. Le procédé de l'une des revendications 1 à 5, dans lequel :

- ladite chambre (490 ; 590 ; 690 ; 790 ; 890a-c ; 990 ; 1090 ; 1190 ; 1250, 1260, 1290 ; 1390) est située dans une cuve (410, 450a-b ; 510, 550 ; 610, 650a-b, 670 ; 710, 750a-b ; 810, 850a-b) ; et
- ladite cuve (410, 450a-b ; 510, 550 ; 610, 650a-b, 670 ; 710, 750a-b ; 810, 850a-b) comprend du métal, par exemple de l'acier, de préférence de l'acier inoxydable, de l'aluminium ou du cuivre, ou un matériau composite, par exemple un matériau renforcé de fibre de verre ou un matériau renforcé de fibre de carbone, ou un matériau de synthèse, par exemple du plastique ou du plexiglas ; ou
- ladite cuve (410, 450a-b ; 510, 550 ; 610, 650a-b, 670 ; 710, 750a-b ; 810, 850a-b) est transformée, moulée, par exemple moulée par injection, ou extrudée ; ou
- ladite cuve (410, 450a-b ; 510, 550 ; 610, 650a-b, 670 ; 710, 750a-b ; 810, 850a-b) est expansible, souple, déformable ou une combinaison de cela ; ou
- ladite cuve (410, 450a-b ; 510, 550 ; 610, 650a-b, 670 ; 710, 750a-b ; 810, 850a-b) est fermée, de préférence étanche à l'air, ladite cuve (410, 450a-b ; 510, 550 ; 610, 650a-b, 670 ; 710, 750a-b ; 810, 850a-b) étant de préférence formée d'un seul tenant, ladite cuve (410, 450a-b ; 510, 550 ; 610, 650a-b, 670 ; 710, 750a-b ; 810, 850a-b) étant de préférence essentiellement équilibrée par rapport au dit axe (132 ; 232 ; 332 ; 420 ; 520 ; 620 ; 720 ; 820 ; 920 ; 1020 ; 1120 ; 1220 ; 1320), ladite cuve (410, 450a-b ; 510, 550 ; 610, 650a-b, 670 ; 710, 750a-b ; 810, 850a-b) étant de préférence remplie de la quantité de substance d'équilibrage thixotrope (440 ; 540 ; 640 ; 740) pendant la mise en forme de la cuve ou au travers d'une ouverture, ladite ouverture étant de préférence située sur une paroi circonférentielle interne ou une paroi latérale (450a-b ; 650a-b ; 750a-b ; 850a-b) de ladite cuve (410, 450a-b ; 510, 550 ; 610, 650a-b, 670 ; 710, 750a-b ; 810, 850a-b), et ladite ouverture étant de préférence obturée par un obturateur (680), par exemple un tampon adhésif, une membrane, telle qu'une membrane auto-obturante, un bouchon, tel qu'un bouchon encliquetable, une vis ou une valve ; ou
- ladite cuve (410, 450a-b ; 510, 550 ; 610, 650a-b, 670 ; 710, 750a-b ; 810, 850a-b) est transparente ou translucide ; ou
- ladite cuve (410, 450a-b ; 510, 550 ; 610, 650a-b, 670 ; 710, 750a-b ; 810, 850a-b) est couplée à un ou au dit arbre (131 ; 231b ; 331 ; 1050) par l'intermédiaire d'une ou de ladite paroi latérale (450a-b ; 650a-b ; 750a-b ; 850a-b) de ladite cuve (410, 450a-b ; 510, 550 ; 610, 650a-b, 670 ; 710, 750a-b ; 810, 850a-b), d'un disque ou de bras (465a-b ; 665a-b ; 1065), lesdits bras (465a-b ; 665a-b ; 1065) étant de préférence régulièrement espacés les uns des autres ; ou
- une combinaison de cela.

7. Le procédé de l'une des revendications 1 à 6, dans lequel :

- ladite quantité de ladite substance d'équilibrage thixotrope (440 ; 540 ; 640 ; 740) est comprise entre environ 0,01 kg et environ 20 kg, par exemple entre environ 0,1 kg et environ 10 kg, de préférence entre environ 0,5 kg et environ 5 kg, telle qu'environ 1 kg ; ou
- ladite chambre (490 ; 590 ; 690 ; 790 ; 890a-c ; 990 ; 1090 ; 1190 ; 1250, 1260, 1290 ; 1390) est remplie de ladite quantité de ladite substance d'équilibrage thixotrope (440 ; 540 ; 640 ; 740) dans une proportion comprise entre environ 1 % et environ 90 %, par exemple entre environ 10 % et environ 80 %, de préférence entre environ 25 % et environ 75 %, telle qu'environ 50 % ; ou
- une combinaison de cela.

8. Le procédé de l'une des revendications 1 à 7, dans lequel :

- un corps de masse est en contact avec ladite substance d'équilibrage thixotrope (440 ; 540 ; 640 ; 740) ; et
- ledit corps de masse possède, définies par une taille de corps dudit corps de masse, une surface de corps et une masse de corps, telles que ledit corps de masse s'affranchit de l'adhérence entre ladite surface de corps et ladite substance d'équilibrage thixotrope (440 ; 540 ; 640 ; 740) quand ladite substance d'équilibrage thixotrope (440 ; 540 ; 640 ; 740) est soumise aux dites vibrations et passe à un état agité ; ou
- ledit corps de masse est de préférence une boule ; ou
- ledit corps de masse comprend du métal, par exemple de l'acier, tel que de l'acier inoxydable ; ou
- une combinaison de cela.

9. Dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) pour la réduction de vibrations dans un système rotatif (130, 131, 133 ; 230, 231a-b, 233 ; 330, 331, 333) d'une machine de traitement d'articles (100 ; 200 ; 300), par exemple une machine à laver, comprenant :

- une chambre essentiellement circulaire (490 ; 590 ; 690 ; 790 ; 890a-c ; 990 ; 1090 ; 1190 ; 1250, 1260, 1290 ; 1390) possédant un pivot sur un axe (132 ; 232 ; 332 ; 420 ; 520 ; 620 ; 720 ; 820 ; 920 ; 1020 ; 1120 ; 1220 ; 1320) dudit système rotatif (130, 131, 133 ; 230, 231a-b, 233 ; 330, 331, 333 ; 900a-c ; 1000a-d ; 1100a-c ; 1200a-f ; 1300) et étant partiellement remplie d'une quantité d'une substance d'équilibrage (440 ; 540 ; 640 ; 740),
**caractérisé en ce que**
- ladite substance d'équilibrage (440 ; 540 ; 640 ; 740) est une substance d'équilibrage thixotrope (440 ; 540 ; 640 ; 740) qui, en raison desdites vibrations, passe d'un état statique à un état agité et se répartit.

10. Le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) de la revendication 9, dans lequel :

- ladite substance d'équilibrage thixotrope (440 ; 540 ; 640 ; 740) possède une valeur de contrainte d'écoulement comprise entre environ 1 Pa et environ 400 Pa, par exemple entre environ 2 Pa et environ 260 Pa, telle qu'environ 30 Pa.

11. Le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) de la revendication 9 ou 10, dans lequel :

- ladite chambre (490 ; 590 ; 690 ; 790 ; 890a-c ; 990 ; 1090 ; 1190 ; 1250, 1260, 1290 ; 1390) est annulaire et possède de préférence une section transversale rectangulaire (400e ; 600e), quadrique, semi-elliptique (400f), elliptique (600f), semi-circulaire (400g ; 600g, 600i), circulaire (600h), trapézoïdale (400h ; 600j), triangulaire (600k), en V, en M (400i ; 600l), semi-elliptique inversée (400j ; 600m), semi-circulaire inversée (400k ; 600n), en cloche, ovale ou hexagonale ; ou
- ladite chambre (490 ; 590 ; 690 ; 790 ; 890a-c ; 990 ; 1090 ; 1190 ; 1250, 1260, 1290 ; 1390) est cylindrique et possède une enveloppe de préférence droite (700c), droite élargie (700f), convexe elliptique (700d), convexe circulaire (700e), en V, en M (700g), concave elliptique (700h) ou concave circulaire (700i).

12. Le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) de la revendication 9, 10 ou 11, dans lequel :

- ladite chambre (490 ; 590 ; 690 ; 790 ; 890a-c ; 990 ; 1090 ; 1190 ; 1250, 1260, 1290 ; 1390) comprend une surface, par exemple une surface d'équilibrage circonférentielle (430 ; 530 ; 630 ; 730), possédant une nanostructure, ladite nanostructure étant, par exemple, formée par un matériau, tel qu'un vernis, comprenant des nanoparticules, ou imprimée sur ladite surface ; ou
- ladite chambre (490 ; 590 ; 690 ; 790 ; 890a-c ; 990 ; 1090 ; 1190 ; 1250, 1260, 1290 ; 1390) est structurée, par exemple en nid d'abeilles ; ou

- ladite chambre (490 ; 590 ; 690 ; 790 ; 890a-c ; 990 ; 1090 ; 1190 ; 1250, 1260, 1290 ; 1390) est l'une de plusieurs chambres (490 ; 590 ; 690 ; 790 ; 890a-c ; 990 ; 1090 ; 1190 ; 1250, 1260, 1290 ; 1390), lesdites plusieurs chambres (490 ; 590 ; 690 ; 790 ; 890a-c ; 990 ; 1090 ; 1190 ; 1250, 1260, 1290 ; 1390) étant de préférence disposées parallèlement ou concentriquement ou d'une manière combinant ces dispositions, lesdites plusieurs chambres (490 ; 590 ; 690 ; 790 ; 890a-c ; 990 ; 1090 ; 1190 ; 1250, 1260, 1290 ; 1390) étant de préférence isolées ou couplées, par exemple raccordées, chacune desdites plusieurs chambres isolées (490 ; 590 ; 690 ; 790 ; 890a-c ; 990 ; 1090 ; 1190 ; 1250, 1260, 1290 ; 1390) comprenant de préférence une substance d'équilibrage thixotrope (440 ; 540 ; 640 ; 740) dans une quantité différente ou d'un type différent, lesdites plusieurs chambres couplées (490 ; 590 ; 690 ; 790 ; 890a-c ; 990 ; 1090 ; 1190 ; 1250, 1260, 1290 ; 1390) étant de préférence en communication par fluide les unes avec les autres, et lesdites plusieurs chambres couplées (490 ; 590 ; 690 ; 790 ; 890a-c ; 990 ; 1090 ; 1190 ; 1250, 1260, 1290 ; 1390) comprenant de préférence des chambres d'extension (1395a-c) ; ou

- ladite chambre (490 ; 590 ; 690 ; 790 ; 890a-c ; 990 ; 1090 ; 1190 ; 1250, 1260, 1290 ; 1390) possède un diamètre externe compris entre environ 0,1 m et environ 10 m, par exemple entre environ 0,2 m et environ 1,5 m, de préférence entre environ 0,5 m et environ 1 m, tel qu'environ 0,75 m ; ou

- ladite chambre (490 ; 590 ; 690 ; 790 ; 890a-c ; 990 ; 1090 ; 1190 ; 1250, 1260, 1290 ; 1390) possède une longueur comprise entre environ 0,01 m et environ 2 m, par exemple entre environ 0,02 m et environ 1 m, de préférence entre environ 0,05 m et environ 0,5 m, telle qu'environ 0,1 m ; ou

- une combinaison de cela.

**13.** Le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) de l'une des revendications 9 à 12, dans lequel :

- ladite chambre (490 ; 590 ; 690 ; 790 ; 890a-c ; 990 ; 1090 ; 1190 ; 1250, 1260, 1290 ; 1390) est située dans une cuve (410, 450a-b ; 510, 550 ; 610, 650a-b, 670 ; 710, 750a-b ; 810, 850a-b) ; et

- ladite cuve (410, 450a-b ; 510, 550 ; 610, 650a-b, 670 ; 710, 750a-b ; 810, 850a-b) comprend du métal, par exemple de l'acier, de préférence de l'acier inoxydable, de l'aluminium ou du cuivre, ou un matériau composite, par exemple un matériau renforcé de fibre de verre ou un matériau renforcé de fibre de carbone, ou un matériau de synthèse, par exemple du plastique ou du plexiglas ; ou

- ladite cuve (410, 450a-b ; 510, 550 ; 610, 650a-b, 670 ; 710, 750a-b ; 810, 850a-b) est transformée, moulée, par exemple moulée par injection, ou extrudée ; ou

- ladite cuve (410, 450a-b ; 510, 550 ; 610, 650a-b, 670 ; 710, 750a-b ; 810, 850a-b) est expansible, souple, déformable ou une combinaison de cela ; ou

- ladite cuve (410, 450a-b ; 510, 550 ; 610, 650a-b, 670 ; 710, 750a-b ; 810, 850a-b) est fermée, de préférence étanche à l'air, ladite cuve (410, 450a-b ; 510, 550 ; 610, 650a-b, 670 ; 710, 750a-b ; 810, 850a-b) étant de préférence formée d'un seul tenant, ladite cuve (410, 450a-b ; 510, 550 ; 610, 650a-b, 670 ; 710, 750a-b ; 810, 850a-b) étant de préférence essentiellement équilibrée par rapport au dit axe (132 ; 232 ; 332 ; 420 ; 520 ; 620 ; 720 ; 820 ; 920 ; 1020 ; 1120 ; 1220 ; 1320), ladite cuve (410, 450a-b ; 510, 550 ; 610, 650a-b, 670 ; 710, 750a-b ; 810, 850a-b) étant de préférence remplie de la quantité de substance d'équilibrage thixotrope (440 ; 540 ; 640 ; 740) pendant la mise en forme de la cuve ou au travers d'une ouverture, ladite ouverture étant de préférence située sur une paroi circonférentielle interne ou une paroi latérale (450a-b ; 650a-b ; 750a-b ; 850a-b) de ladite cuve (410, 450a-b ; 510, 550 ; 610, 650a-b, 670 ; 710, 750a-b ; 810, 850a-b), et ladite ouverture étant de préférence obturée par un obturateur (680), par exemple un tampon adhésif, une membrane, telle qu'une membrane auto-obturante, un bouchon, tel qu'un bouchon encliquetable, une vis ou une valve ; ou

- ladite cuve (410, 450a-b ; 510, 550 ; 610, 650a-b, 670 ; 710, 750a-b ; 810, 850a-b) est transparente ou translucide ; ou

- ladite cuve (410, 450a-b ; 510, 550 ; 610, 650a-b, 670 ; 710, 750a-b ; 810, 850a-b) est couplée à un ou au dit arbre (131 ; 231b ; 331 ; 1050) par l'intermédiaire d'une ou de ladite paroi latérale (450a-b ; 650a-b ; 750a-b ; 850a-b) de ladite cuve (410, 450a-b ; 510, 550 ; 610, 650a-b, 670 ; 710, 750a-b ; 810, 850a-b), d'un disque ou de bras (465a-b ; 665a-b ; 1065), lesdits bras (465a-b ; 665a-b ; 1065) étant de préférence régulièrement espacés les uns des autres ; ou

- une combinaison de cela.

**14.** Le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) de l'une des revendications 9 à 13, dans lequel :

- ladite quantité de ladite substance d'équilibrage thixotrope (440 ; 540 ; 640 ; 740) est comprise entre environ 0,01 kg et environ 20 kg, par exemple entre environ 0,1 kg et environ 10 kg, de préférence entre environ 0,5 kg et environ 5 kg, telle qu'environ 1 kg ; ou
- ladite chambre (490 ; 590 ; 690 ; 790 ; 890a-c ; 990 ; 1090 ; 1190 ; 1250, 1260, 1290 ; 1390) est remplie de ladite quantité de ladite substance d'équilibrage thixotrope (440 ; 540 ; 640 ; 740) dans une proportion comprise entre environ 1 % et environ 90 %, par exemple entre environ 10 % et environ 80 %, de préférence entre environ 25 % et environ 75 %, telle qu'environ 50 % ; ou
- une combinaison de cela.

15. Tambour (130 ; 230 ; 330 ; 910 ; 1010 ; 1110 ; 1210 ; 1310) comprenant le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) tel que décrit dans l'une des revendications 9 à 14, ledit dispositif (400, 400e-400k ; 500 ; 600, 600e-600n ; 700, 700c-700i ; 800 ; 960a-960h, 970a-970f ; 1200a-1200f ; 1360a-b, 1370a-c) étant de préférence fixé, par exemple par pincement, emmanchement, collage, rivetage, enclenchement, brasage, montage par ressort, vissage, tension ou soudage, au ou formé d'un seul tenant par ledit tambour (130 ; 230 ; 330 ; 910 ; 1010 ; 1110 ; 1210 ; 1310), et ledit tambour (130 ; 230 ; 330 ; 910 ; 1010 ; 1110 ; 1210 ; 1310) étant de préférence essentiellement équilibré par rapport au dit axe (132 ; 232 ; 332 ; 420 ; 520 ; 620 ; 720 ; 820 ; 920 ; 1020 ; 1120 ; 1220 ; 1320).

16. Roue de tambour (133 ; 233 ; 333 ; 1060 ; 1080) comprenant le dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) tel que décrit dans l'une des revendications 9 à 14, ledit dispositif d'équilibrage (400, 400e-400k ; 500 ; 600, 600e-600n ; 700, 700c-700i ; 800 ; 960a-960h, 970a-970f ; 1200a-1200f ; 1360a-b, 1370a-c) étant de préférence fixé, par exemple par pincement, emmanchement, collage, rivetage, enclenchement, brasage, montage par ressort, vissage, tension ou soudage, à ou formé d'un seul tenant par ladite roue de tambour (133 ; 233 ; 333 ; 1060 ; 1080), et ladite roue de tambour (133 ; 233 ; 333 ; 1060 ; 1080) étant de préférence essentiellement équilibrée par rapport au dit axe (132 ; 232 ; 332 ; 420 ; 520 ; 620 ; 720 ; 820 ; 920 ; 1020 ; 1120 ; 1220 ; 1320).

*FIG. 1a)*

FIG. 1b)

200

FIG. 2a)

FIG. 2b)

300

310  312                                                     322

371                    360

372

330

320

340

331

341

321

353a                                                        353c

354a                                                        354c

343

342                                                        350c

350a

374

351a                                                        351c

352a    333    332                    373            352c

FIG. 3a)

300

FIG. 3b)

FIG. 4a)

FIG. 4b)

FIG. 4c)

FIG. 4d)

FIG. 4e)     FIG. 4f)     FIG. 4g)     FIG. 4h)

FIG. 4i)     FIG. 4j)     FIG. 4k)

EP 2 352 873 B1

500

510 — 530

540

550

590

520

580

570

*FIG. 5*

FIG. 6a)

FIG. 6b)

FIG. 6c)

FIG. 6d)

FIG. 6e)   FIG. 6f)   FIG. 6g)   FIG. 6h)

FIG. 6i)   FIG. 6j)   FIG. 6k)   FIG. 6l)

EP 2 352 873 B1

600m

610

690

FIG. 6m)

600n

610

690

FIG. 6n)

620

700

710

750a

FIG. 7a)

700

730

710

750a

750b

740

790

720

710

FIG. 7b)

FIG. 7c)  FIG. 7d)  FIG. 7e)  FIG. 7f)

FIG. 7g)  FIG. 7h)  FIG. 7i)

810 ─┐          800

850b

850a ─

890a  890b  890c

870 ─

820

810

FIG. 8a)

800          ┌─ 810

890a          850b

850a

890b

870

820

810

FIG. 8b)

810 ─┐          800

850b

850a ─

890a  890b  890c

820

810

FIG. 8c)

800          ┌─ 810

890a          850b

850a

890b

890c

820

810

FIG. 8d)

FIG. 9a)

FIG. 9b)

960a  960b  930  900b  960c  960d  960e  960f  910

990  990

940a

940b

920

950a

960g  970a  970b  970c  970d  970e  970f  960h

960a  960b  960c  960d  960e  960f

EP 2 352 873 B1

*FIG. 9c)*

FIG. 10a)                    FIG. 10b)

EP 2 352 873 B1

FIG. 10d)

FIG. 10c)

EP 2 352 873 B1

FIG. 11a)                    FIG. 11b)                    FIG. 11c)

FIG. 12a)

FIG. 12b)

EP 2 352 873 B1

FIG. 12e)

FIG. 12d)

FIG. 12c)

FIG. 12f)

*FIG. 13a)*

FIG. 13b)

FIG.14a)

FIG.14b)

**EP 2 352 873 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008052660 A1
- GB 2010926 A
- WO 2007126169 A1
- EP 1182291 B1
- US 20060000244 A1
- US 20060000245 A1
- EP 1918443 A1
- EP 1918445 A1
- US 5802885 A
- EP 0810318 B1
- EP 1032778 B1
- EP 0740716 B1
- EP 0811717 A2
- GB 2388849 A
- US 5916274 A
- WO 199910583 A
- US 5850749 A
- EP 0810317 B1
- EP 0924330 B1
- EP 0997568 B1
- US 2007283727 A1
- EP 1862576 A2
- US 20070277560 A1
- EP 1862578 A2
- US 20070277561 A1
- EP 1862577 A2
- US 20080105003 A1
- US 20080110212 A1
- DE 10106509 A1
- EP 0942196 B1
- WO 199950495 A
- DE 19742927 A1
- EP 0878575 B1
- WO 200028128 A
- WO 200190473 A1
- EP 1297209 B1
- US 20080141466 A1
- US 6647575 B2
- EP 1167612 B1
- US 2836083 A
- GB 2432594 A
- US 4044626 A
- EP 0421442 B1
- US 5709109 A
- EP 0716177 B1
- US 5855127 A
- US 4007612 A
- US 5513504 A
- US 6158257 A
- EP 1092801 B1
- US 2603982 A
- US 3799348 A
- GB 1268597 A
- GB 1401055 A
- EP 0371116 B1
- US 5561993 A
- US 5582040 A
- EP 0856604 B1
- WO 9941579 A
- EP 1064528 B1
- WO 200129304 A1
- US 20050210929 A1
- US 20050210930 A1
- US 20050210602 A1
- EP 1655404 A1
- GB 4210750 A
- EP 0531917 A1
- EP 0878574 B1
- EP 1275765 A1
- GB 1272400 A
- GB 1279057 A
- US 4411664 A
- GB 2271837 A
- EP 0091336 B1
- EP 0236857 B1
- EP 0294014 A1
- EP 0335790 B1
- EP 0732437 B2
- EP 704567 B1
- EP 0736625 B1
- US 20030101519 A1
- EP 1548169 A1
- US 20060185095 A1
- EP 1693498 A2
- US 20070124871 A1
- EP 1918447 A1
- EP 1921196 A2
- US 5117658 A
- EP 0281252 A
- US 4867792 A